(19) Europäisches Patentamt / European Patent Office / Office européen des brevets

(11) **EP 1 594 813 B1**

(12) **EUROPEAN PATENT SPECIFICATION**

(45) Date of publication and mention
of the grant of the patent:
**20.04.2016 Bulletin 2016/16**

(51) Int Cl.:
**C04B 28/14** (2006.01)    **C04B 24/38** (2006.01)
**E04C 2/04** (2006.01)

(21) Application number: **04704924.2**

(22) Date of filing: **23.01.2004**

(86) International application number:
**PCT/US2004/001957**

(87) International publication number:
**WO 2004/065319 (05.08.2004 Gazette 2004/32)**

(54) **INORGANIC COMPOSITE STRUCTURES ENHANCED BY ORGANIC COMPOUNDS**

DURCH ORGANISCHE VERBINDUNGEN VERBESSERTE ANORGANISCHE VERBUNDSTRUKTUR

STRUCTURES COMPOSITES INORGANIQUES RENFORCEES PAR DES COMPOSES ORGANIQUES

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **23.01.2003 US 442725 P**
**23.01.2003 US 351675**
**14.04.2003 US 463138 P**
**27.05.2003 US 446571**
**27.05.2003 US 446889**
**06.06.2003 US 476682 P**
**10.10.2003 US 510950 P**

(43) Date of publication of application:
**16.11.2005 Bulletin 2005/46**

(73) Proprietor: **Saint-Gobain Placo**
**92150 Suresnes (FR)**

(72) Inventors:
• **POLLOCK, Jacob, Freas**
  **Berkeley, CA 94703 (US)**
• **TAGGE, Christopher, D.**
  **San Carlos, CA 94070 (US)**
• **TORRES, Lennard**
  **Pleasanton, CA 94566 (US)**
• **SOANE, David, S.**
  **Chestnut Hill, MA 02467 (US)**

(74) Representative: **Naylor, Matthew John et al**
**Mewburn Ellis LLP**
**City Tower**
**40 Basinghall Street**
**London EC2V 5DE (GB)**

(56) References cited:
**EP-A- 0 327 351**        **WO-A-99/08978**
**US-A- 3 891 582**       **US-A- 5 336 318**
**US-A- 5 482 551**       **US-A1- 2001 001 218**
**US-B1- 6 228 163**     **US-B1- 6 342 284**
**US-B1- 6 406 535**

• **DOW CHEMICAL CO.: "Methocel Cellulose Ethers" TECHNICAL HANDBOOK, [Online] September 2002 (2002-09), XP002303423 Retrieved from the Internet: URL:http://www.dow.com/webapps/lit/litorder.asp?filepath=methocel/pdfs/noreg/192-010 62.pdf&pdf=true> [retrieved on 2004-11-01]**
• **CHEMICAL ABSTRACTS, vol. 116, no. 14, 6 April 1992 (1992-04-06), Columbus, Ohio, US; abstract no.: 135165s, A.ADYLKHODZHAEV ET AL.: XP000256224 & SU 1 669 904 A (TASHKENT IINZH ZHELEZNOD) 15 August 1991 (1991-08-15)**
• **DATABASE CA [Online] CHEMICAL ABSTRACTS SERVICE, COLUMBUS, OHIO, US; SATO, KENZO ET AL: "Prevention of degradation of concrete additives by glutaric dialdehyde" XP002314313 retrieved from STN Database accession no. 109:10863 & JP 63 030352 A2 (TOKYO FINE CHEMICAL CO., LTD., JAPAN) 9 February 1988 (1988-02-09)**

EP 1 594 813 B1

**Description**

FIELD OF THE INVENTION

The field of the invention is composite structures comprising an inorganic, discrete phase and an organic additive, such as molded items, free-standing structural supports, wallboard, including paper-covered wallboard, panels, underlayment, sheathing board, moisture resistant board, type-X board, insulation board, shaft liner, soffit board, backing board, core board, ceiling board, cement board, gypsum glass mat board and gypsum fiber board, and integrated structures, and methods of manufacture.

BACKGROUND OF THE INVENTION

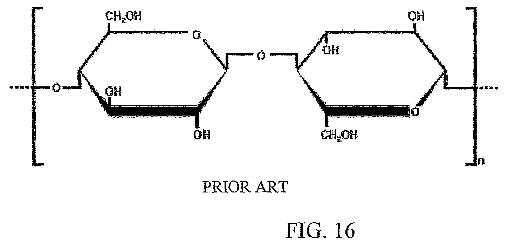

Cellulose is a polysaccharide composed of individual anhydroglucose units which are linked through a glycosidic bond (Figure 16). The number 'n' of anhydroglucose units in the polymer chain is defined as the degree of polymerisation. Typically, production of cellulose ethers (CE's) involves replacing some of the hydroxyl hydrogen groups of cellulose with a substituent group, for example a methyl group, an ethyl group, a carboxymethyl group, a hydroxyehthyl group, a hydroxypropyl group, or some combination thereof. For example, a hydroxyethyl methyl cellulose (HEMC) may be produced by replacing some of the groups of cellulose with hydroxyethyl groups and methyl groups. Likewise, a hydroxypropyl methyl cellulose (HPMC) may be produced with hydroxypropyl and methyl groups replacing some of the hydroxyl groups of the cellulose.

The number of substituted hydroxyl groups per anhydroglucose unit is expressed as the degree of substitution (DS). The DS can vary between 0 and 3. As with all polymer reactions, this reaction does not occur uniformly along the polymer chain. The reported degree of substitution is therefore a mean degree of substitution over the whole polymer chain. Alternatively, molar substitution (MS) may be used to report the number of moles of substituent groups, such as a hydroxypropyl or hydroxyethyl group, per mole of anhydroglucose. Often, manufacturers follow a convention whereby one of the substituents is reported by DS and the other by MS, where the substituent reported by MS may replace a hydroxyl group or may attach to another substituent to form a graft. The DS is not always reported, and the value reported is often inaccurate or given as a broad range, as shown in Table I.

In another alternative, the weight percent of substituents is reported. Weight percent of substituents may be directly related to DS and MS. For example, the following equations show the conversion for HPMC:

$$DS(OCH_3) = \frac{wt\%\ OCH_3}{31} * \frac{162}{100 - (wt\%\ OC_3H_6OH/1.29 + wt\%\ OCH_3 * 0.45)} \qquad EQ.\ 1$$

and

$$MS(OC_3H_6OH) = \frac{wt\%\ OC_3H_6OH}{75} * \frac{162}{100 - (wt\%\ OC_3H_6OH/1.29 + wt\%\ OCH_3 * 0.45)} \qquad EQ.\ 2.$$

Cellulose ethers are conventionally differentiated by type of substituent and the viscosity of an aqueous solution of the cellulose ether. For example methyl cellulose (MC), ethyl cellulose (EC), carboxymethyl cellulose (CMC), hydroxyethyl cellulose (HEC), ethyl hydroxyethyl cellulose (EHEC), ethyl hydroxypropyl cellulose (EHPC) and hydroxypropyl cellulose (HPC) are named for the type of substituent group used to replace the hydroxyl group in cellulose. The viscosity of an aqueous solution including a cellulose ether is an important characteristic for its typical use as a thickener; therefore, cellulose ethers are also differentiated by viscosity, which depends on the degree of polymerization (directly related to the measured molecular weight), and the type and degree of substitution of substituent groups. As the molecular weight increases, the viscosity of an aqueous solution of the cellulose ether increases also. However, the effect of the degree of substitution depends on the particular type of substituent group, which may also affect the viscosity of the cellulose ether.

Manufacturers characterize the effect of a particular cellulose ether on the viscosity by reporting the measured viscosity of a 2 wt% aqueous solution of the cellulose ether at 20 degrees centigrade. Herein, we refer to this 2 wt% viscosity as the viscosity grade of the particular cellulose ether. Typically, the viscosity grade is measured by one of two techniques: Brookfield and Ubbelohde. Often, the measured viscosity grade differs between the two techniques. For example, results using both techniques are shown in Table I for some cellulose ethers. Cellulose ethers, particularly low DS/MS cellulose ethers, may be insoluble in water at 20 degrees centigrade. The viscosity of water changes little with addition of 2 wt% of an insoluble, powdered additive; therefore, the viscosity of these insoluble cellulose ethers at 20 degrees centigrade is not representative of the effect of the change in viscosity after dissolution at a higher temperature. However, the molecular weight and the viscosity grade may be empirically related for a particular cellulose ether.

A modified cellulose, also referred to herein as a cellulose derivative, is used in plaster and joint compounds as a thickener (or to modify the rheology in some way) and to improve the workability of gypsum-based compounds. Commercial cellulose ethers for such purposes are selected for their solubility in water at room temperature (e.g. 20 degrees centigrade). Cellulose ethers have been known to improve some other properties, including the consistency, adhesion and water retention of gypsum-based joint compounds and tile adhesives. However, adhesion, water retention and thickening are considered detrimental in the production of some inorganic composite structures, such as gypsum-based wallboard. For example, wallboard is processed from a slurry that is continuously mixed and fed onto a belt. Thus, it is desirable for the slurry used to make wallboard to be more readily mixed and more quickly dried than a plaster, which is ordinarily formed or shaped by hand in a manual layering process. As a result, cellulose ethers are not selected for use in commercial wallboard manufacture.

US6406535-B discloses use of a cellulose ether as a bond reinforcing agent in a wallboard formed of dried shirasu (volcanic ash), gypsum, clay, colour pigment and fibres. US 5482551A discloses an extruded wall board including a cellulosic binder e.g. methyl hydroxyethyl cellulose, HPR or HEC. US 6342284B discloses a material to join gypsum wallboards, the material comprising a cellulosic thickener (e.g. EHEC, hydroxypropyl methyl cellulose, methyl hydroxypropyl cellulose or HEC) in a range of 0.1 - 2 wt%.

Calcined gypsum powder (calcium sulfate hemihydrate and/or calcium sulfate anhydrite) is usually mixed with water and a variety of additives, which are used for nucleating the growth of gypsum crystals, as anti-fungal agents, light weight fillers or reinforcing fibers. Dissolution of the calcined gypsum powder in the water and a resulting hydration reaction causes crystallization of gypsum crystals (calcium sulfate dihydrate) forming a core of interlocking gypsum crystals. Application of multi-ply face sheets is usually integrated with the formation of the core into a wallboard. This is often followed by mild heating to drive off the remaining free (unreacted) water to yield a dry product, having face sheets adhered to gypsum core. Similarly, cement, such as Portland cement, may be made of a calcium sulfate that is hydrated to form hydraulic cement, which is widely used in concrete, and may be easily formed into many shapes.

Tensile and shear strength of conventional, gypsum-based wallboard is related primarily to the strength of the facing paper, typically an oriented fiber, multi-ply facing paper that is applied to the gypsum-based slurry during a continuous forming process. For a ½ inch wallboard with a density of about 0.6 g/cc, approximately one-half of the nail pull resistance and two-thirds of the flexural strength are supplied by the paper face sheets, which also account for 40% of the manufacturing costs. The core is usually exceptionally poor at handling tensile loads of any kind

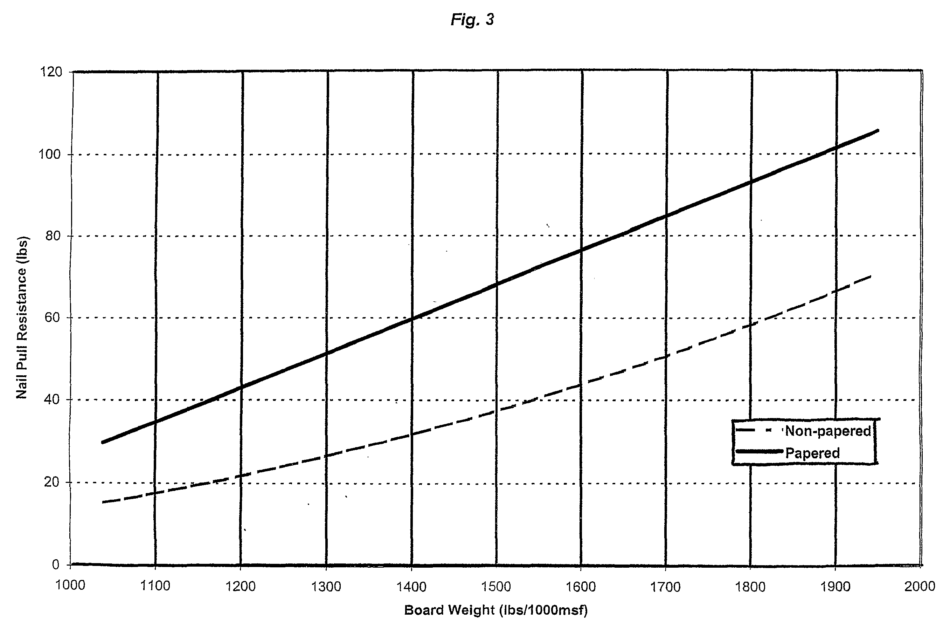

Even compressive loads are limited for lower density wallboards without face sheets. Adding porosity and/or a low-density, expanded filler (e.g. perlite) into the conventional material reduces the core density. However, the strength of gypsum sheets decreases dramatically with density. For example, a dramatic decrease of the nail-pull resistance with density of ½-inch gypsum wallboard, both papered and non-papered, can be seen in Fig. 3.

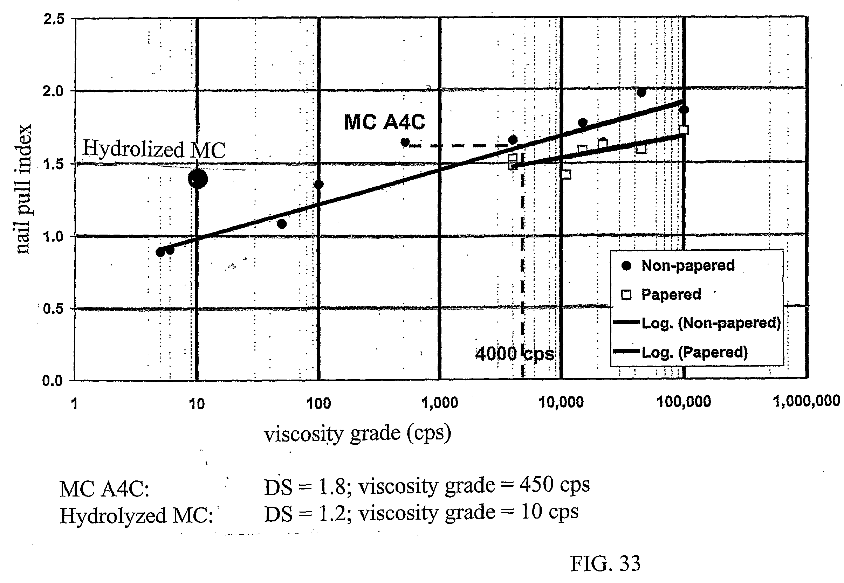

Fibers have been incorporated into gypsum-based wallboard and structural materials. Unfortunately, fibers in wallboard do not contribute to improved nail pull resistance at conventional levels of addition, as shown in Fig. 33.

Sizing of fibers is a process that is well known in the textile industry and is used to prepare fibers for processing into fabrics, yarns and weaves, as described in co-pending application entitled "Construction Materials Containing Surface Modified Fibers" to Tagge et al., filed May 27, 2003, which is incorporated by reference herein in its entirety.

Several unique challenges have thus far restricted the commercialization of inorganic composite strucutures including cellulose ethers as an additive. For example, the nail pull resistance may be decreased by the addition of some cellulose ethers or an increase in nail pull resistance may require concentrations of polymers greater than 5 wt%, which can lead to problems such as inflammability, reduced extinguishability, commercially unacceptable cost of the wallboard, and mold susceptibility. Furthermore, addition of cellulose ethers increases the slurry viscosity to unacceptable levels, which interferes with the mixing and forming of composite structures. Therefore, there is a longstanding and unresolved need for an additive that can increase both the nail pull resistance and the flexural strength of wallboard core, allowing the core density to be reduced, without adversely affecting other properties of the gypsum-based product.

## SUMMARY OF THE INVENTION

The present invention provides a composite structure as defined in claim 1 herein. The composite structure is produced using water, an inorganic material and an additive, which are mixed together, reacted and formed into the composite structure. Upon mixing with the water, the inorganic material, which is calcium sulfate hemihydrate and/or calcium sulphate anhydrite, may dissolve or may partially dissolve in the water and hydrates, over time, forming an inorganic, discrete phase. Preferably, $\beta$-calcium sulfate hemihydrate is used; however, $\alpha$-calcium sulfate hemihydrate may be used, if the addition of water is adjusted to account for the changes in dissolution and porosity of these other materials or crystalline forms. The additive is a cellulose ether as defined in claim 1 herein.

Preferably, the weight percent of cellulose ether to calcium sulfate hemihydrate is selected to be no greater than 5 wt%, more preferably no greater than 3 wt%, whereby the cellulose ether has a negligible effect on the inflamability and extinguishability of the wallboard. Even more preferably, the weight percent is no greater than 0.5 wt%, whereby the composite structure is substantially strengthened at a low cost. By "substantially strengthened," it is meant that the structural core of a composite strucuture containing an additive has an increase in nail pull resistance, flexural strength or modulus of rupture that is at least 30% greater than the equivalent (e.g. same fabrication process is used and compared at the same composite density) core prepared without the additive. An increase of about 30% is believed to be commercially significant, providing an advantage to other ways of strengthening a gypsum-based composite structure that cost more, as well as competing favorably with other composite systems.

In wallboard samples in which a paper layer or layers is applied, the wallboard core contributes about 25-33% of the overall strength. Thus, in comparing papered wallboard samples, "substantially strengthened" is taken to mean at least a 10% improvement in nail pull, flexural strength or modulus of rupture compared to the equivalent papered wallboard prepared with the same paper layer or paper layers but without the additive. Likewise, enhanced fiberboard core is compared to unenhanced fiberboard core (e.g. without the use of sizing on the fibers or an additive in the fiberboard core) to determine if the fiberboard is "substantially strengthened" by the additive or sizing.

By a "slurry," it is meant that the mixture of dry ingredients and water forms a homogeneous fluid, dissolving at least a portion of the calcium sulfate hemihydrate in the water. For example, the slurry is a thixotropic fluid. The amount of water required depends, for example, on the amount and type of calcium sulfate hemihydrate, e.g. $\alpha$ or $\beta$, the amount of additive and other dry ingredients, as well as the temperature and the type of additive or additives included in the slurry. The amount of water used in the slurry significantly alters the microstructure of the gypsum-base composite structure, for example, by affecting the amount of porosity, the extent of dissolution of the calcium sulfate hemihydrate, the rate of hydration and the morphology of the gypsum crystals. The microstructure affects the properties of the wallboard, such as the nail pull resistance and flexural strength.

It should be understood that reported and measured viscosity grade varies considerably. Viscosity grade varies, for example, based on the use of different measurement techniques. For example, selection of the shear rate and spindle size used for measuring viscosity grade impacts the measured value. A variation of as much as 30% from the viscosity grade reported by manufacturers is to be expected at low viscosity grades, e.g. less than 100 cps. Viscosity grades greater than about 1000 cps show an even greater variation in the viscosity grade from that actually measured and the viscosity grade reported by the manufacturer. Thus, any limits in viscosity grade stated herein should be understood as approximate values within these expected variations. Also, measuring the viscosity grade of a cellulose ether assumes that the cellulose ether dissolves in water at 20 degrees centigrade. If the cellulose is insoluble in water at 20 degrees centigrade, then the addition of a particulate form of cellulose ether at an amount of only 2 wt% has little effect on the viscosity of the water. However, if the temperature of the water is changed such that the cellulose ether becomes soluble, then the viscosity of the mixture may increase rapidly.

It should be understood that the mean value of the molecular weight for a specific type of commercial cellulose ether with a specific degree of substitution may vary, for example, between batches. Variations between batches allow for significant commercial variances in the mean and standard deviation from the mean of the molecular weight of a particular cellulose ether. Typically, the mean molecular weight may vary by as much as 20% from the manufacturer's specification. Also, the standard deviation of the molecular weight within a batch depends, for example, on manufacturing tolerances, the process chosen to manufacture a particular cellulose ether, and the variations already present in the raw cellulose prior to substitution. Thus, any limits for MW expressed herein should be considered approximate values within the expected variations.

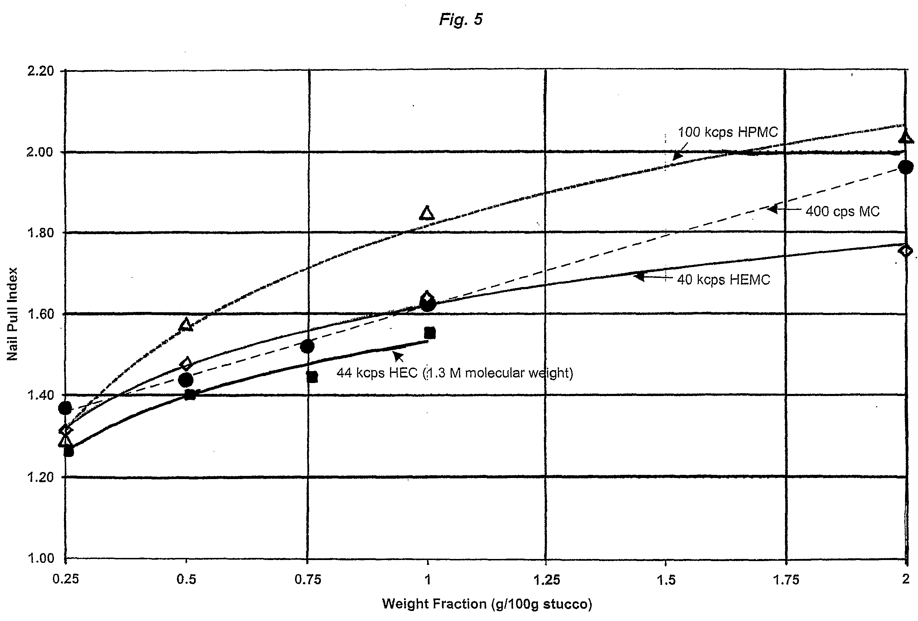

A nail pull index and flexural strength index are presented herein that normalize the measurements of nail pull resistance and flexural strength for wallboard and ceiling board specimens having a spectrum of board weights by comparing the strength measurements to the strength of specimens prepared without a strengthening additive at the same wallboard weight and thickness, but with all other factors such as stucco purity, other additions, forming process and testing conditions constant. For example, the nail pull resistance versus board weight without a strengthening additive is shown in Fig. 3 for specimens with and without paper. Thus, the nail pull index, as shown in Fig. 5 for some embodiments, is a comparative measure of the nail pull resistance of a reinforced specimen to a conventional specimen at the same density (board weight), and a nail pull index of 1.0 means that a reinforced wallboard specimen has the same nail pull resistance as a specimen of the same density that is prepared without a strengthening additive.

Preferably, sizing solutions for coating particles and fibers that are used in the composite structure have a solids content and low viscosity allowing for easier processing than lower solids content or higher viscosity solutions. For example, a higher solids content may produce a greater fiber add in one pass than a lower solids content. Cellulose ether (CE) exhibits a high viscosity even at very low concentration in aqueous solutions, which severely limits the usefulness of a cellulose ether as a sizing for fibers.

One approach to obtain sufficient add-on with CE is to use a heated dispersion at a temperature above the solubility limit of the CE. By avoiding or limiting dissolution of the CE, viscosity is reduced. However, the dispersion gels upon cooling. Thus, passing a chilled fiber through a heated dispersion facilitates add-on, for example.

If the dispersion is allowed to cool, then the CE hydrates, causing rapid gelation and a concomittant increase in viscosity. Furthermore, hydration of the cellulose particles is irreversible. Thus, the entire batch must be maintained above the clear range. Therefore, this approach is only practical for a CE having a comparatively low dissolution temperature (e.g. a clear range temperature no greater than five degrees C above room temperature or less).

It is possible to use a solvent other than water. For example, a cellulose ether may exhibit low solubility in alcohol. Thus, a dispersion of CE in alcohol allows the preparation of high solids content with low viscosity that are stable at room temperature, for example. However, the sizing deposited from dispersion of alcohol and CE is incoherent and weak, because much of the CE remains in the dispersion as discrete particles. Thus, in the absence of water, the sizing does not form a film on the fiber or particle to be sized. A method of incorporating a CE-based sizing on a fiber using a low viscosity sizing solution, providing good add-on, is a longstanding and unresolved need.

In one example, a bio-active additive is included in the composite structure, such as an anti-fungal agent. For example, quaternized poly(vinylpyridine) and gluturaldehyde are anti-fungal agents. In one embodiment gluturaldehyde is added to the cementitious slurry prior to forming a structural or finishing material, for example, as a surface coating on cellulose ethers. Another embodiment applies a bio-active additive to the surface of reinforcing fibers, such as quaternized poly(vinylpyridine). In yet another embodiment a bio-active additive is applied to a surface layer, for example a surface of a backing or facing layer. In another example, the bio-active additive is applied to a glass mat before the glass mat is added to a structural or finishing material. In a preferred embodiment, the bio-active additive is a functional group in a polymer system that increases the interaction between a reinforcing additive, such as fibrous or particulate reinforcements, and the matrix of a cementitious building material.

In one example particulate or fibrous materials are chemically treated to provide mold-resistance, water repellency or anti-staining. The treatment is achieved using a solution and/or emulsion of functionally designed polymers that bond around or to the fiber surface upon drying and/or curing. A monomer, a functional group and/or a crosslinking agent of the formulation adhere to the fibrous surface, for example by reacting directly with the fibrous surface or with another component of the composition that itself adheres to the fiber surface. Herein mold resistance includes both bio-active measures that destroy mold or fungi and passive measures that merely inhibit mold growth. Preferably, the coating is bio-active, such as gluturaldehyde and/or quaternized poly(vinylpyridine). For example, the treatment modifies the particulate or fibrous surface with functional monomer or polymer appendages or a fine, insoluble coating. In one preferred embodiment, hydrophobic and hydrophilic groups are located in or attached to polymer chains or co-polymers in the formulation.

One advantage is that the surface treatment may be durable and permanently bound to the particulate or fibrous surface and not dissolve in water, preventing migration or leaching of the bio-active component or passive inhibitor. Also, in one embodiment, the fibers may be treated prior to weaving of a textile, eliminating the need for a separate step of sizing the fibers prior to spinning and/or weaving textiles.

Another advantage is that the treatment may be applied to many materials, including paper, woven and non-woven glass mat, and natural and synthetic textiles, as well as a variety of particulate and fibrous materials.

Yet another advantage is that the treatment may provide an interface layer between the fibrous surfaces and the matrix that transfers tensile loads from the matrix to the fibrous reinforcements. Optionally, the interface layer interacts strongly with cement matrices and increases the pullout or peel strength of the fibrous material.

BRIEF DESCRIPTION OF THE DRAWINGS

Fig. 1 shows the improvement in nail pull resistance of several embodiments of the present invention at a concentration of 1g of additive / 100 g $\beta$-calcium sulfate hemihydrate.

Fig. 2 shows the improvement in flexural strength of the same embodiments as shown in Fig. 1.

Fig. 3 shows the nail pull resistance versus board weight of wallboard specimens prepared without a cellulose ether additive.

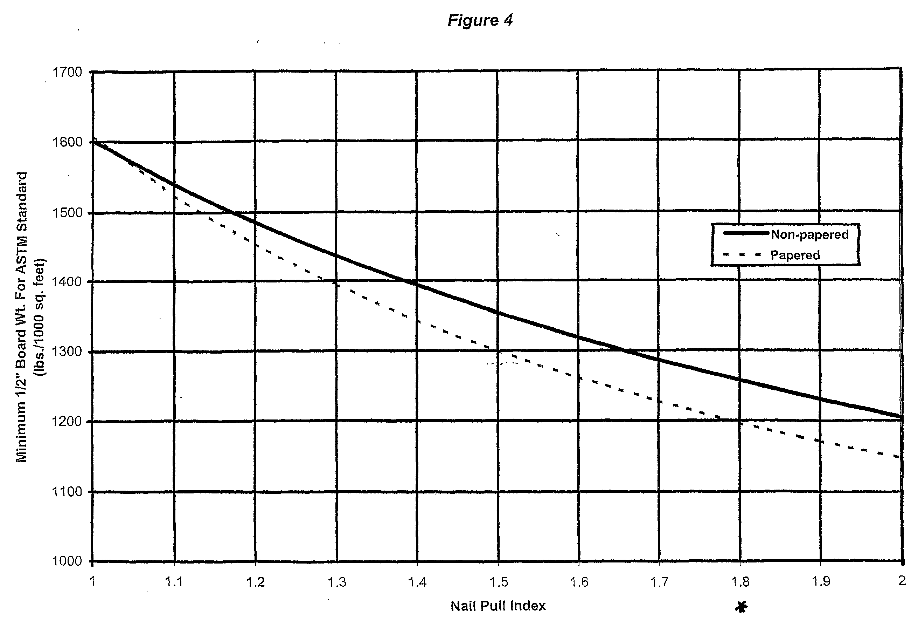

Fig. 4 shows a minimum board weight to satisfy ASTM Standard C473-95 for a ½ inch thick wallboard versus nail pull index for papered and non-papered wallboard.

Fig. 5 shows the nail pull index versus weight fraction for several embodiments of the present invention.

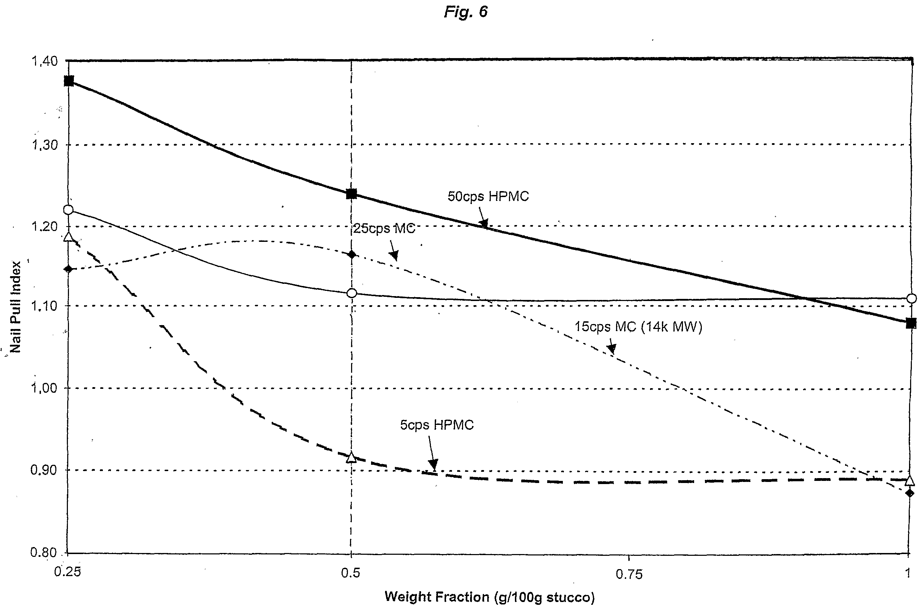

Fig. 6 shows the nail pull index versus weight fraction for several low viscosity cellulose ethers.

Fig. 7 shows the nail pull index versus viscosity grade for HPMC at a weight fraction of 1g of HPMC per 100 g β-calcium sulfate hemihydrate with and without a paper backing.

Fig. 8 shows the minimum board weight versus viscosity grade for HPMC at a weight fraction of 1g of HPMC per 100 g β-calcium sulfate hemihydrate with and without a paper backing.

Fig. 9 shows the nail pull index versus patty diameter (an indicator of the viscosity that decreases with increasing viscosity) for HPMC.

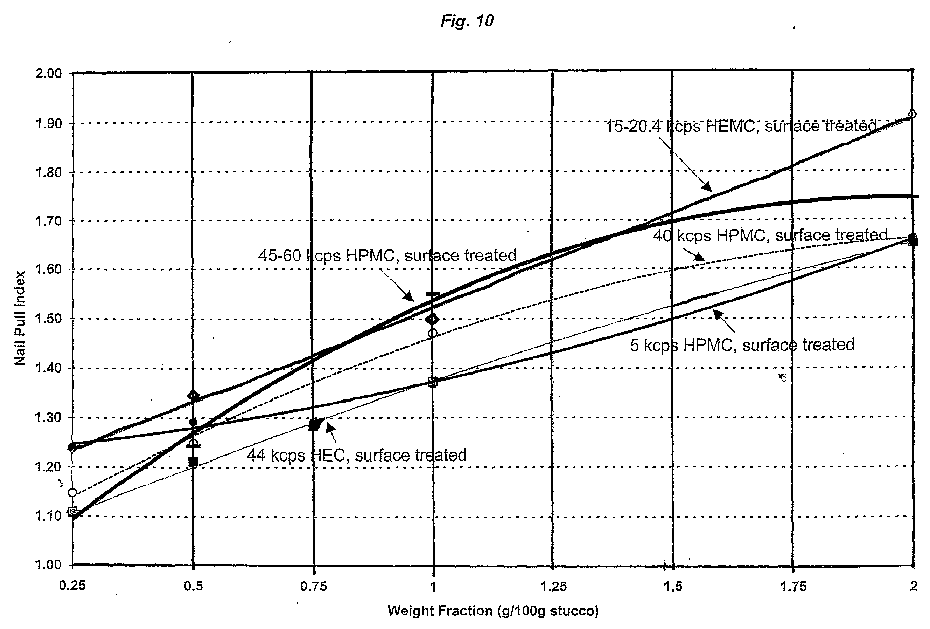

Fig. 10 shows the nail pull index versus weight fraction for several embodiments of the present invention having treated surfaces to delay dissolution.

Fig. 11 shows the nail pull index versus weight fraction for four alternative embodiments comprising a paperless wallboard and a HPMC strengthening additive.

Fig. 12 shows the flexural strength index versus weight fraction for the same four embodiments as shown in Fig. 11.

Fig. 13 shows the nail pull index versus weight fraction for two alternative embodiments of a HEC reinforced wallboard or ceiling board.

Fig. 14 shows the data and a correlation for the nail pull index versus viscosity grade for another embodiment comprising a paperless MC-reinforced wallboard.

Fig. 15 shows the data and a correlation for the nail pull index versus viscosity grade for another embodiment comprising a paperless HPMC-reinforced wallboard.

Fig. 16 shows the chemical formula for cellulose.

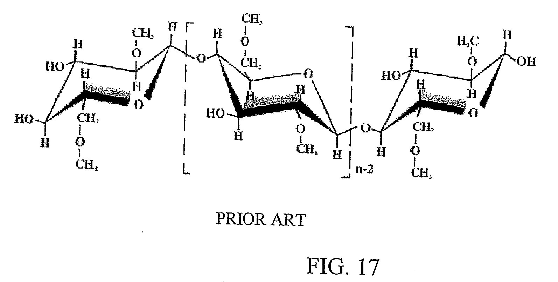

Fig. 17 shows the chemical formula of a methyl cellulose.

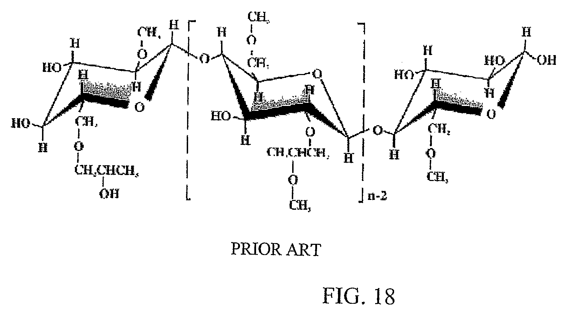

Fig. 18 shows the chemical formula of a hydroxypropyl methyl cellulose.

Figs. 19A-20D, based on a correlation with data, show graphically the calculated effect of percent substitution of methyl groups in methyl cellulose on the nail pull index and flexural strength index for various viscosity grades and weight percent additions of methyl cellulose.

Figs. 21-24B show graphs of nail pull index versus hydroxypropyl wt% substitution at three levels of methyl substitution and for six different HPMC viscosity grades for a 1 wt% addition of HPMC to β-calcium sulfate hemihydrate.

Figs. 25A-27F show graphs of nail pull index versus percent hydroxypropyl (HP) substitution with varying levels of HPMC addition, viscosity grade, and percent substitution of methyl groups.

Fig. 28 shows the load-displacement curve of another embodiment.

Fig. 29 shows the paperless nail pull index versus viscosity grade for an HPMC having substitution of 30 wt% methyl and 5 wt% hydroxypropyl groups for four different amounts of HPMC addition to β-calcium sulfate hemihydrate from 0.25 wt% to 2.0 wt%, as calculated using a correlation to experimental data.

Fig. 30 shows one embodiment of a frame for use in surface modification of fibers.

Fig. 31A illustrates the clear start, clear stop upon cooling typical of conventional cellulose ethers exhibiting inverse solubility, and the cloud start, cloud stop upon heating for the same cellulose ethers.

Fig. 31B illustrates the clear start, clear stop upon heating and the cloud start, cloud stop upon cooling for cellulose ethers that have a DS and/or MS selected such that the cellulose ether is insoluble in cold water and is soluble at a higher temperature range.

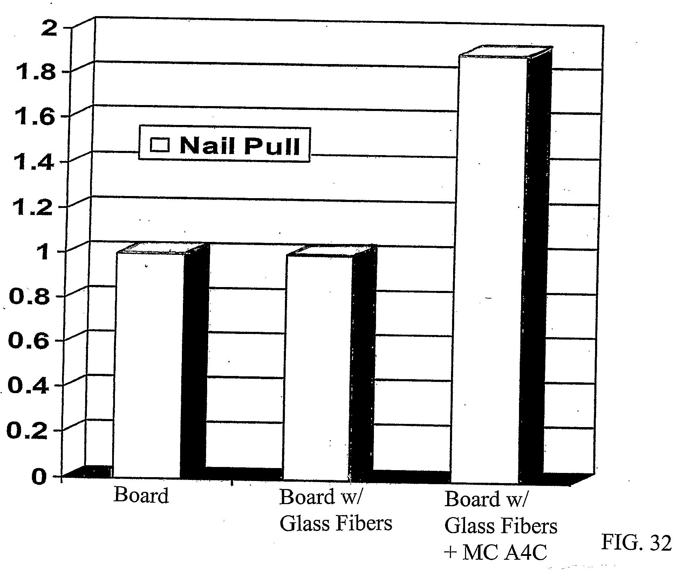

Fig. 32 shows a graph of results of nail pull resistance measurements for conventional board, fiberboard and a composite fiberboard that achieves results greater than using either fibers or an MC A4C additive alone.

Fig. 33 shows a graph of nail pull resistance versus viscosity grade, comparing results for methyl cellulose additives MC 4AC and Hydrolized MC.

Fig. 34 shows a graph of pullout strength improvement versus sizing add-on for various sizing compositions.

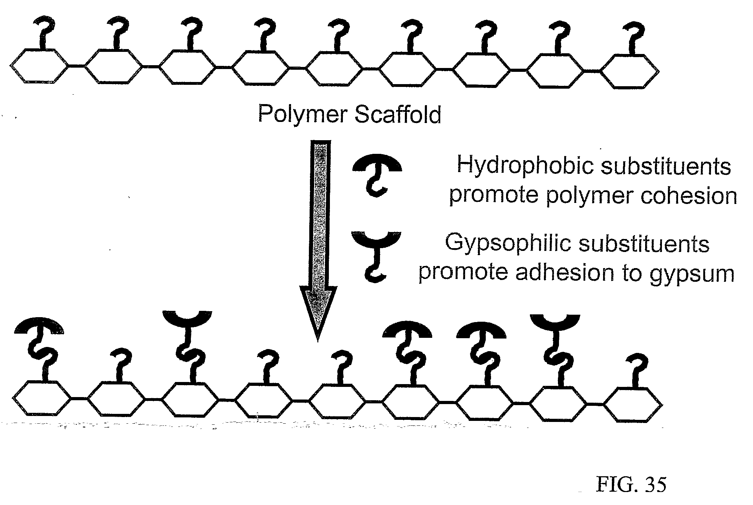

Fig. 35 conceptually illustrates how a cellulose ether derivative works as a polymer scaffold with amphiphilic properties having both hydrophobic functional groups promoting additive cohesion and gypsophilic functional groups promoting adhesion to gypsum crystals.

Fig. 36 shows a sketch of one embodiment of the invention having textile strands coated with a bio-active additive.

Fig. 37 shows a sketch of strands of a conventional textile of the prior art after the sizing is removed.

Fig. 38A shows a sketch of the embodiment of Fig. 36 after exposure to mold in an environment conducive to mold growth.

Fig. 38B shows a sketch of the conventional textile of Fig. 37 after exposure to mold in an environment conducive to mold growth.

## DETAILED DESCRIPTION OF THE PREFERRED EMBODIMENTS

A gypsum-based composite structure is prepared using a mixture of a calcium sulfate hemihydrate, a reinforcing additive and water. For example, the calcium sulfate hemihydrate comprises one of a $\beta$-calcium sulfate hemihydrate, and $\alpha$-calcium sulfate hemihydrate and a combination thereof. In one embodiment, the calcium sulfate hemihydrate is produced by calcining gypsum, for example. The reinforcing additive is a cellulose ether that is dispersable in water and may be produced and used in various forms, such as aqueous solutions, granules and powders. For example, cellulose ethers may be used with a wide variety of substituent groups, including HPC, HEC, MC, HPMC, EHEC, EHPC and HEMC. Preferably, the cellulose ether contains either a methyl group, an hydroxypropyl group, an hydroxyethyl group or a combination of these groups.

In one alternative embodiment, the cellulose ether comprises at least one hydroxybutyl substitution.

The increased nail pull resistance and flexural strength imparted to gypsum-based composite structures by the embodiments of the present invention offers new uses and markets for this inexpensive cementitious material. For example, a free standing poured structure may be molded that has exceptional strength and stiffness. In another example, a mold resistant wallboard can be fabricated with or without face sheets. The heavy, fiber-laden face sheets of conventional wallboard tend to feed mold growth. However, one embodiment of the present invention prevents mold growth.

Also, cellulose ethers do not tend to feed mold growth when added to the wallboard core in amounts less than 5 wt%, as shown by mold resistance tests. For example, specimen maintained at 32degrees centigrade in an incubator with 90% humidity and in the presence of mold spores showed no mold growth after 24 days. In an alternative embodiment, a skim layer added to at least one surface provides even greater mold resistance or a treated surface is added that improves water repellency and/or the antimicrobial and antifungal properties of the composite structure. There is a longstanding and unresolved need for low cost gypsum-based structures having such mold resistance.

In another example, a lightweight wallboard with a conventional multi-ply facing sheet or sheets, may be fabricated by reducing the density of the wallboard core without sacrificing the nail pull resistance of the wallboard. For example, the density may be reduced below 0.75 g/cc using a lightweight filler or by introducing porosity into the core in the form of voids or air bubbles while maintaining the flexural strength and nail pull resistance of the wallboard.

Addition of an excess amount of water to the slurry, over and above the stoichiometric amount of water needed to hydrate the powdered dry ingredients, reduces the density of the wallboard core. It is believed, without being limiting in any way, that the excess water originally fill voids in the wallboard core, and after drying, the voids remain as porosity in the wallboard core. A general, empirical correlation has been found for predicting the wallboard density in g/cc (p) with the water to powdered dry ingredient ratio (W:P), if foaming is limited by using comparatively low mixing speeds: $p = 0.8324(W:P)^{-0.7629}$. The addition of foaming, whether by rapid stirring or addition of a foaming agent, may further reduce the density by introducing porosity into the wallboard core in addition to the amount introduced by the excess water.

By adding additional water to the slurry, viscosity of the slurry is reduced. Thus, a slurry containing substantially no clay may be extruded in a continuous extrusion process, forming a gypsum-base composite structure. By "substantially" no clay, it is meant that no clay is added to the dry ingredients as a rheology modifier. Of course, clay may be present as an impurity in the dry ingredients or the water at a level that does not significantly affect the rheology of the extrusion process.

One method of producing gypsum-based composite structures mixes dry ingredients comprising calcium sulfate hemihydrate powder and a powdered additive selected from cellulose ethers other than CMC. Alternatively, the cellulose ether may be selected to be soluble in water at a higher temperature range (greater than 20°C), such as greater than 30 degrees centigrade, allowing dissolution to be delayed by maintaining a processing temperature less than the dissolution temperature range until mixing or forming of the composite structure is completed. An hydroxypropyl molecular substitution of less than 4 wt% or greater than 8 wt% also shows a dramatic improvement in the ability of HPMC to stregthen an inorganic, discrete phase, for example. Other ingredients, including reinforcements, antifungal agents, fire retardants and sag reducers, may also be added to the gypsum-based structure. In one alternative embodiment, a cellulose ether is added in an amount less than 1 wt% to calcium sulfate hemihydrate, and the preferred methyl degree of substitution is greater than 1.8.

Surprisingly, selection of the degree of substitution (DS) of one or more of the substitutional groups may result in a substantial increase in flexural strength and nail pull resistance. For maximizing strength, HPMC or HEMC is more preferable than methyl cellulose. For example, a molecular weight OF HPMC of 1 million cps achieves exceptional improvements in both nail pull resistance and flexural strength when the HPMC is added as part of a gypsum-based composite panel. The selection of the degree of substitution of both the methyl groups and the hydroxypropyl or hydroxyethyl groups may substantially increase the strength of the composite structure, compared to non-optimized, commercially available HPMC and HEMC. This is a surprising and unexpected result, which has not been known previously.

In one example, an amount of water is selected to form a slurry with the dry ingredients that results in a finished wallboard core density of 0.75 g/cc after extrusion, setting and drying in an oven at 45 °C. In other embodiments, many other additives, including other cellulose ethers may be added to tailor the properties of the wallboard core without diminishing the nail pull resistance and strength of the wallboard core.

In one embodiment, these dry ingredients are well mixed to thoroughly disperse the additive throughout a calcium sulfate hemihydrate powder. Then, the dry ingredients are added to and mixed with water, poured into a form, formed into a sheet, allowed to set, dried and trimmed. The amount of water is selected in excess of the amount needed for extrusion and the stoichiometric amount needed to form gypsum from the calcium sulfate hemihydrate and water. Preferably, the amount of water is selected to produce a wallboard core with a density less than 0.8 g/cc, more preferably less than 0.75 g/cc, even more preferably in a range from 0.45 g/cc to 0.7 g/cc for lightweight wallboard.

As one alternative embodiment, a foam may be added to the slurry, to reduce the density to a preferred range for a specific application. For example, a foaming agent, such as a surfactant or chemically active foaming agent, may be added in the water and/or the slurry to create a foam during stirring of the water and/or slurry. Adding a foam may result in a shorter drying time and/or a more preferable distribution of the porosity than a process that would produce a wallboard with an equivalent density by merely increasing the amount of water. Alternatively, a low density filler may be added, such as expanded polystyrene or perlite.

The process may be a continuous process, whereby the dry ingredients are mixed, added to the water, blended into a slurry and the slurry is extruded onto a moving surface to form the wallboard core. Alternatively, a form may both contain the slurry and form the edges of the wallboard. Optionally, one or more rolls or restrictions spread and flatten the free surface of the slurry, whereby an elongated sheet is formed. In one embodiment, the elongated sheet is a continuous wallboard core supported on at least one side. Following forming of the continuous wallboard core, the end of the elongated sheet of slurry, after being allowed to set at least partially, is cut into lengths from the rest of the elongated, continuous sheet. Then, the wallboard is trimmed if necessary and dried. Alternatively, one or more facing sheets may be added during the process on one or both sides of the wallboard core. Alternatively, a facing sheet is added after the wallboard is formed into sheets, such as by gluing or spraying a surface layer.

Another method of producing the wall board mixes a strengthening additive with the water before mixing with a powdered calcium sulfate hemihydrate. In this method, the additive, whether dry, paste, gel or liquid, is at least partially dissolved in the water. Then, the dry ingredients, including the calcium sulfate hemihydrate and optionally other dry additives, are added to and mixed with the aqueous solution to form a slurry or paste. The slurry or paste is then formed into a gypsum-based structure.

In another example, one or more paper layers may be adhered to one or more sides of a wallboard core as facing sheets, for example, for decorative purposes and/or to impart improved strength. The paper may have fibers, which may be oriented to strengthen the wallboard in a preferred direction. Alternatively, no paper layers may be added or a non-paper layer maybe adhered to one or both sides of the wallboard core. In yet another alternative, a second additive may be included in the dry ingredients that segregates to one or both surfaces of the wallboard, forming an *in situ* surface layer on the wallboard. In yet another embodiment, reinforcing particulates or fibers may be added, for example, throughout the core or on a surface of the core.

In one embodiment, the cellulose ether additive is of HPMC and/or HEMC. For example, as viscosity grade of HPMC decreases from one million cps to 10 cps, the nail pull index generally decreases. Thus, it is preferable to use a high viscosity grade for an increased nail pull index. In one embodiment, a water reducer, such as a lignin sulfonate or napthalene sulfonate condensate, is added to control the slurry viscosity and excess water content.

The percent substitution of specific cellulose ethers, which were used as reinforcing additives, were analyzed in accordance with standard test method ASTM D 3876. ASTM D 3876 determines methoxyl (methyl) and hydroxypropyl (HP) substitution in cellulose ether products by gas chromatograph. The resolved substitution percentages of the various cellulose ethers, along with the measured viscosity grades, were compared to the mechanical testing results to determine the effect of the degree of substitution on flexural strength and nail pull resistance. Based on these empirical measurements, correlations were developed that relate the nail pull index and the flexural strength index to cellulose ether substitution pattern. The following regression models established the best correlation:

HPMC Nail Pull Index (NPI):

$$NPI = A_1 f^{X1} [(\log \gamma)^{X2} + A_2 M^{X3} + A_3 H^{X4}] + A_4 f^{X5} M^{X6} H^{X7} (\log \gamma)^{X8} + A_5$$

MC Nail Pull Index (NFI):

$$NPI = B_1 f^{Y1} + B_2 f^{Y2} (\log \gamma)^{Y3} + B_3 f^{Y4} M^{Y5} (\log \gamma)^{Y6} + B_4$$

MC Flexural Strength Index (TPBI)

$$MC\ TPBI = C_1 f^{Z1} + C_2 f^{Z2} (\log \gamma)^{Z3} + C_3 f^{Z4} M^{Z5} + C_4 f^{Z6} M^{Z7} (\log \gamma)^{Z8} + C_5$$

wherein:

$\gamma$ = cellulose ether viscosity grade (cps) (2% Ubbelohde)
M = cellulose ether methoxyl percent substitution
H = cellulose ether hydroxypropyl percent substitution
f = cellulose ether wt% (g / 100g stucco)
wherein $A_i$, $B_i$, $C_i$, $X_i$, $Y_i$, and $Z_i$ are defined in Table 2.

These empirical correlations are useful in defining the effect of each of the weight percentage of cellulose ether (f), the degree or percent of substitution of the methyl (M) and hydroxypropyl (H) groups, and the viscosity grade ($\gamma$) on the nail pull index and flexural strength index of wallboard core reinforced by MC and HPMC. Additional analysis shows that HEMC behaves similarly to the correlation for HPMC.

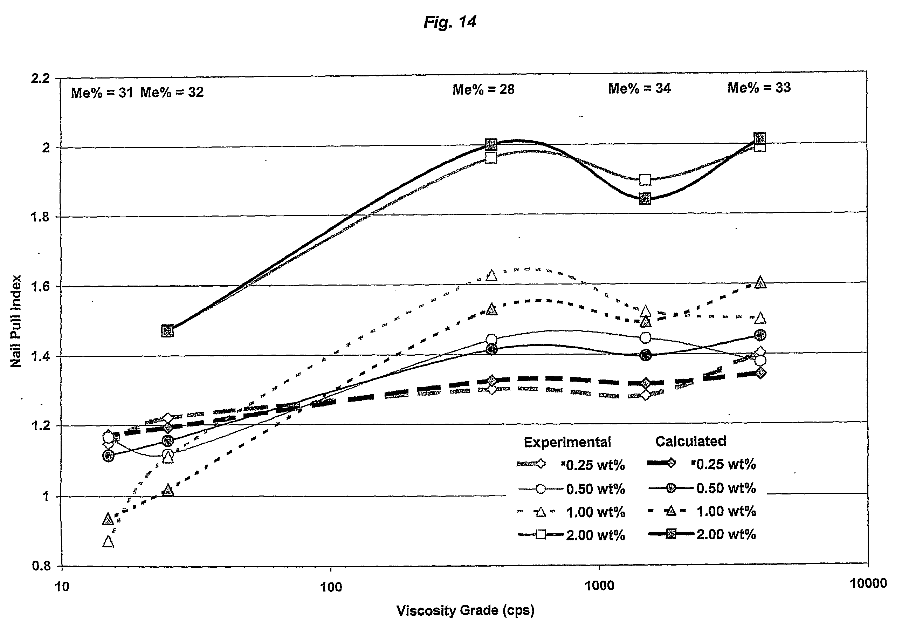

There is a correlation of the amount of cellulose ether additive in the wallboard core and the nail pull index and flexural strength index. The nail pull resistance and strength increases with increasing weight percent of additive, e.g. when more MC and/or HPMC is added to the slurry. There is also a correlation with viscosity grade. Surprisingly, the data shows that increasing viscosity grade increases the nail pull index and flexural strength index for HPMC and MC, which was not reflected in the literature or in some of the raw data, for example, as shown in Fig. 14 for MC. The viscosity grade tends to increase with the molecular weight; therefore, increasing molecular weight also tends to increase nail pull index and flexural strength.

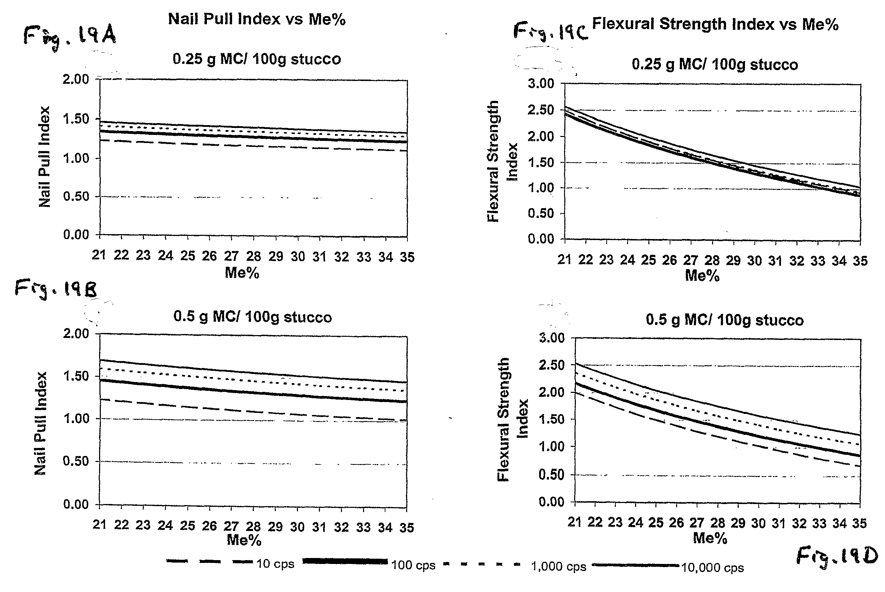

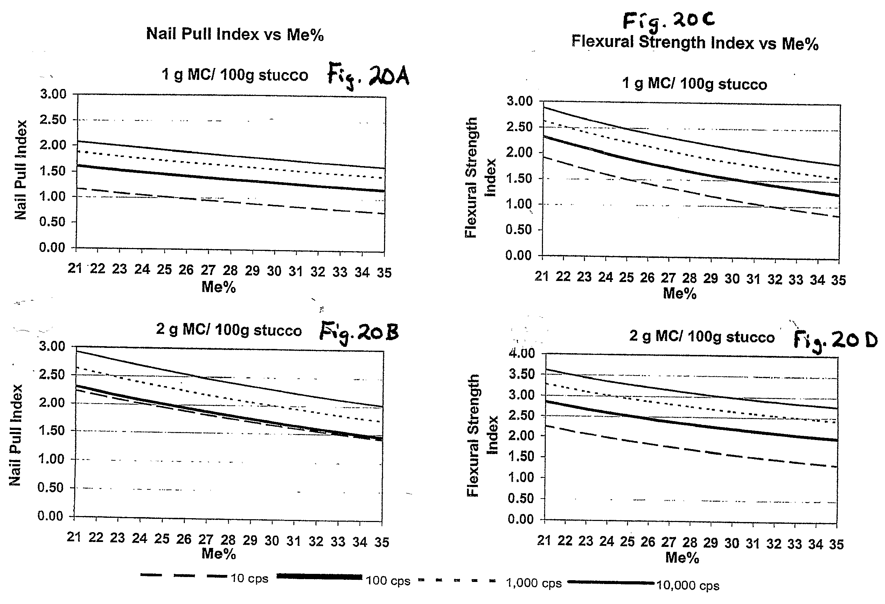

There is a very surprising and unexpected correlation with the percent substitution of particular substitutional groups. For methyl cellulose, the nail pull index increases with decreasing degree of substitution (DS), as shown in Figs. 19 and 20, for example. This unexpected and surprisingly strong correlation is sufficient to explain the dramatic inflection in the nail pull index versus viscosity grade curve shown in Fig. 14, for example. In Fig. 14, the commercially available MC had a percent substitution of methyl groups of 34% compared to 28% methyl substitution for the MC used in the adjacent data point with lower viscosity grade. This has gone unnoticed by others, and, as a result, commercial MC has a comparatively high degrees of substitution. This may have discouraged others from adding methyl cellulose to wallboard as a strengthening additive.

Manufacturers seldom openly report the DS for commercial cellulose ethers. If reported, it is often highly inaccurate. Thus, to perform this analysis, it was necessary to independently measure the percent substitution by gas chromatography. Otherwise, the correct correlation was not discernable for methyl cellulose (MC), hydroxypropyl methyl cellulose (HPMC), and hydroxyethyl methyl cellulose (HEMC). In the range of weight percent addition of reinforcing additive most practical for wallboard, e.g. less than 5 wt% or more preferably less than 3 wt%, even modest increases in the DS of methyl cellulose substantially decrease the measured flexural strength index of wallboard compared to structures using a lower DS, as shown in Figs. 19 and 20. Also, at even lower weight percent addition of additive, e.g. less than 1 wt% of HPMC, the effect of viscosity grade tends to diminish compared to the effect of degree of substitution, increasing the importance of selecting an appropriate degree of substitution.

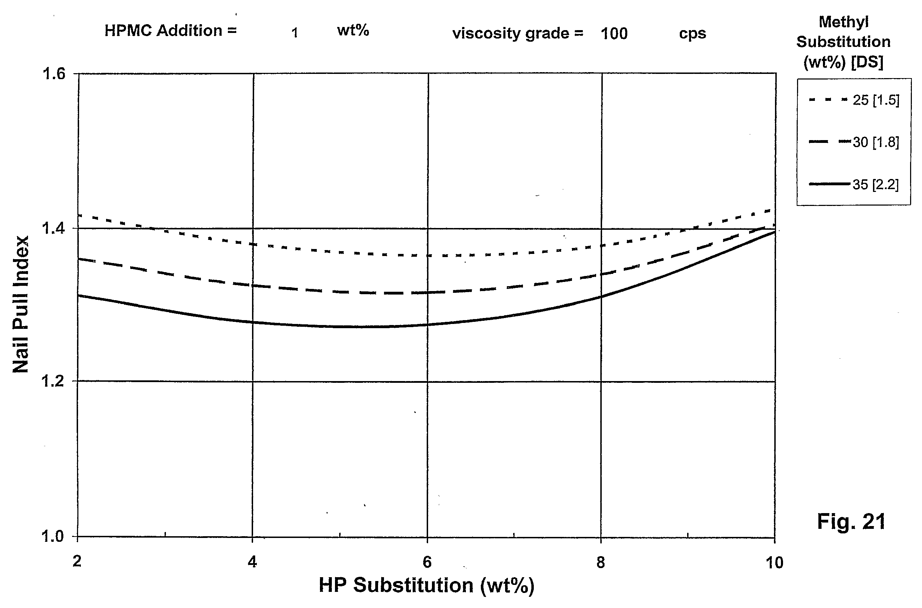

As shown in Fig. 21, a HPMC-reinforced gypsum- based panel, using 1 wt% of HPMC with a viscosity grade of 100 cps, is preferably prepared using a percent substitution of methyl groups less than 30 wt% (DS of 1.8) and a percent substitution of hydroxypropyl groups no greater than 4 wt% or at least 8 wt%.

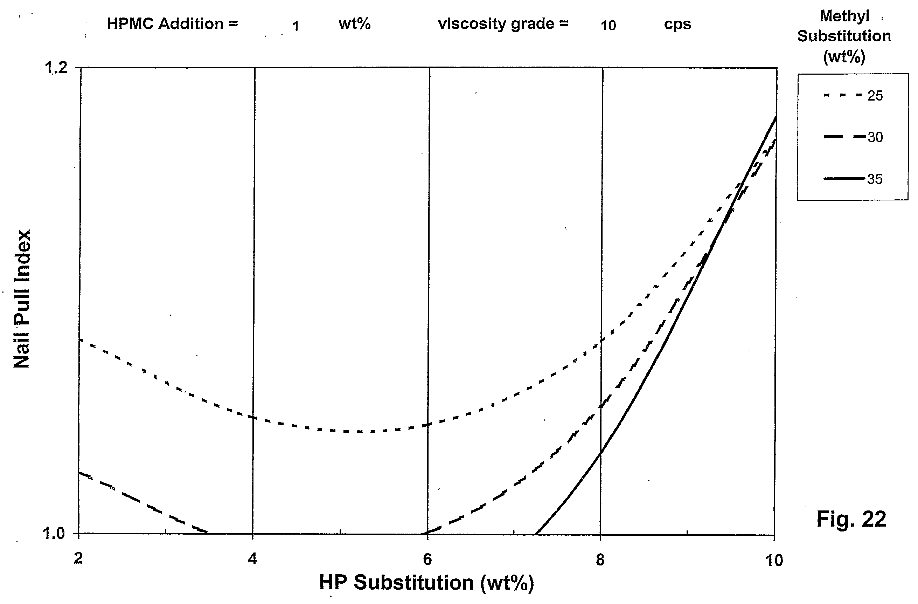

In Fig. 22, a HPMC with a viscosity grade of 10 cps has, preferably, a substitution of methyl groups less than 30 wt% (more preferably 25 wt% - a DS of 1.5). The preferred hydroxypropyl substitution is either no greater than 4 wt% or at least 6 wt%. A percent substitution of at least 6 wt% HP is more preferable than a substitution of no greater than 4 wt%. So long as insolubility of the HPMC in water at 20 degrees centigrade is allowed by the process of manufacturing a composite structure, it is preferable to select an HPMC with a decreased or increased degree of HP substitution beyond that available in any known commercial HPMC such that the composite structure has improved strength.

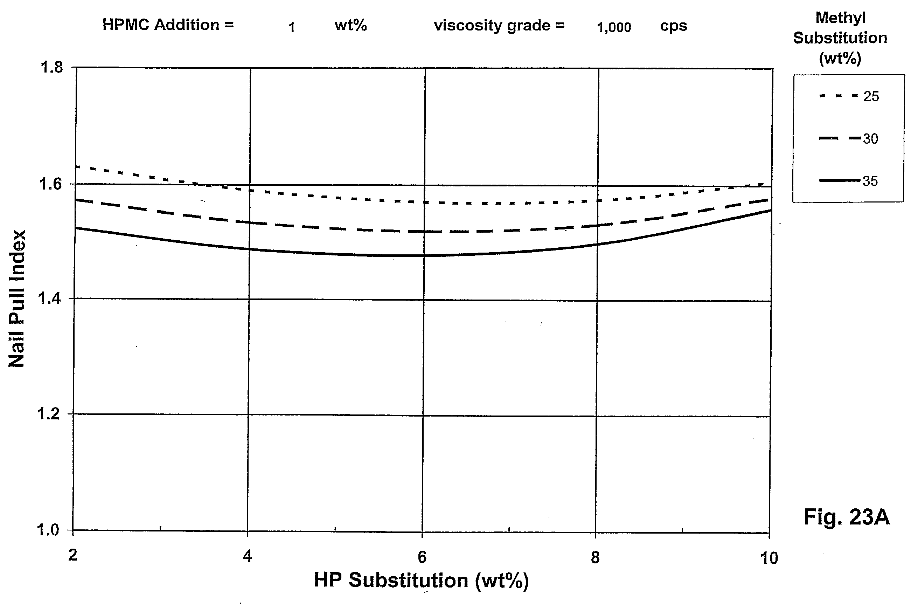

Fig. 23A shows the correlation for HPMC with a viscosity grade of 1,000 cps. In this case, the preferred percent substitution of methyl groups is the same as in Figs. 21 and 22; however, the effect of the hydroxypropyl substitution is about the same for a HP substitution of 4 wt% or 8 wt%. The change with HP substitution is merely a fraction of the change with methyl substitution.

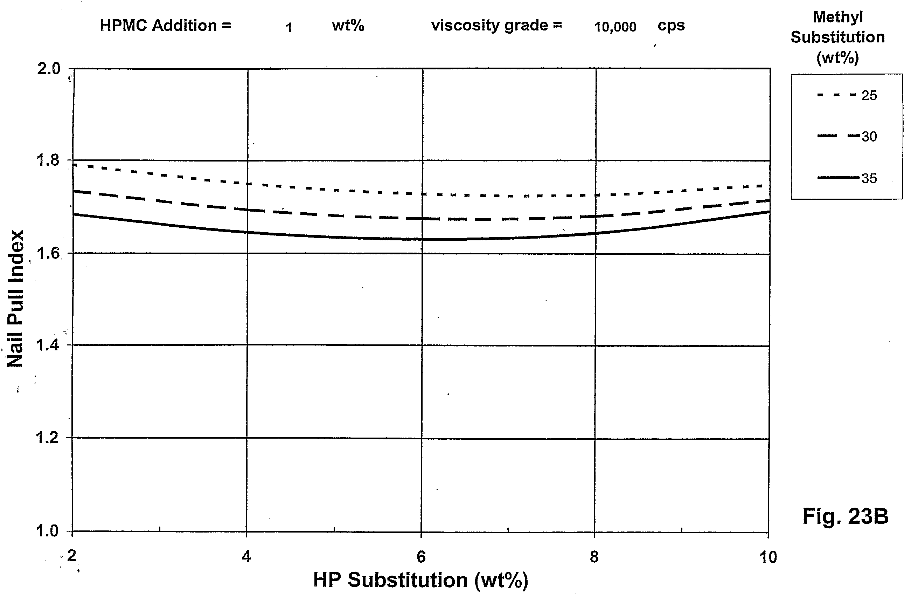

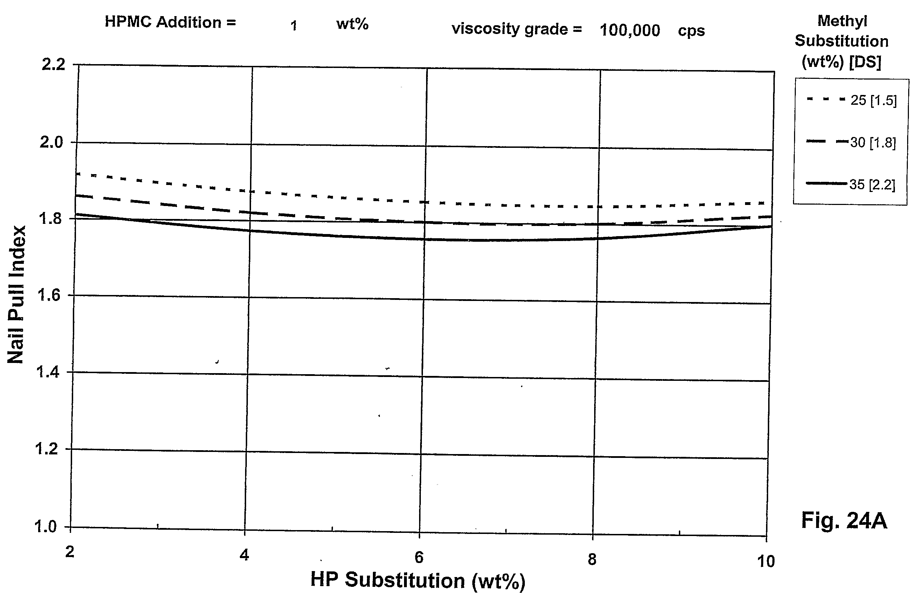

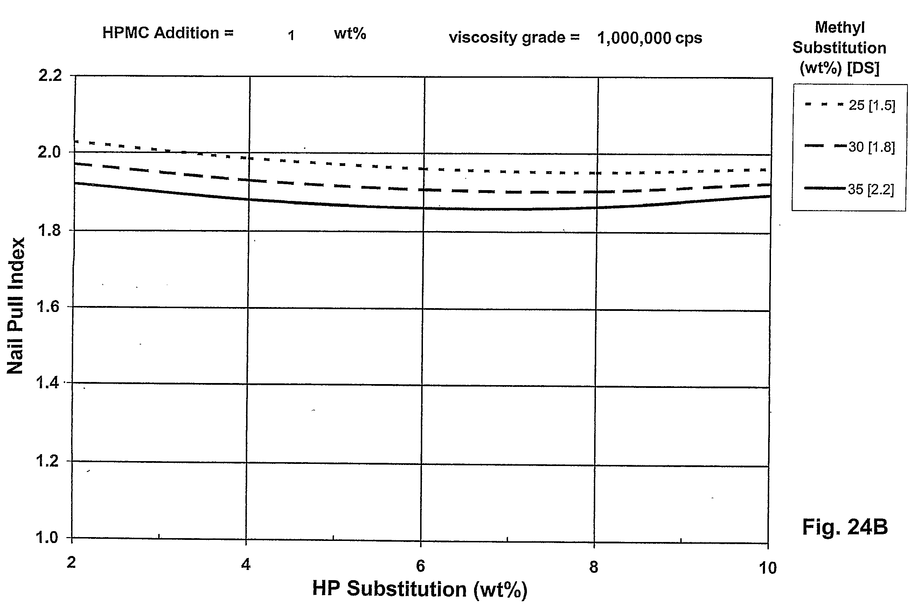

In Fig 23B the correlation at a viscosity grade of 10,000 cps is shown. As for 1000 cps, the effect of methyl substitution is greater than the effect of HP substitution. This trend continues for viscosity grades of 100,000 and 1 million, as shown in Figs. 24A-24B. Preferred embodiments have a low DS of methyl groups and an hydroxypropyl substitution either no greater than 4 wt% or at least 8 wt%. The nail pull index at these high viscosity grades is as great as double that of a gypsum-based structure prepared without addition of the cellulose ether.

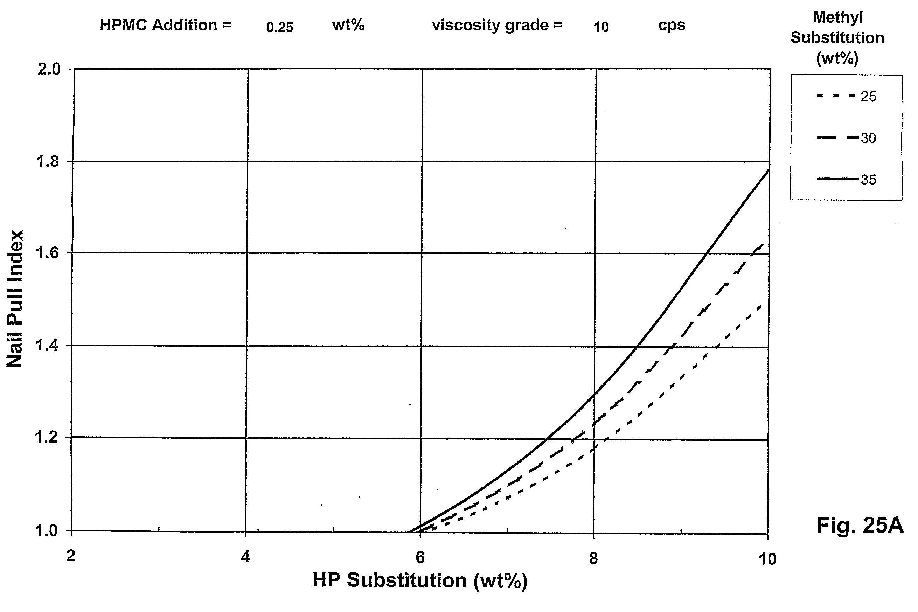

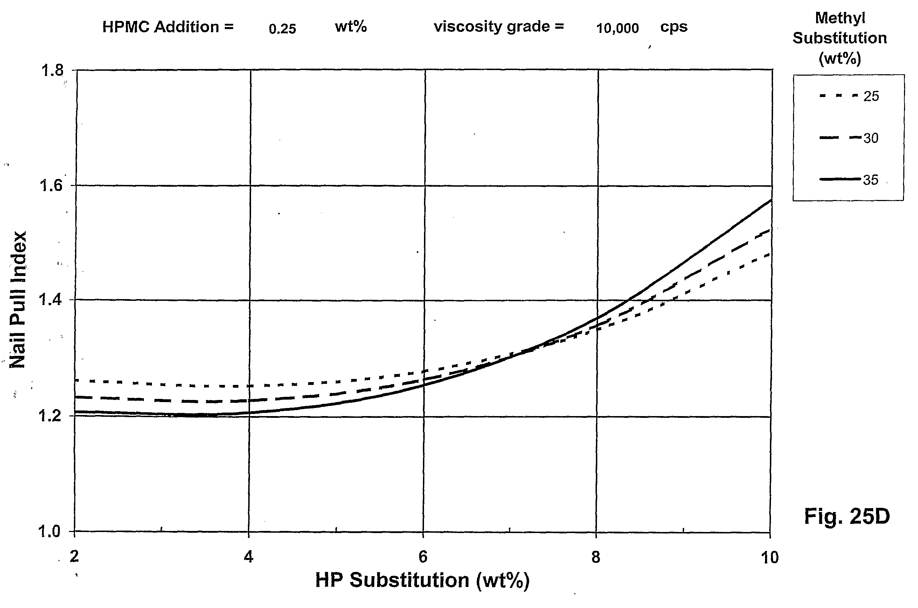

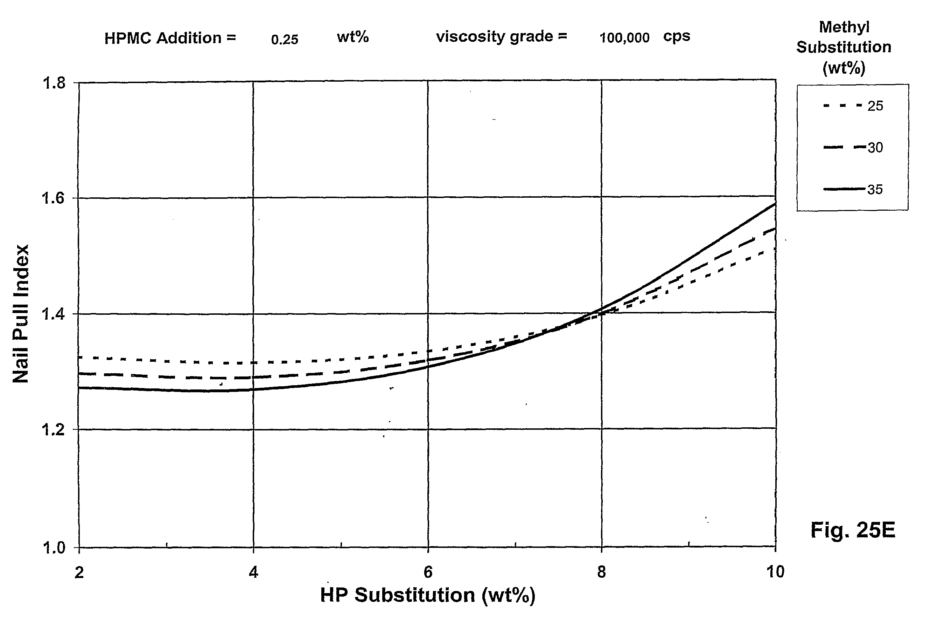

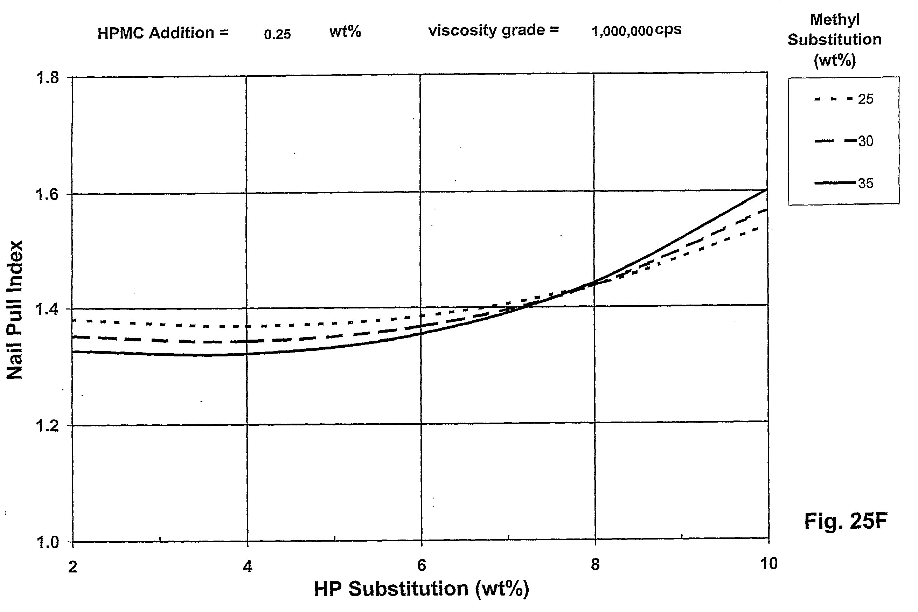

Figs. 25A-28F compare the effect of degree of substitution for additive additions of 0.25 wt%, 0.5 wt% and 2 wt%, respectively. With small HPMC additions, e.g. less than 1 wt%, and at low viscosity grade, e.g. less than 1000 cps, the effect of hydroxypropyl substitution is dramatic.

For example, at 0.25 wt% of HPMC and a viscosity grade of 10 cps, the nail pull index of a gypsum-based panel with addition of HPMC having an HP substitution of less than 6 wt% is less than one. This means that the nail pull resistance is less than that of a gypsum-based panel having no cellulose ether additive. However, a panel may be substantially strengthened (e.g. greater than 1.3) at a substitution of at least 8 wt% and a methyl substitution of at least 35 wt%. Surprisingly, the trend for the nail pull index with methyl substitution at low HPMC addition (e.g. 0.25 wt%) and high HP substitution (e.g. at least 8 wt%) is the opposite of the trend at high HPMC addition.

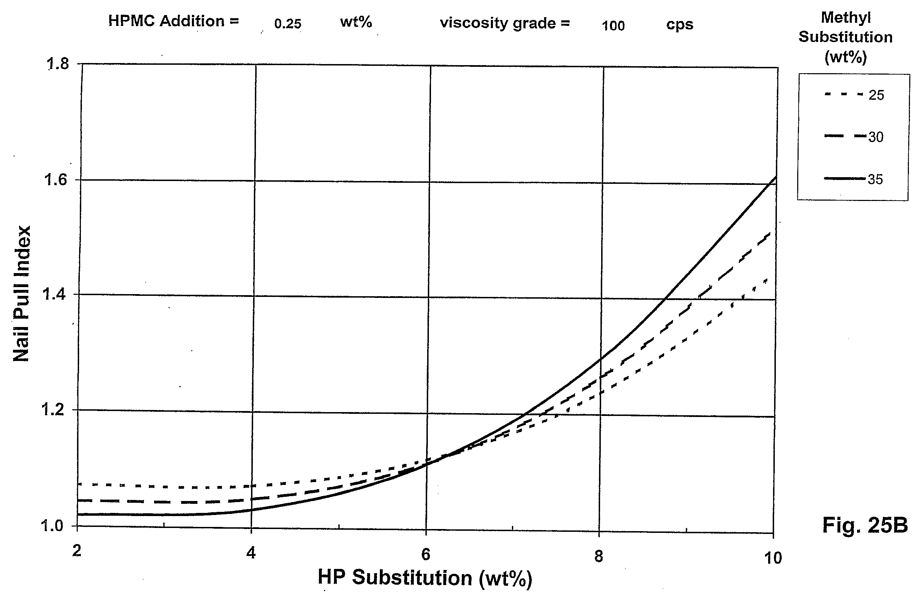

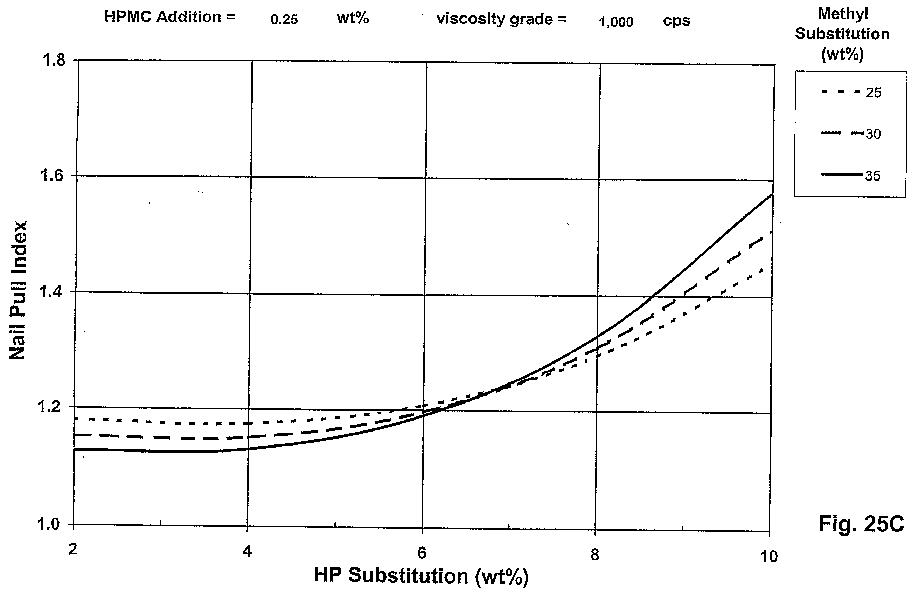

At a viscosity grade of 100 cps, as shown in Fig. 25B, the nail pull index is again substantially strengthened at an HP substitution of at least 8 wt%. However, some strengthening occurs even at HP substitution levels greater than 2 wt%. The point where the effects of methyl substitution DS reverses shifts to higher HP substitution levels. Figs. 25C-25F show that the trend continues with increasing viscosity grade. Increasing viscosity grade both increases the nail pull index across the board and tends to reduce the slope of the nail pull index versus HP substitution curve. While HP substitution greater than 8 wt% continues to substantially increase the nail pull index compared to 2 wt%, the rate of increase at high viscosity grades (e.g. at least 1000 cps) is not as great as the rate of increase at lower viscosity grades (e.g. less than 1000 cps). Nevertheless, a nail pull index of about 1.6 in the correlation is predicted with an additional of only 0.25 wt% of HPMC to calcium sulfate hemihydrate if the correct values of methyl and hydroxypropyl substitution are selected for the HPMC additive.

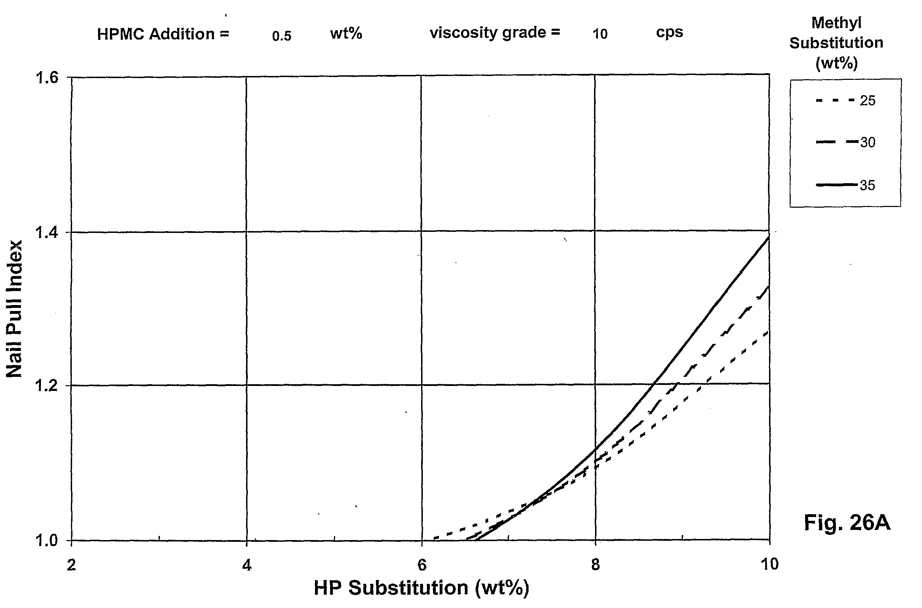

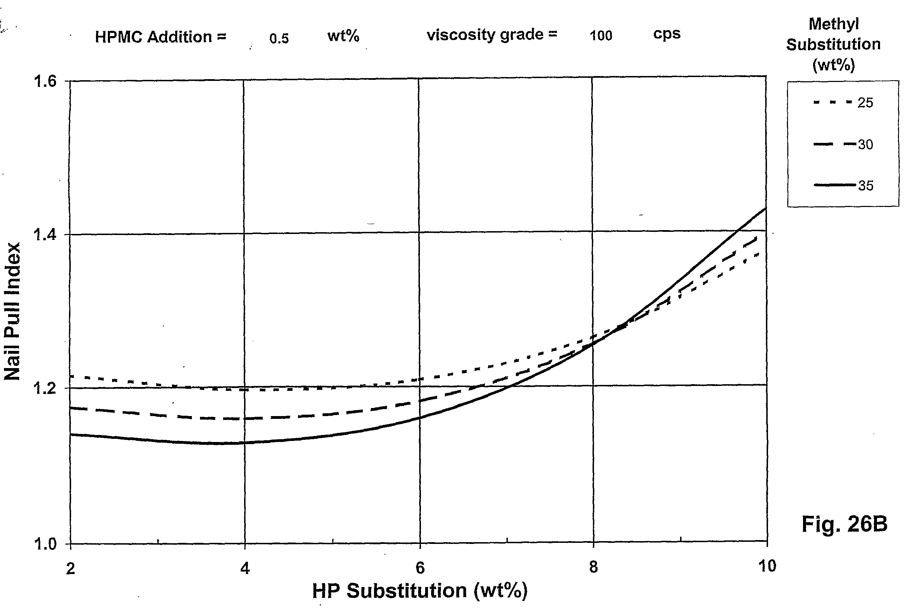

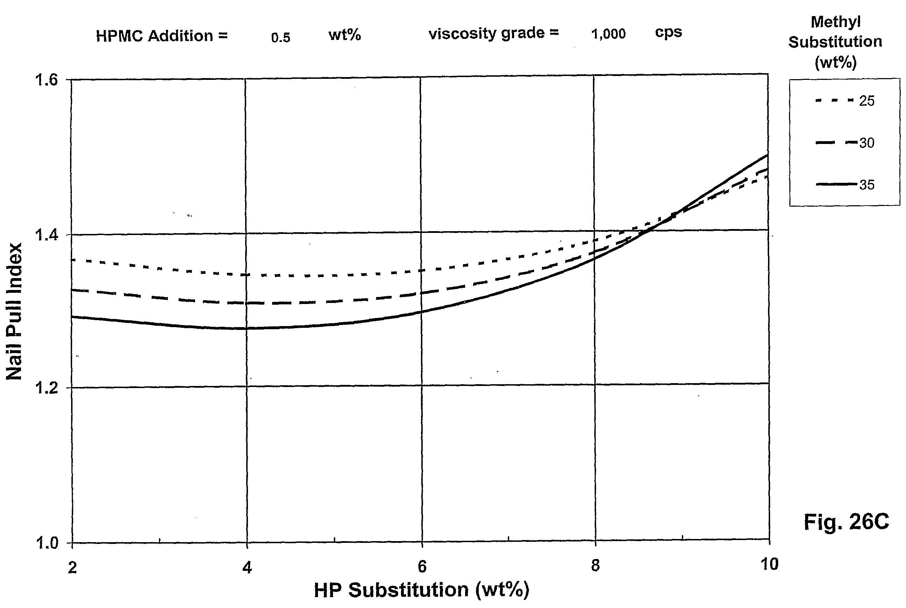

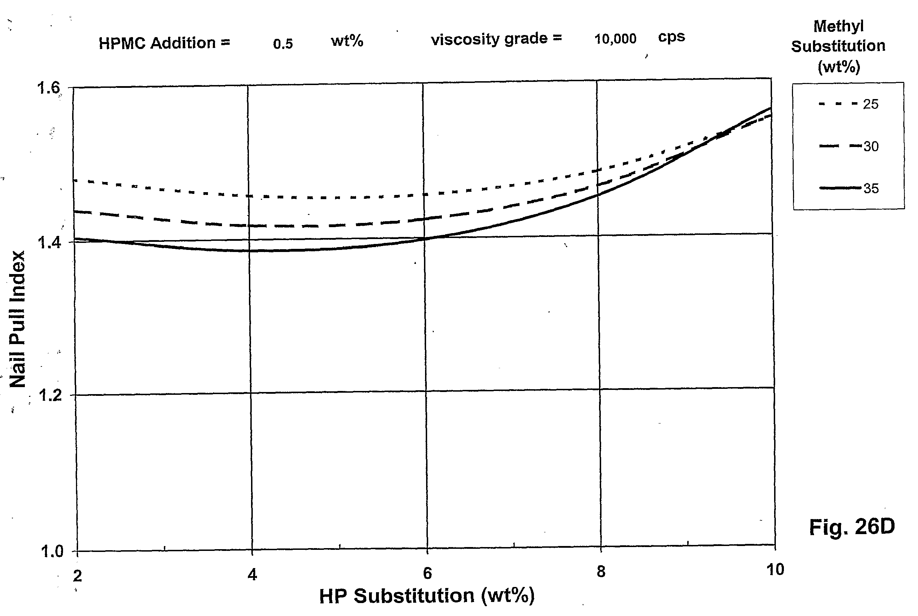

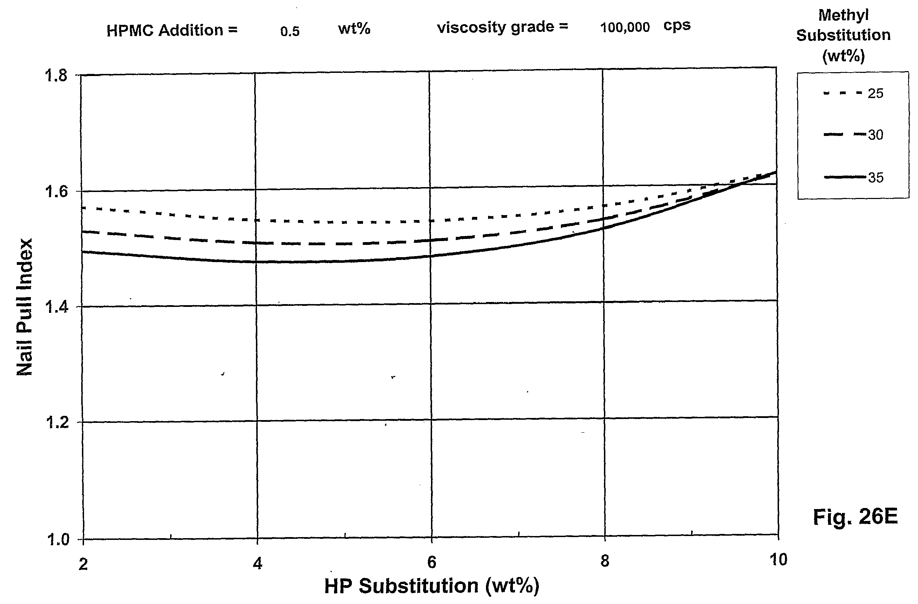

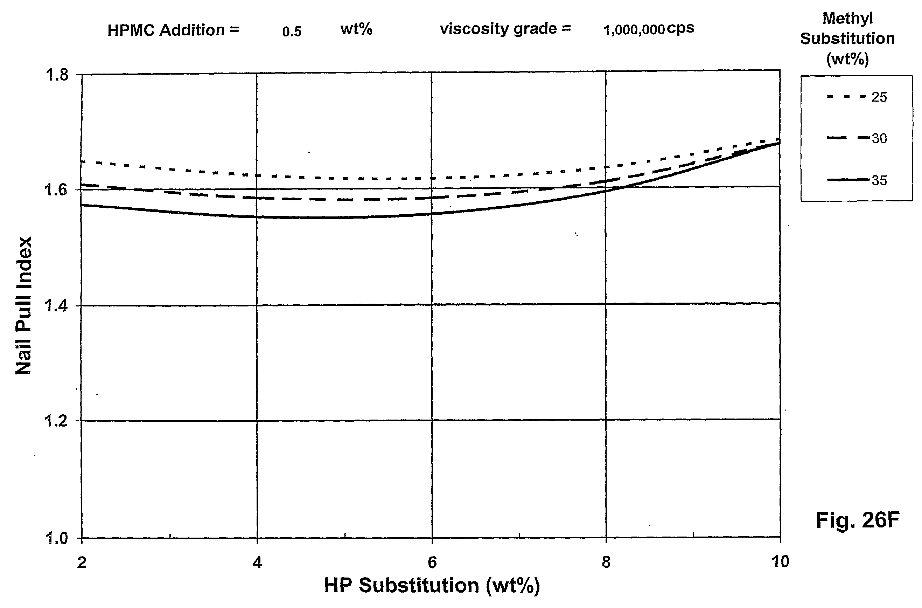

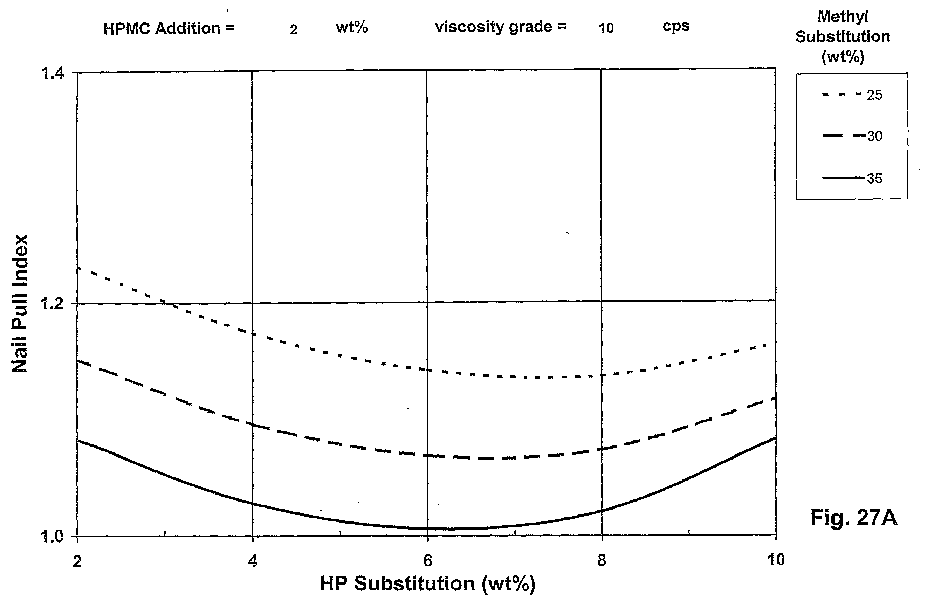

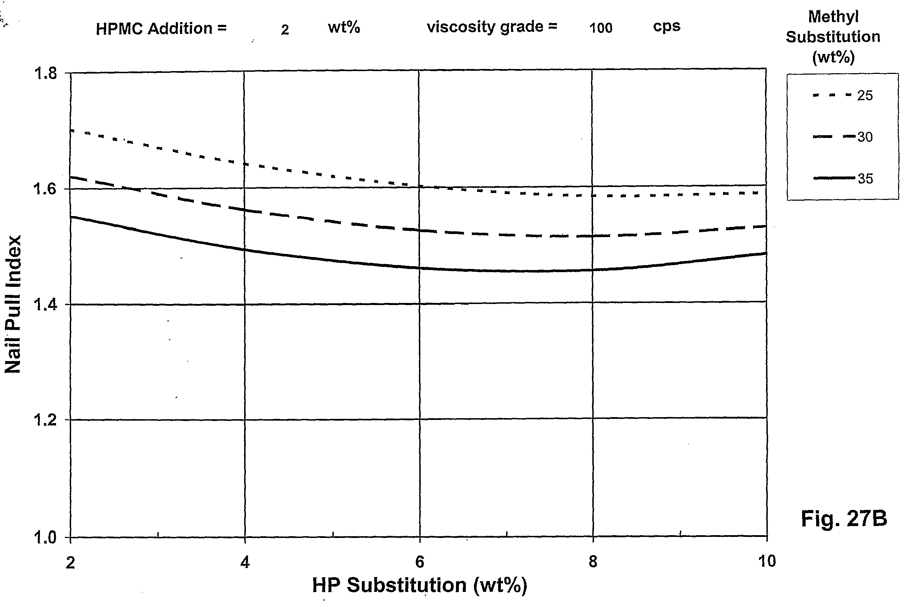

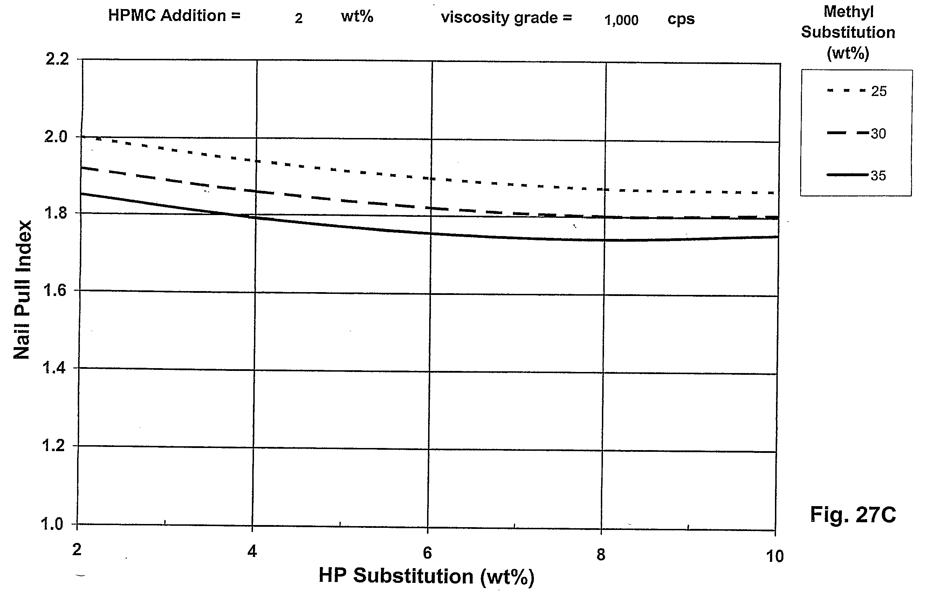

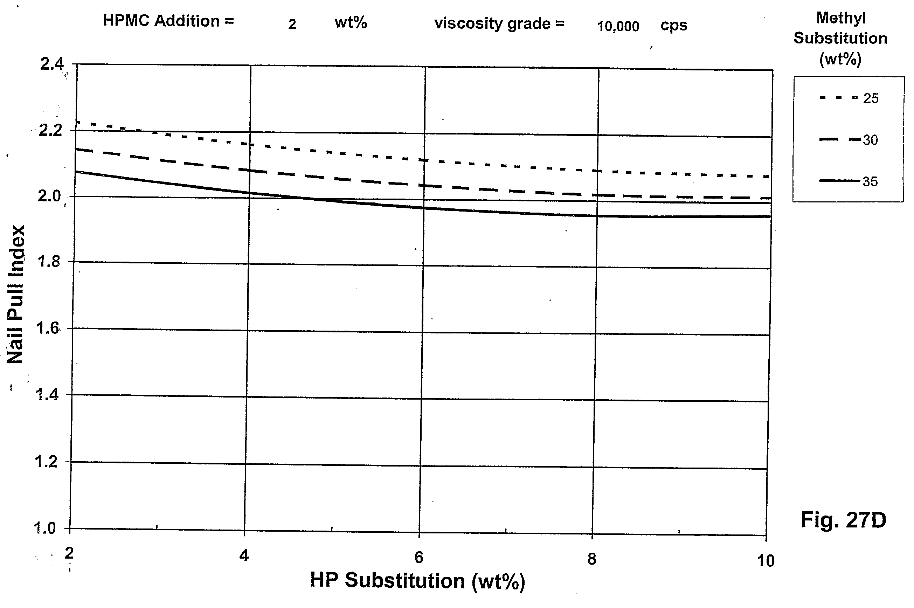

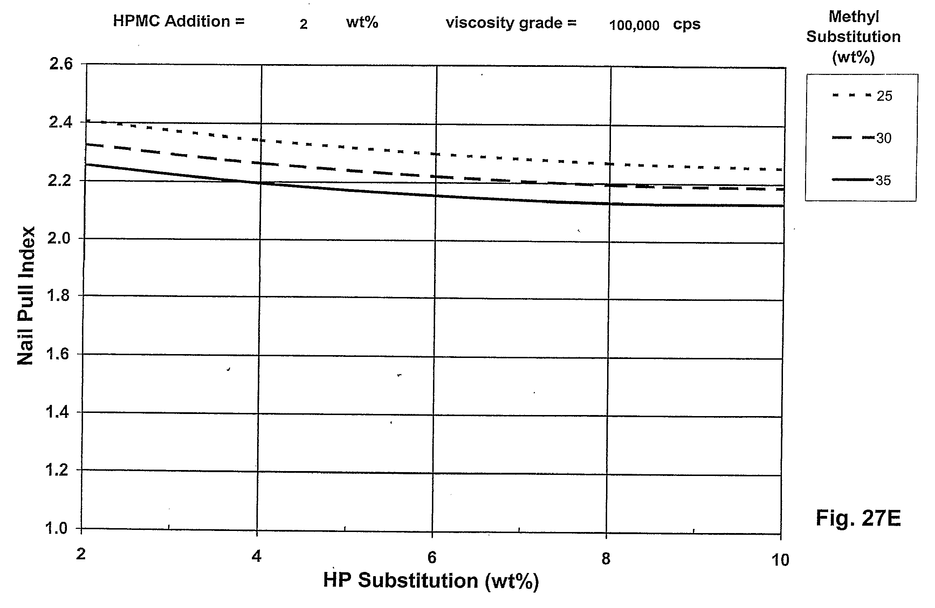

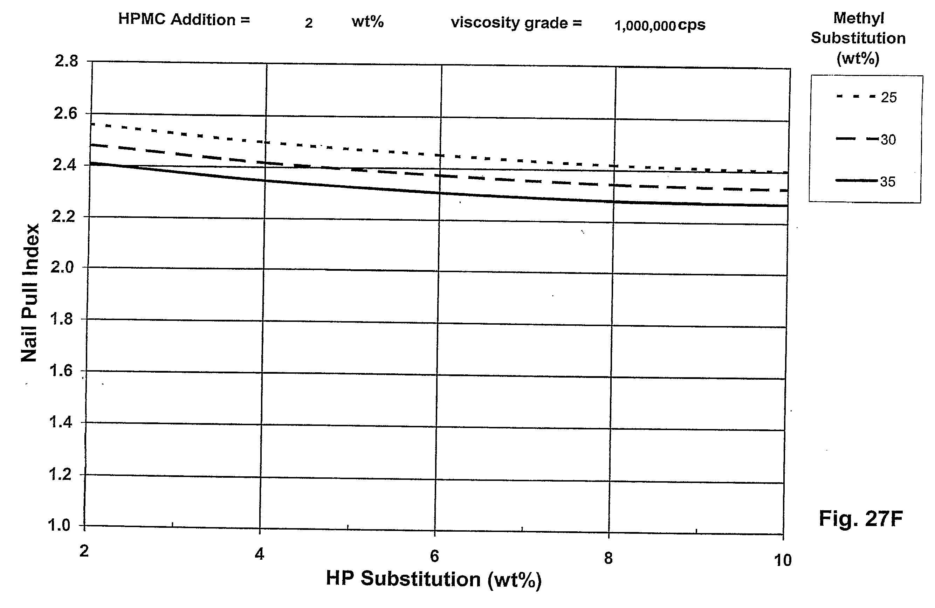

As shown in Figs. 26A-27F, as the amount of HPMC addition is increased further, the nail pull index is generally increased; however, the slope of the nail pull index versus HP substitution curves tend to be reduced. In Figs. 27A-27F, with an HPMC addition of 2 wt%, HP substitution of no greater than 4 wt% is more preferable than HP substitution of at least 8 wt%. Further increases in the amount of HPMC addition greater than 2 wt% tends to further increase the slope of the portion of nail pull index curve for HP substitution no greater than 6 wt%. This means that the rate of increase in NPI with a reduction in HP substitution is even greater as the amount of HPMC approaches 5 wt%

At amounts of HPMC of at least 2 wt%, a nail pull index of greater than 2.0 is achieved by selecting a low HP substitution (e.g. no greater than 6 wt%), a low methyl substitution (e.g. no greater than 1.8), and/or a high viscosity grade (e.g. at least 1000 cps). As viscosity grade increases, the comparative effect of changing the amount of HP substitution tends to decrease, but some additional strengthening is imparted to the structure at low HP substitution.

Results for HEMC are also analyzed to select preferred ranges for the degree of substitution of methyl and hydroxyethyl groups. From these results, it is clear that preferred ranges will emerge as a wider selection of HEMC materials is fabricated for testing, having preferred methyl and hydroxyethyl substitutions. The same procedure is used for selecting HEMC for use as a reinforcing additive as was used for HPMC. Prepare samples of HEMC having a range of substitution levels, viscosity grades, and amount of HEMC addition to calcium sulfate hemihydrate. Determine, by testing, an important strength parameter, such as the nail pull index, and calculate a correlation for selecting an HEMC that meets or exceeds the improvement needed for commercial success of the additive.

Initial results with HEMC show a behavior similar to HPMC. The degree of substitution of the methyl group may be selected to substantially increase strength of the composite structure. The hydroxyethyl substitutional groups tend to improve the nail pull index at either low or high percent substitution, depending on concentration and viscosity grade. Thus, the molecular substitution of hydroxyethyl groups in HEMC shows a pattern consistent with the effect disclosed for the hydroxypropyl groups of HPMC.

At low viscosity grade, e.g. less than 100 cps, the effect of substitution on the measured index of nail pull and flexural strength is dramatic. The amount of methyl substitution and/or hydroxypropyl or hydroxyethyl substitution is sufficient to change the nail pull index from a decrease to a substantial increase, as shown in Figs. 19, 20 and 25A. Commercially available methyl cellulose typically have a DS of at least 1.8 (30 wt%). High viscosity grades were avoided, because a high viscosity grade makes mixing and forming more difficult. It is not surprising that cellulose ethers have been overlooked as an additive for strengthening gypsum-based structures. Indeed, the most promising cellulose ethers, for example MC, HPMC and HEMC have not been available for testing from commercial suppliers at substitutional levels optimized for substantially strengthening gypsum-based composite structures. As can be seen in Table 1, commercially available HPMC and MC have levels of HP and methyl substitution that do not optimize the nail pull index and flexural strength of gypsum-based composite structures.

In one embodiment, dry β-calcium sulfate hemihydrate powder and powdered HPMC are mixed together, dispersing the powdered HPMC additive throughout the β-calcium sulfate hemihydrate powder. The dry ingredients are then added to water, including an excess of water beyond that required to hydrate the β-calcium sulfate hemihydrate stoichiometrically, forming a slurry by stirring of the powder/water mixture. For example, the amount of water used is selected such that the finished wallboard has a density less than 0.85 g/cc, preferably less than 0.75 g/cc for lightweight structures. Then, the slurry is formed into a shape, for example, by pouring into a mold or extruding through a die or a form or a series of dies and forms. In one alternative, the extruded slurry is then fed onto a belt as a continuous sheet. The slurry is allowed to harden, which is also referred to as setting. Setting is a result of the calcium sulfate hemihydrate at least partially dissolving and hydrating, forming calcium sulfate dihydrate crystals, referred to herein as gypsum crystals.

Then, the setting gypsum-based composite structure is dried. Air drying or drying in a furnace evaporates the excess water that has not reacted during hydration. For example, forced connection of dry air over the surface of composite is used to remove most, if not all, of the excess water.

Tests include measuring the nail pull resistance, flexural strength, humidified deflection, mold resistance, and inflamability, using ASTM standard test procedures, for example. Mold resistance is defined as showing no signs of mold growth on a wallboard or wallboard core surface after 24 days of exposure to mold spores within an environment maintained at 90% humidity and a temperature of 32°C.

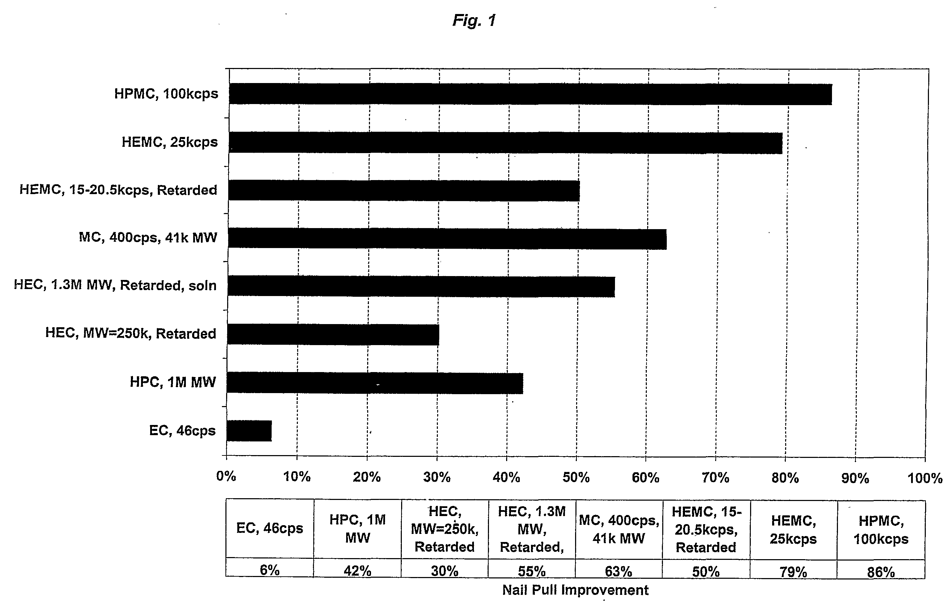

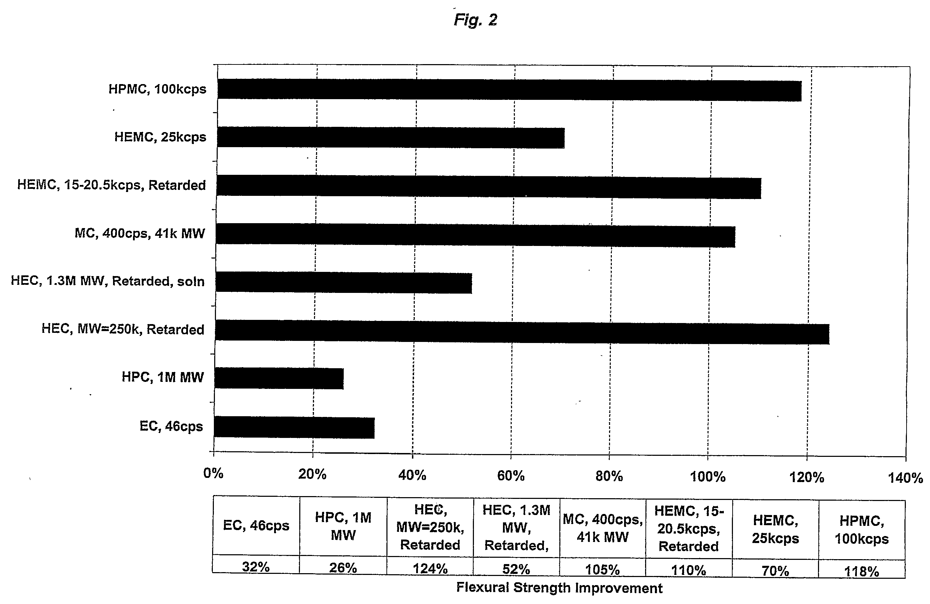

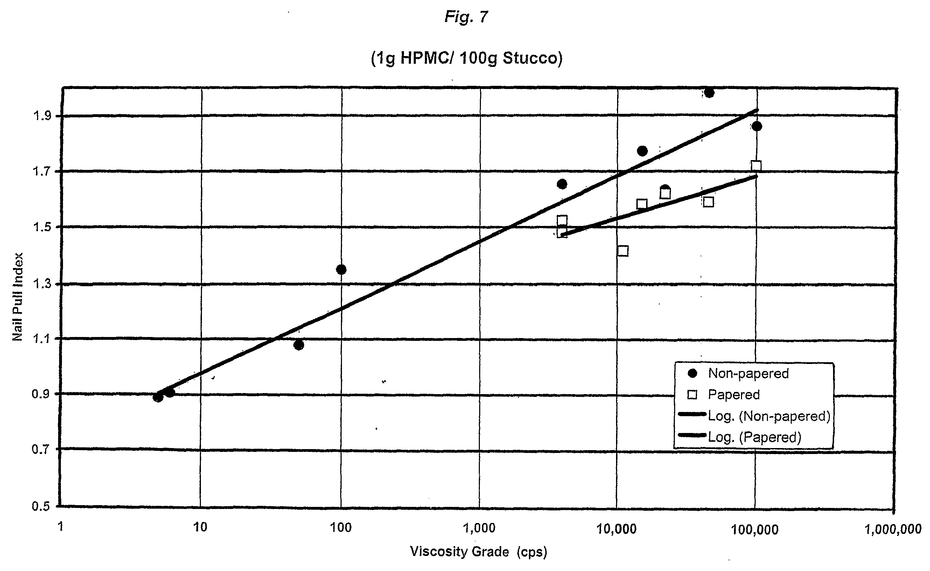

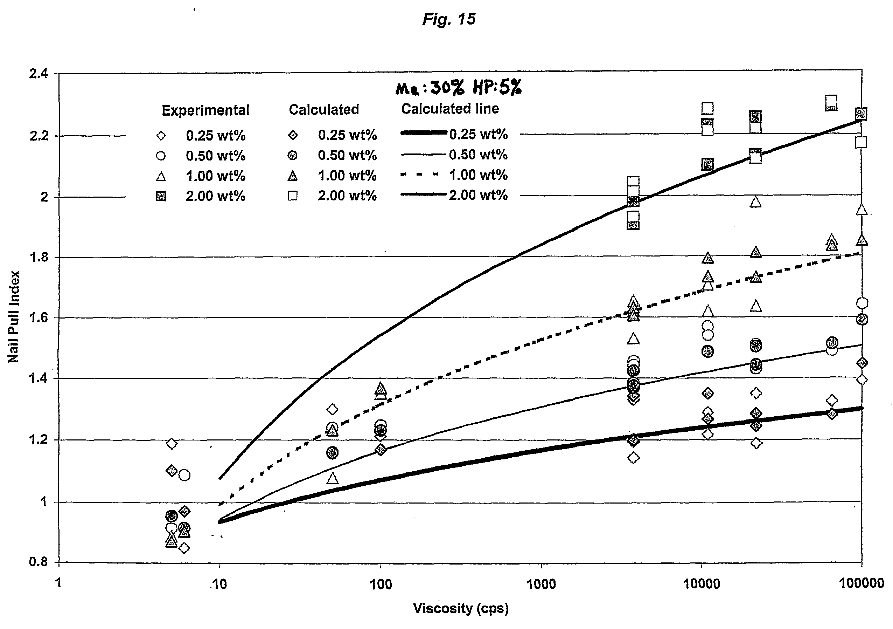

In one embodiment, cellulose ethers used as additives to the wallboard slurry are selected to have a high molecular weight and a high viscosity grade. Surprisingly, both nail pull resistance and flexural strength are greatly increased for cellulose ethers other than CMC at particular, as shown in Figs. 1 and 2. Also, it is very surprising that both nail pull index and flexural strength index increase rapidly with increasing molecular weight and viscosity grade for some cellulose ethers, for example as shown in Figs. 7 and 15. This contradicts those references that indicated that high viscosity grades and high molecular weights would weaken the gypsum crystal strength or be detrimental to strength at all but very low additions of the cellulose ethers. It is believed, without being limiting, that conventional wisdom erred, in part, because the effect of degree of substitution was not appreciated, previously.

Specimens of high molecular weight and high viscosity grade HPMC reinforced wallboard and HEMC reinforced wallboard have the greatest value of nail pull index of those tested, as shown in Fig. 1. Other embodiments show greatly improved nail pull index, as well, especially using high viscosity grade cellulose ethers.

In one embodiment, a low degree of substitution of methyl groups is preferred, e.g. less than 1.6. In an alternative embodiment, a wallboard comprising additions of HPMC less than 1 wt% of the calcium sulfate hemihydrate preferably has HP substitution of HP groups greater than 6 wt% substitution in the cellulose ether polymer.

Fig. 5 shows that for high molecular weight and high viscosity HPMC, HEMC, and HEC, the nail pull resistance increases logarithmically with the weight fraction of additive. This is a desirable trend, making for a robust and forgiving manufacturing process. 400 cps MC shows a linear increase in nail pull resistance with weight fraction of additive, which is also desirable.

CMC is one of the most commonly used cellulose ethers, but, in the absence of other cellulose ethers, commercially available CMC retards setting time and reduces nail pull resistance and flexural strength compared to unreinforced specimens. Commercially available CMC does not increase the strength of wallboard at the concentrations, high molecular weights and viscosities that are effective for the other cellulose ethers.

A surface treatment may coat the cellulose ethers to delay the onset of dissolution, which would be expected to improve dispersion of the cellulose ethers in water. In practice, it is believed that the delay in dissolution caused by the surface treatment resulted in incomplete dissolution of the surface treated cellulose ethers, unless dissolution of the cellulose ethers was achieved prior to hydration of the calcium sulfate hemihydrate.

Iodine stain tests showed that cellulose ethers that were surface treated did not disperse evenly throughout the wallboard specimen, especially for HEC surface-treated powders, while both untreated cellulose ethers and surface treated cellulose ethers that were pre-dissolved showed complete and even dispersion throughout the wallboard. One method of improving dispersion of untreated and surface-treated powdered cellulose ethers was to pre-mix the dry cellulose ethers until the powders were well dispersed with the dry calcium sulfate hemihydrate before adding the mixture to water. Thereby, the agglomeration of the cellulose ethers was reduced and dissolution occurred more readily than for agglomerated particles.

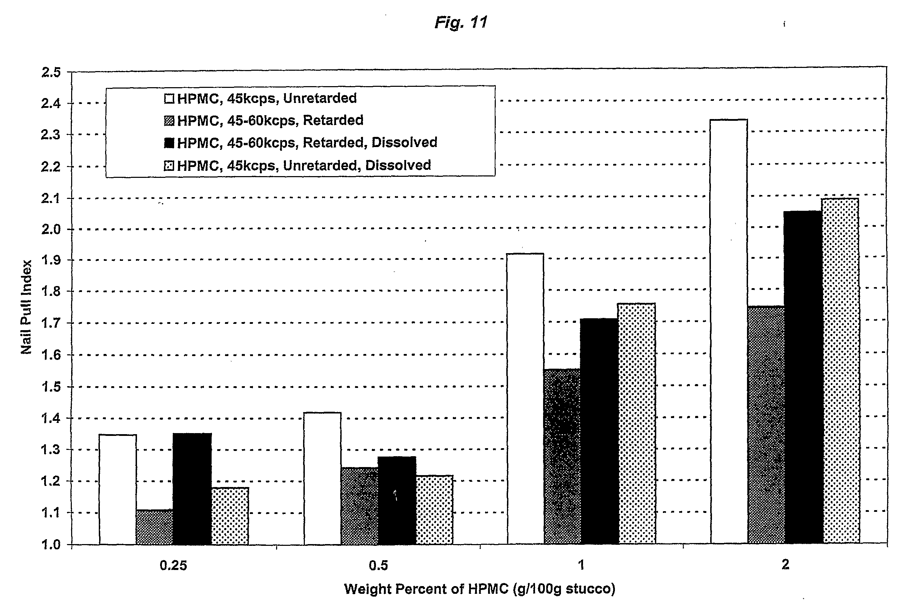

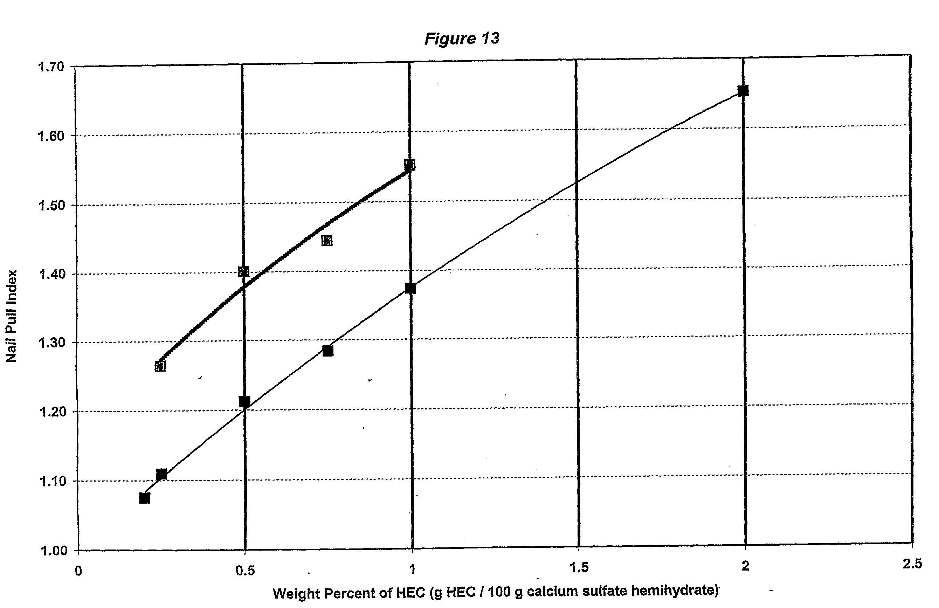

The nail pull index of surface treated cellulose ethers was less than the nail pull index of either pre-dissolved, surface treated cellulose ethers or untreated cellulose ethers, as shown in Figs. 1 and 2, and as shown against weight fraction, for example in Fig. 11 for HPMC with a viscosity grade of 45,000 cps (45 kcps) and in Fig. 13 for HEC with a molecular weight of 1.3 million (1.3 M).

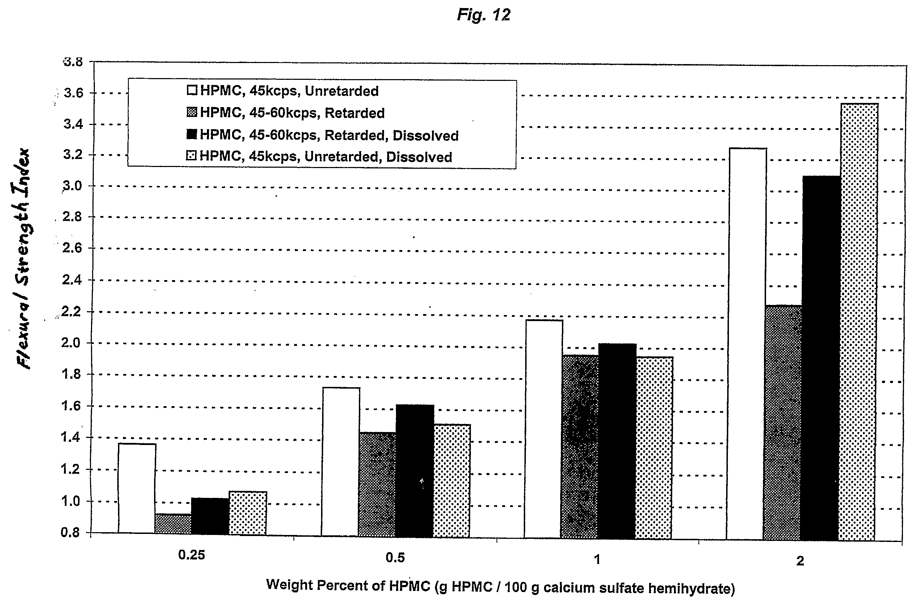

The flexural strength is not affected as greatly by incomplete dissolution, as shown versus weight fraction in Fig. 12 for HPMC at 45 kcps. It is believed that the difference between the effects in nail pull index and flexural strength index is due to the insensitivity of the flexural strength to localized weakness in the structure. The flexural strength index is less sensitive to crushing of the specimen of the core (distributed stresses) than the nail pull index (localized stresses).

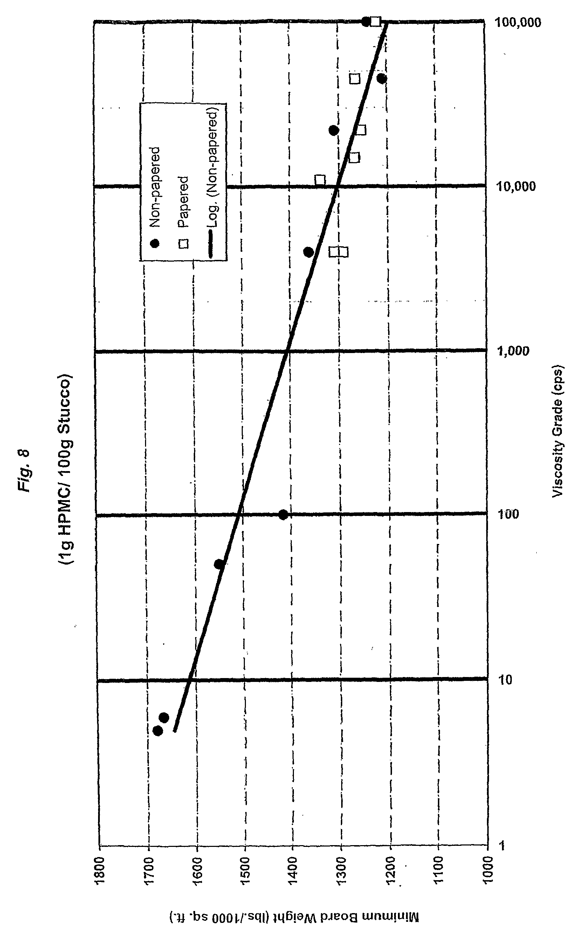

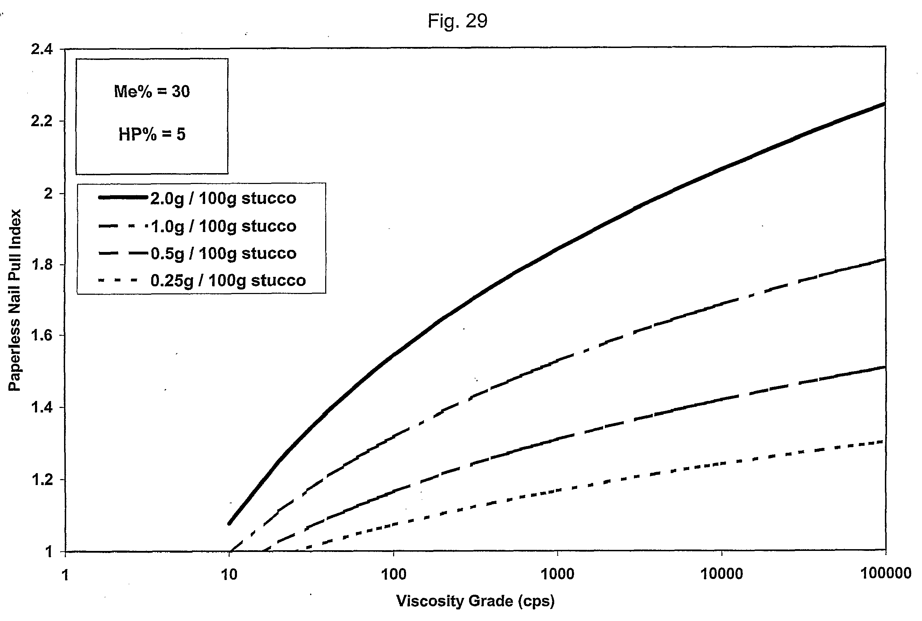

Fig. 8 shows a minimum board weight projected for meeting ASTM standards versus viscosity grade of wallboard specimens prepared with a weight percent of HPMC additive to β-calcium sulfate hemihydrate of 1 wt%. Fig. 29 shows the effect of viscosity grade and amount of additive on the nail pull index calculated from the correlation for HPMC having 30 wt% substitution of methyl groups and 5 wt% substitution of hydroxypropyl groups in the cellulose ether. As the viscosity grade increases the minimum board weight that is required to pass ASTM standards decreases. In addition, using an HPMC with a more preferred substitution further reduces minimum board weight needed to achieve minimum ASTM standards. Also, other reinforcements, such as fibers added to the slurry, should further reduce the minimum board weight required to pass ASTM standards. Thus, one embodiment of the invention is a wallboard comprising a low density core and meeting or exceeding ASTM standards for wallboard.

In one embodiment, the wallboard core comprises gypsum, a cellulose ether and cellulose fibers. Other fiber reinforcements, such as glass, polymer and carbon fibers, are optionally substituted or added to increase the flexural strength of the wallboard core. In one specific embodiment, short polyester fibers or nylon fibers or both are mixed into the dry ingredients prior to adding the dry ingredients to water to increase the flexural strength. Longer fibers can be introduced during extrusion to provide the core with oriented strengthening along the longitudinal direction of the wallboard.

Slurry viscosity is a concern in high speed wallboard production. Increased viscosity can lead to increased mixing and pumping demands, clogged machinery, and problems with board formation. Slurry viscosity is of even greater importance when selecting a CE additive because the primary purpose of CEs in conventional plaster formulations is to thicken the mixture.

In order to fully hydrate the β-calcium sulfate hemihydrate and prepare a slurry that can be mixed and extruded, a greater amount of water is used than is used for plaster compounds, which use hydration of α-calcium sulfate hemihydrate to form gypsum. It is known that the amount of water added to the slurry has a profound effect on the quality and microstructure of the resulting wallboard. It is believed, without limiting the invention in any way, that addition of too little water prevents adequate mixing of the slurry, while too much water causes porosity in the wallboard core. There can be a dramatic increase in viscosity with the addition of cellulose ethers, especially in formulations with elevated levels of high viscosity cellulose ethers, which can make it difficult to adequately mix the dry ingredients and the water. Furthermore, an increase in viscosity can prevent the slurry from being poured into a form. One simple test that can be used to determine slurry viscosity is a "patty test" in which some amount of slurry is poured from a designated height and the resulting patty diameter is recorded. Furthermore, the rheology of wallboard slurry is a function of time, humidity and temperature.

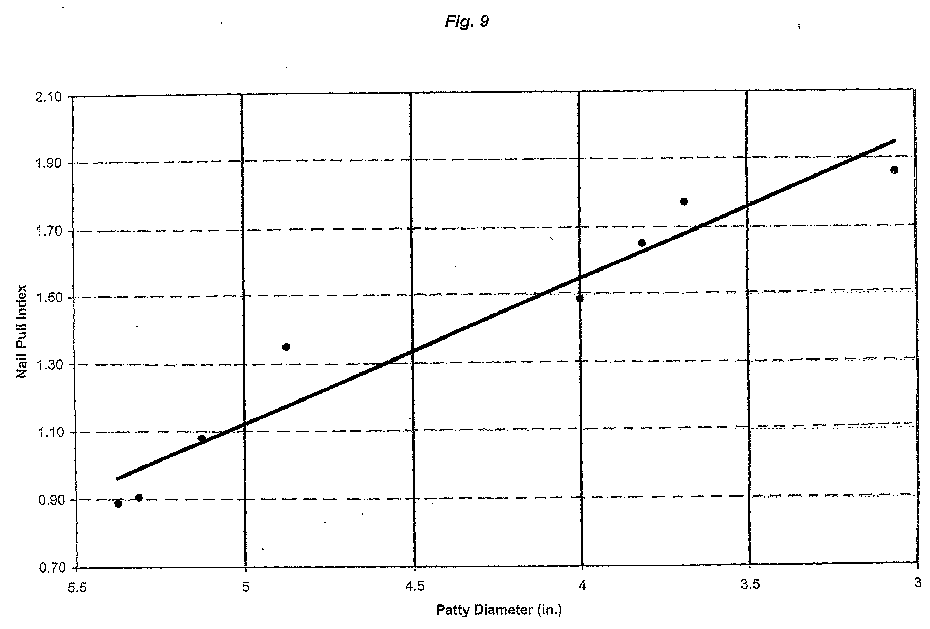

In general, the patty size increases inversely with an increase in the viscosity grade of a cellulose ether. As expected, the patty diameter increases with decreasing viscosity grade for HPMC. In fact, patty diameter increases logarithmically with the inverse of viscosity grade; therefore, the nail pull index increases proportionally with the inverse of patty size, as shown in Fig. 9. Thus, a trade-off occurs between increasing the viscosity grade to increase strength and the effect of viscosity grade on mixing and further processing of a slurry.

In one embodiment, a slurry was formed by mixing β-calcium sulfate hemihydrate with less than 5 wt% of a powdered cellulose ether, such that the cellulose ether was evenly dispersed throughout the mixture. The mixture was then mixed with an amount of water to form a slurry, such that the wallboard core had a density of less than 0.8 g/cc upon drying. In an alternative embodiment, the cellulose ether was selected to have a molecular weight of at least 10,000 and a viscosity grade of at least 100 cps, and both the nail pull resistance and flexural strength were improved compared to unreinforced wallboard. In another embodiment, the amount of powdered cellulose ether was limited to a range of 0.5 wt% to 3 wt%, and the measured nail pull index continuously increased with addition of powdered cellulose ether. In yet another embodiment, the amount of cellulose ether is limited to less than 1 wt%, more preferably no greater than 0.5 wt%, and the cellulose ether is selected of HPMC and HEMC having a methyl substitution of at least 25 wt%, more preferably at least 30 wt%, and a substitution of the hydroxymethyl or hydroxyethyl of at least 6 wt%, more preferably at least 8 wt%.

Fig. 14 shows a graph of nail pull index versus MC viscosity grade with 0.25, 0.5, 1.0, and 2.0 wt% of MC mixed with powdered β-calcium sulfate hemihydrate. The darker lines and point are the values calculated using a correlation, which is discussed elsewhere, while the lighter lines are the experimental values. Fig. 15 is a similar graph for HPMC mixed with powdered β-calcium sulfate hemihydrate. A DS range from 1.2 to 1.6 for a MC substantially increases the flexural strength index and substantially increases the nail pull index for MC additions at a weight percent of 0.25 and 0.5 wt%, as shown in Fig. 19, which is based on the correlation used in Fig. 14. Fig. 20 shows that this trend applies also to higher weight percent additions of MC. This shows that substantially increasing nail pull resistance occurs for a gypsum-based panel having a MC with low DS, high viscosity grade, large amount of MC and/or a combination of these.

In yet another embodiment, the gypsum-based composite structure is a wallboard having a density less than 0.85 grams per cubic centimeter (g/cc) having a core comprising gypsum crystals and a strengthening additive dispersed throughout the gypsum crystals. The core, without the addition of any face sheets, has a nail pull resistance that meets or exceeds the nail pull resistance for ASTM Standard C36-95b. Minimum nail pull resistance for various thickness of wallboard is shown in Table IV. In another embodiment, the wallboard core has a flexural strength and humidified deflection that also meets or exceeds the requirements of ASTM Standard C36-95b. Generally, it is the nail pull resistance that is the critical, limiting strength criterion for commercially useful reduced-paper wallboard. Humidified deflection may become important for ceiling board, and flexural strength maybe critical for handling of paperless wallboard during transportation and installation.

In another embodiment, the gypsum-based composite structure has a barrier layer on the surface of the board, such as another gypsum layer. For example, a thin gypsum layer, which may have little or no strengthening additive present, may be incorporated onto one or both surface layers of the wallboard core using a thin skim layer, for example, as is known in the art. The skim layer may be prepared by mixing stucco and water without the addition of the strengthening additive. This thin skim layer forms a dense, smooth protective layer on one or more surfaces and may incorporate a different additive, such as a fungicidal additive or a different strengthening additive from that of the core.

In another specific embodiment, the gypsum-based composite structure is a reduced paper wallboard having a density of less than 0.85 grains per cubic centimeter (g/cc), more preferably less than 0.75 g/cc, and a core comprising gypsum crystals and a strengthening additive dispersed throughout the gypsum crystals, the core having flexural strength that meets or exceeds the flexural strength requirements for ASTM Standard C36-95b. Specifically, the average breaking load of the wallboard core shall be not less than the load shown in Table IV for a wallboard core with the wallboard thickness listed in Table IV. In another alternative embodiment, the wallboard core has a humidified deflection that also meets or exceeds the requirements of ASTM Standard C36-95b.

In one preferred embodiment, the amount of strengthening additive in the core is less than 5 wt. % of the calcium sulfate hemihydrate that is used to form the gypsum crystals, such that inflammability and extinguishability meet the standards for both residential and commercial use.

Method A and Method B of Table IV refer to the methods so designated in ASTM test method C473-95.

One or more face sheets may be adhered to the surface of the core, while retaining mold resistance. For example, a single sheet of decorative paper may be applied to the surface of a lightweight core. The decorative face sheet allows the surface of the wallboard, exposed after installation, to be treated as any ordinary wallboard. Thus, taping and sealing joints, wallpapering, painting, and other finishing processes are completed the same as for conventional wallboard, using the single decorative paper face sheet. The face sheet may also provide abrasion resistance and improved flexural strength and/or nail pull resistance.

In one embodiment, the gypsum-based composite structure has an insulative face sheet on one or more surfaces. For example, the insulative face sheet may be a single layer or multiple layers of a foil, including but not limited to an aluminum foil. The insulative face sheet may provide a barrier to radiation heat transfer. Alternatively, the face sheet may be a vapor barrier. In addition, the face sheet may provide abrasion resistance during shipping and handling of the wallboard. Alternatively, a decorative face sheet on one side of the wallboard is combined with an insulative face sheet on the other side of the wallboard.

Another embodiment has a core and a thin protective layer at one or more surfaces of the wallboard. For example, a protective layer may be formed *in situ* during the setting process. By including a soluble additive in the slurry, which migrates with water, segregation of a highly concentrated layer of the additive may be accomplished during drying of an excess amount of water added to the slurry. Some water soluble polymers, such as poly(vinyl pyrrolidone) and the polyamine curing component of epoxy, migrate with water to the surface of the wallboard during the drying and setting process. Also, some dissolved starches and boric acids migrate with water. Specifically, if an excess of water is present in the slurry, a drying process, for example at an elevated temperature, removes excess water from the wallboard from one or more surfaces by evaporation. In one alternative embodiment, post-processing is used to make the protective layer insoluble to water. For example, a titanium alkoxide or titanium tetraethoxide may be sprayed onto cellulose ethers, making them insoluble in water. Specifically, the reaction between titanium alkoxides and cellulose ethers requires heat, and in one embodiment the reaction occurs during drying of the wallboard, when the wallboard is heated to evaporate the excess water. Alternatively, a photosensitive polymer may be chemically sensitive to light, for example, U.V. light or sunlight and may produce crosslinking that makes the protective layer insoluble.

In one alternative, the protective layer is a water-soluble antifungal chemical that may be either polymeric or monomeric, such as quarternized amines, for example. For example, poly(vinylpyridium bromide) and tetramethylammonium chloride both migrate to the surface with evaporating water and provide an antifungal layer on the surface of the wallboard. Alternatively, a protective layer is applied to the surface of the wallboard by spraying a coating on one or more surfaces of the core, for example, or by introducing the layer as a skim layer. For example, the surface of the gypsum-based structure is protected by either forming a protective skim layer and extruding the gypsum-based structure onto the skim layer or by forming the core and adding a skim layer.

In another embodiment, abrasion resistant surfaces are formed on the gypsum-based composite structure by introducing reinforcements onto one or more surfaces. In one example, abrasion resistant surfaces are formed by co-extrusion or co-molding of an abrasion resistant surface on a structural core. Alternatively, abrasion resistant surfaces are formed after forming the structural core by introducing reinforcements prior to the setting of the surfaces of the gypsum-based composite structure. In one embodiment, the reinforcements are fibrous, such as glass fibers, cellulose fibers and/or polymer fibers. Alternatively, the reinforcements may be particulate reinforcements, such as spherical particles or flakes. Also, a combination of particles and fibers may be used. In an alternative embodiment, a protective layer is applied to the fiber-reinforced surfaces, e.g. a skim layer.

In yet another embodiment of the present invention. The gypsum-based composite structure is a wallboard comprising a core, a protective layer and a face sheet, which includes multiple plies. The face sheet enhances the nail pull resistance of the wallboard, while reducing the number of paper plies. Furthermore, the multiple plies in the face sheet need not add to the flexural strength of the wallboard. Therefore, a lower grade ply may be used than for conventional wallboard. Thus, such wallboard costs less than wallboard using conventional oriented fiber paper plies. For example, paper plies made of recycled newspaper may be used in the face sheet.

As yet another embodiment of the present invention, the gypsum-based composite structure comprises a core having a second phase dispersed throughout the core. For example, the second phase is porosity, a reinforcement, an expanded filler and/or a filler. If the second phase is porosity or an expanded filler, then the density of the wallboard core is reduced. For example, paperless wallboard having a density less than 0.75 g/cc. Alternatively, a reinforcement, such as fibrous or particulate reinforcements, enhance the flexural strength and nail pull resistance of the core. As another alternative, a low cost filler may simply reduce the cost of the gypsum-based composite structure.

In another example, the gypsum-based composite structure is a reinforced, paperless wallboard. Unreinforced, paperless wallboard is very dense, frangible and difficult to handle, whereas paperless, reinforced wallboard solves these longstanding and unresolved needs. The nail pull resistance, mold resistance and flexural strength results for reinforced, paperless wallboard specimens show that wallboard can now be manufactured that meets or exceeds the ASTM standards for nail pull resistance, having reduced weight compared to conventional papered wallboard, and eliminating the multi-ply paper layers that feed mold growth, satisfying a longstanding and unresolved need in a very competitive marketplace. Furthermore, the total installed cost of the some of the alternative embodiments is comparable to the installed cost of conventional papered wallboard.

It is believed, without being limiting in any way, that intermolecular interactions, such as hydrogen bonding, immobilize the cellulose ether molecules, making them precipitate during setting and drying of the gypsum core and prevent migration to the surface of the structure. The degree of interaction between molecules and between a molecule and gypsum is affected by molecular weight, which is reflected in the increase in strength with viscosity grade. It is also affected by the degree of substitution. Also, the addition of larger amounts of a cellulose ether causes precipitation to occur earlier, given the same amount of water, because of the limited solubility of cellulose ethers in water. Thus in selecting a specific cellulose ether as a strengthening additive, it is believed that the strength of the wallboard depends not only on the amount of cellulose ether added, but also the solubility and mobility of cellulose ether. Furthermore, it is believed that the solubility and mobility depend on both the degree of substitution and the weight percent of the addition, as shown by the correlations and figures.

In another alternative embodiment, a foam may be produced to further reduce the density of the wallboard core. This foam may be produced, for example, using a surfactant and stirring of the water and/or slurry to generate a foam, which may be incorporated into the extruded wallboard core.

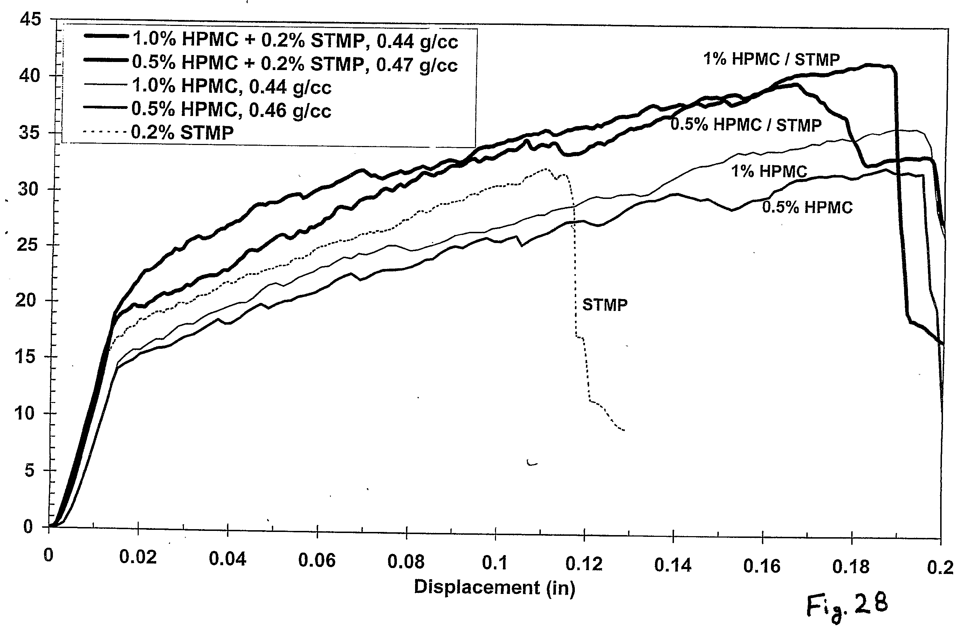

In yet another embodiment, sodium trimetaphosphate (STMP) was added. Preferably, STMP is added in a range from 0.02 wt% to 1 wt%. STMP is used as a sag reducer in ceiling board. As shown in Fig. 28, STMP has a surprising synergy with the cellulose ether reinforced, gypsum-based composite structure. The toughness, defined as the area under the load displacement curve in Fig. 28, is greatly increased for a panel having both a cellulose ether and STMP compared to a panel missing either the cellulose ether additive or the STMP or missing both (control). This is highly surprising, because STMP usually embrittles gypsum-based wallboard, and undesirably reduces the toughness, as shown by the reduced area under the curve for the gypsum-based panel prepared using STMP alone, without a cellulose ether additive, having a shorter displacement to failure than even the control panel. Both the stiffness and toughness of the cellulose ether reinforced panel is improved by introduction of STMP in to the composite. Furthermore, there is surprisingly little less in the displacement to failure with the addition of the STMP.

In yet another embodiment, the gypsum-based composite structure is fiber-reinforced. The composite strength and toughness of fiber-reinforced cementitious materials is strongly dependent on the interface between the fibers and the matrix, such as the cementitious materials used in building materials. If the fibers have little interaction with the cement matrix, and thus poor interfacial adhesion, the strength of the composite will not be significantly improved regardless of the strength of the fibers or the level of fiber loading. Instead, fiber pullout occurs. Incorporation of foam or lightweight filler into the matrix to reduce the density of the cementitious building materials exacerbates fiber pullout. The pullout characteristics of fibers in the matrix determine their potential for reinforcing a particular cement. In co-pending application entitled "Construction Materials Containing Surface Modified Fibers, to Tagge et al., filed May 27, 2003, a method for modifying the surface of a reinforcing additive is disclosed.

In one embodiment, co-polymers are polymerized from a mixture of fluoro-aliphatic (meth)acrylate monomers, hydroxyalkyl (meth)acrylate monomers, stearyl (meth)acrylate monomers and chlorinated monomers. Herein, the co-polymers of this embodiment are referred to as fluoro-polymers; however, these co-polymers may actually contain little or no fluorinated groups, depending on the desired application.

In one example, the fluoro-polymers are applied to fibrous surfaces using an anhydride functional polymer and a catalyst. In this example the anhydride group chemically binds to the functional groups of a fiber and crosslinks the hydroxyl groups, for example, binding to hydroxyl groups of water and oil repellant polymers imparts an impermeable surface to the fibers by integrating the functionally designed polymer on the surface. In another embodiment, a cross-linking agent, such as an organic titanate, diisocyanate, metal salt or another reactive, functionalized polymer or pre-polymer, is used in place of an anhydride functional polymer.

In another embodiment, additional monomers with functional groups that are selected to react with a cross-linking agents are included in the fluoro-polymer synthesis. In one example, water and oil repellant and/or bio-active co-polymers contain monomers that react with metals, and a metal salt is used to crosslink the polymer. For example, additional monomers may contain other functional groups, such as, but not limited to, carboxyl, carboxylate, sulfate, sulfonate, phosphate and phosphonate groups.

In one preferred embodiment, the surface modifier is selected to be a multifunctional molecule comprising at least one polymer group, e.g. monomer or oligomer, that binds the surface modifier to one of the reinforcement and the gypsum, and another polymeric group having a different function, such as bio-activity, hydrophyllic or hydrophobic moeity, oil repellancy, adhesion to cellulose, fire retardancy, antistatic properties and/or other functions.

In an alternative embodiment, a functional co-polymer includes a reactive group that chemically bonds to a particulate or fibrous surface without crosslinking the polymer. For example, graft, block and random co-polymers of stearyl (meth)acrylate and maleic anhydride are used with or without a catalyst to increase the rate of chemical bonding between the functional co-polymers and the fibrous surfaces, including natural surfaces such as wood.

In one method of treating fibrous surfaces, the fibers are incorporated into a fabric, such as a fiber mat or textile. The fabric is treated with the fluorpolymer, either before or after incorporation into the fabric. Next, the fabric is exposed to a solution or emulsion that binds one or more functional groups to the fiber surfaces, for example, by immersing the fabric in an emulsion or solution including a monomer, polymer or co-polymer and a metal salt. The treated fabric is then dried, cured and washed to remove undesired, residual components. Drying and curing is performed either under the same conditions or under differing conditions. For example, the temperature for curing may be either greater or less than the temperature used for drying.

In an alternative method, a polymer is synthesized *in situ* on a fibrous surface by applying a solution or an emulsion including the desired monomers directly on the fibrous surface. A free radical initiator is applied either with the desired monomers or in a separate step, and the fibrous surfaces are exposed to heat or UV light, for example, after drying the fibrous surfaces. Then, the fibers, mat or textile is washed to remove any undesired, residual components.

In one embodiment, bio-active functional monomers are included in the fluoro-polymer synthesis and impart mold resistance, such as anti-microbial and/or biocidal properties. Alternatively, crosslinking of a bio-active functional polymer, co-polymer or oligomer is achieved by including the bio-active component during application of a metal salt and/or free radical initiators. In another embodiment, both bio-active functionality and water and oil repellency are imparted in the same process.

In another embodiment, bio-active functional monomers, oligomers, co-polymers or polymers are polymerized (or further polymerized or crosslinked) *in situ* around fibrous or particulate surfaces. In one example, another reactive polymer and/or a crosslinking agent is mixed together with the bio-active functional component, binding the bio-active functional component to the fibrous surface. In an alternative example, the bio-active functional components are functional groups on monomers, oligomers, co-polymers and polymers, which are capable of binding to particulate and fibrous surfaces.

For example, the monomers, oligomers, co-polymers and polymers bind to functional groups that are bound to the fibrous or particulate surface. Some examples of bio-active functional monomers, oligomers, co-polymers and polymers include, but are not limited to, quarternized amine functional groups, for example, having from 4 to 10 carbons in the alkyl chain. In one specific example, the fungicidal and bactericidal properties have been shown to kill mold after the mold contacts a bio-active coating on the surface of a textile.

In one embodiment, fibers are first treated to provide a desired functional group on the surface of the fiber. Then, the fibers are incorporated into a mat or textile. For example, the fibers may be woven into a fabric or otherwise incorporated into the form of a mat or paper. The fibers may be combined with fibers having no coating or having a coating incorporating a different functional group, providing the paper, mat or fabric with mold resistance and/or other desirable properties, such as a cohesive bond between the fibers and the matrix, based on the properties of treated fibrous surfaces.

In one embodiment, a facing paper is treated on one surface to impart mold resistance and water repellency. The opposite surface is untreated or is treated in such a way as to provide the opposite surface excellent adhesion with a slurry that forms a wallboard core. Alternatively, the facing paper may be made of multiple plies. For example, an outer ply may be treated to provide bio-active and water repellency to a wallboard, while the innermost ply may be treated to adhere to the core of the wallboard. In another example, the outer ply may be treated for water repellency and one or more inner plies may be treated to impart bio-active properties. In yet another embodiment, the outermost ply on an exposed surface is treated to prepare the surface for plastering, stucco, painting, tarring or decorative papering. For example, the outermost ply may be treated to provide a self-stick surface for a later-applied layer, such as insulation or a decorative wallpaper.

In one embodiment, a film forming polymer or mixture of polymers, at least one of which is an at least partially water-soluble or water-swellable strength enhancer is used as a surface modifier for fibers or is applied to a mat or a fabric. The composition may optionally include a bio-active component and/or a fire retardant to increase fire-resistance. The polymer is preferably cross-linked or treated to prevent complete dissolution of the polymer and subsequent migration away from the fiber during addition to water and subsequent drying. For example, a water-soluble, film-forming polymer utilized in a sizing composition preferably has a strong interaction with the cementitious matrix. Preferred strength enhancing, film forming polymers of the invention include, but are not limited in any way, to cellulose ethers other than CMC for gypsum-based composite structures.

Fibers may be of any denier and length, ranging from continuous, bundled strands, such as those often used in woven meshes, to relatively short, monofilament fibers, such as those used for discrete fiber reinforcement and in some non-woven mats. Herein denier is used as a measure of the fiber mass per unit length in milligrams per inch (mg/inch), which is an indirect measure of the fiber cross section. Alternatively, a polymer composition may be used as a binder in non-woven fibrous mats, the mats being used for reinforcing composite cementitious materials.

Reinforced composite cementitious materials may be used as, for example, fiber-reinforced cement for cast products, fiber-reinforced gypsum, such as glass-fiber-reinforced gypsum (GFG). Also, fabrics and paper are used with cement as a reinforcement, such as in joint tapes, patching kits, and molded articles. The fibers and fabrics, themselves, can be made by any conventional process or may be specifically designed with functional groups on the fibrous surfaces that react with the polymer additives or sizing. In one embodiment, conventional sizing equipment is configured to apply the polymer additive and to dry and crosslink the polymers. In one embodiment, the treated fibers are incorporated into the composites according to conventional methods by merely replacing existing fiber or fabric inclusions.

It is thought, without being limiting in any way, that in one embodiment a polymer coating forms an interfacial layer of polymer-enriched slurry adjacent to the fiber. As the slurry dries, the polymer re-forms a film encapsulating the fiber and local gypsum crystals in the matrix surrounding it. The polymer binds the fiber to the matrix and reinforces the region surrounding the fiber. This results in an effective transfer of stress between the gypsum crystals and the reinforcing fiber when the composite is stressed. In a preferred embodiment, the amount of solids in the slurry is in a range from 0.5% to 50% with an add-on of from 1% to 500% of the fiber weight. Preferably, a sizing composition is selected having solids of from 2% to 20%, and add-on of from 20% to 500%. Strength enhancement in surface-modified, fiber-reinforced composites increases with higher amounts of polymer add-on.

In one embodiment, the calcium sulfate hemihydrate is mixed with surface modified fibers, a second additive and water. The sizing composition for surface modifying the fibers is selected from one of a starch, a starch derivative, a cellulose derivative, an acrylic polymer (commonly polymerized from an acrylic acid, an acrylic salt, an acrylic ester, an acrylamide, a methacrylic acid, or an acrylonitrile monomer), a polyvinyl acetate, a polyvinyl alcohol (PVA), an alginate, and a natural gum. Also, emulsions or dispersions of polyesters, polyurethanes, and styrene copolymers may be used.

For example, wallboard reinforced by fibers coated solely with these formulations show some improvement in mechanical strength if the treated fibers are mixed into the slurry gently, as a final step. Also, excess water content must be minimized and drying carried out quickly, as low molecular weight and non-crosslinked additives dissolve in the water and tend to migrate away from the fibers and toward the surface of the wallboard over time during drying. However, without further treatment these additives often segregate to the surface and serve as nutrients for undesirable microbial, mold and fungus growth. Iodine staining techniques were used to observe this propensity for migration, for example, among poly vinyl pyrrolidone additives. Preferably, the surface modifying layer (surface modifier) has an interaction and/or bond with the hardening cement that improves interfacial strength without retarding the set. Alternatively, the surface modifier interacts with the additive, such as a cellulose ether, which is added to the matrix of a cementitious structure. In one embodiment, the surface treatment is somewhat soluble or swellable in water, resulting in an interfacial layer of polymer that adheres to the fiber and partially penetrates the crystallized particles of cement or gypsum.

Preferably, high molecular weight sizing solutions have lower solids content than conventional sizes; however, the add-on is comparable, because the slurry viscosity is greater. Furthermore, cross-linking the surface coating creates a durable coating for fibers or fabrics that is not easily removed during the mixing, setting, or drying steps of fiber-cement production.

For example, hydrophilic polymer systems are converted to swellable hydrogels upon cross-linking. It is believed, without being limiting in any way, that these swollen coatings allow cement crystal growth into fiber size while resisting erosion, dissolution, and migration. Fibers with cross-linked surface coatings are used in conventional high-speed mixing procedures such as those found in wallboard production. In one embodiment, the fibers are pre-mixed with dry components. Alternatively, the fibers are dispersed in water prior to cement mixing or are combined together with both the water and the calcium sulfate hemihydrate and other powdered additives.

Several cross-linking methods are utilized to decrease the solubility of surface coatings. In one embodiment, a sizing is at least partially insolubilized by exposing the sizing to higher temperatures than normal during drying, causing crosslinking of the sizing. Sizing components such as starch and starch derivatives, PVA, CMC, and acrylate polymers, as previously listed above, crosslink at elevated temperatures. Conventional sizing avoids such temperatures to prevent the sizing from becoming insoluble, for example.

In another embodiment, radiation, such as ultra-violet (UV) light or gamma rays, can also be used to cross-link some sizing components, such as polyvinyl pyrrolidone (PVP). In another embodiment, water-insoluble polymers are incorporated into a film forming polymer to physically cross-link the surface treatment. For example, a reactive polymer system, a system of reactive pre-polymers, or a latex, preferably with an internal cross-linker, may be mixed with hydrophilic polymers and reacted to lower the solubility of the resulting film on the additive.

In an alternative embodiment, a film forming polymer is chemically cross-linked to form a hydrogel. For example, cross-linking agents for cellulose ethers include organic titanates, organic zirconates, and dialdehydes, such as glyoxal and gluturaldehyde. Borax and sodium trimetaphosphate are preferred for starches. Calcium chloride with peroxide, poly(styrene sulfonate) (PSS) and UV light are preferred for PVP. In one preferred embodiment, the cross-linking system is relatively stable and is preferably enhanced during or after drying by the elevated temperature, which allows swelling during setting but avoids migration of the polymer during drying and weakening of the bond if a cementitious building material becomes wet, for example, by flooding or exposure to high humidity.

In one embodiment, HPMC is crosslinked by a chelated organic titanate which is activated at temperatures above 100 degrees centigrade. In another embodiment, a cross-linking agent is applied to only the outermost region of the surface coating, forming a surface cross-linked polymer coating with delayed solubility. In another preferred embodiment, a surface coating polymerizes in situ on a fiber in combination with a crosslinking agent. For example, the free radical polymerization of 1-vinyl 2-pyrrolidone with 1,6-hexanediol diacrylate is used to form a surface coating on a fiber for use in cementitious composite materials.

In another embodiment, a coupling agent, such as a silane coupling agent, is included with the surface modifier formulation to improve the bond between the size and the fiber, promoting adhesion. Alternatively, the coupling agent is applied to the fibers or fabric as a primer before application of the surface treatment. In a preferred embodiment, a cross-linking agent, such as an organic titanate, acts as both the crosslinking agent and the coupling agent, chemically bonding the surface treatment to the fiber, for example, via hydroxyl functional groups of the fibrous surface of a fabric.

In one embodiment, the layer of the surface treatment adjacent to the fibrous surface is cross-linked by a coupling/crosslinking agent applied as a primer, but the exterior of the surface treatment is either not cross-linked or is less highly cross-linked than the surface treatment adjacent to the fibrous surface.

In another preferred embodiment, a plasticizer, such as polyethylene glycol or glycerol, may be included in the surface coating composition to increase the flexibility and toughness of the coating.

Preferred fibers to be sized include monofilament, bundled, and spun strands of various materials, including inorganic fibers, such as glass, mineral wool, and metal (e.g. steel), synthetic fibers, such as polypropylene, polyester, and nylon, and natural fibers, such as cotton, hemp, and wood. In one embodiment, bundled and chopped spun strands are designed to separate when mixed with the slurry, allowing the treated fibers to disperse and embed within the matrix material. In an alternative preferred embodiment, the sizing composition and slurry mixing conditions are controlled to maintain an intact surface modifier layer around a fiber bundle or strand, while allowing for some separation of the individual fibers. This provides a larger effective surface area of the fibers for adhesion to the size and cement matrix. The surface coating acts as a binder, allowing discrete bundles or spun strands of fibers that would normally separate into individual filaments when mixed in a slurry.

In one embodiment, the fiber is immersed in the surface coating material, dried, woven if desired, and cut to the desired dimensions in an automated process. For example, bundled fiberglass strands sized with a cross-linking CMC composition may be woven or arranged into a mesh and embedded as reinforcement in cement boards. In an alternative embodiment, chopped or other types of discrete fibers are sized by spraying them with a sizing solution while they are suspended in air. In yet another embodiment, individual fibers are coated by a surface coating in a solvent or emulsion and are agglomerated into a mat of fibers. Each of the coating processes may be repeated any number of times to achieve a desired thickness of add-on.

In one embodiment, fibers are coated by a cellulose ether at an elevated temperature, at which the cellulose ether particles have low solubility. Powdered CE's are dispersed in hot water without hydrating or dissolving them, maintaining a low viscosity even at high concentrations of CE's. As the solution cools, as when exposed to a cool fiber or fabric or to air, the CE dissolves, forming a semi-solid gel. In an alternative embodiment, a surface-treated, delayed-solubility CE is used. Preferably, the surface-treated, delayed-solubility cellulose ether is coated with an aldehyde, more preferably a gluturaldehyde, which also impart anti-fungal properties to the fibers. For example, fiber immersion sizing (single or double) with a high molecular weight, high viscosity grade cellulose ether achieves an add-on thickness greater than 25%.

In one embodiment, fabrics or papers are surface modified by immersing the fabric or paper sheet in the surface modifier. In another embodiment, a surface modifier is sprayed onto one or both sides a fabric or paper layer.

In one embodiment, a fiber mat is formed by evenly dispersing chopped fibers in solution for surface treating the fibers. Then, the fibers are evenly spread, and the dispersion is drained over a wire mesh. Next, the fiber mat is dried, or, alternatively, the mat is first compressed to force liquid out of the mesh. For example, the fibers may be glass fibers, the surface coating may be PVP, and/or the PVP may be crosslinked by PSS or UV light before or after the mat is dried. In an alternative embodiment, pressure or vacuum is applied before the wet fiber mat is dried, degassing the fibers and improving penetration of the surface coating.

In one method of preparing a composite structure, a cellulose ether is added to the slurry or the wet mat or both. In one example, a methyl cellulose having a viscosity grade of 400 cps and 28 wt% methyl substitution (DS less than 1.7, e.g. as shown in Table I) was used. The cellulose ether may be selected to be insoluble at normal processing temperatures for formation a composite structure, which may reduce the viscosity of the slurry or limit migration of the cellulose ether from the surface of a reinforcing fiber. For example, a cellulose ether having a low DS, e.g. less than 1.2, may be insoluble in water at 20 degrees centigrade. By increasing the processing temperature above the clear start temperature of the cellulose ether, such as during a setting and/or drying step, the cellulose ether may enter, at least partially, a dissolution range. The dissolved or partially dissolved cellulose ether may then interact with the surrounding discrete phases, such as fibers, crystals or other particulates, before reprecipitating. For example, the cellulose ether may reprecipitate when the composite structure temperature is no longer within the dissolution region of the cellulose ether or as the water evaporates or is used in an hydration reaction.

In one preferred embodiment, intermingling of the polymer and the gypsum crystals in the matrix is increased by incorporating inorganic particles in the sizing formulation. For example, the inorganic particles, such as accelerant, act as seeds for the precipitation of gypsum crystals, causing crystals to grow directly from the surface coating and improving adhesion with the matrix. Also, inorganic particles may be added that act as a fire-retardant filler, improving the fire-resistance. Preferably, inorganic particles are ground gypsum ball mill accelerator for gypsum-based composite structures that use calcium sulfate hemihydrate to form gypsum crystals.

In an additional embodiment, the surface coatings are used to coat other types and forms of materials in addition to fibers. For example, reinforcing polymer coatings can be used to coat reinforcing aggregate, lightweight filler and wire mesh. Also, the surface coating may be added primarily for its bio-active properties, rather than as primarily a strengthening agent.

In contrast to an unprotected textile, a textile having a thin layer of the bio-active polymer on the fibrous surfaces of the textile resists or prevents mold growth. In one example, a test exposed both a protected surface and an unprotected surface to the same mold-containing emulsion, which was then encouraged to grow by placing both of the samples in a warm, humid environment. After a short period of time, the untreated textile showed evidence of mold growth. In contrast, the sample having fibers coated with the bio-active polymer showed no mold growth for more than 24 days.

In one alternative embodiment, the treatment is applied to a surface of a fabric or paper, such as a fiber-reinforced paper or a re-pulped, recycled paper, such that the treatment does not penetrate the surface or only partially penetrates the surface. Thus, the properties imparted to the fabric or paper have a functional gradient from the exterior surface toward the interior.

In yet another embodiment, particulates of water soluble cellulose ethers, such as hydroxypropyl methyl cellulose and methyl hydroxyethyl cellulose ether, were treated to coat the surface with a layer of a dialdehyde to improve dispersal, delay dissolution and delay an increase in viscosity associated with mixing of the cellulose ether with water. In another example, a glyoxal was used for the same purpose. Both examples caused the desired delay in dissolution, as evidenced by the ability of the surface-treated cellulose ethers ready dispersion in water. Untreated particles immediately underwent gelation upon contact with the surface of the water and resisted dispersion in the water even with mild agitation.

It is believed, without being limited thereto, that the gluturaldehyde is a bio-active material, inhibiting mold growth, while the glyoxal is a food source for mold growth, encouraging the growth of mold. In another example, glyoxal treated cellulose ethers used in preparation of reinforced gypsum wallboard showed enhanced mold growth in tests compared to gypsum wallboard using untreated cellulose ethers. It is believed that this is the first observation of this undesirable characteristic of glyoxal treated cellulose ethers, leading to the present development of gluturaldehyde as a beneficial replacement in cellulose ether particulates in water, while providing anti-fungal and anti-microbial properties to wallboard, for example.

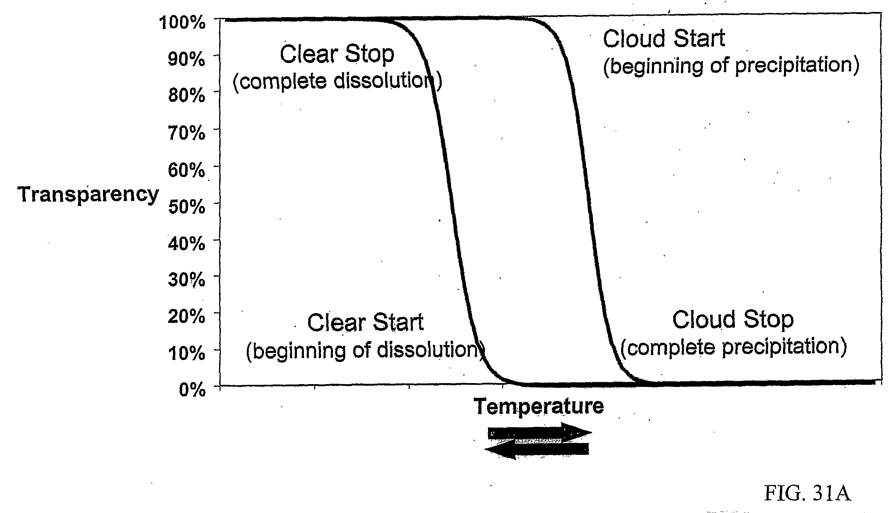

As shown in Table VI, some examples of modified, commercial cellulose ethers exhibit inverse solubility, which means that the solute becomes increasingly insoluble as the temperature is increased above the lowest temperature in a cloud range. Cloud range and clear range in Table VI were determined using a small glass vial equipped with a magnetic stirrer bar and thermometer was charged with 10 g of a 0.5 weight % aqueous solution of modified cellulose ether. The vial was then placed in a 90°C water bath and heated until the modified cellulose ether had completely precipitated. To determine the dissolution temperature, the vial was then transferred to a room temperature water bath. The vial was reheated and cooled three times for three sets of cloud and clear ranges. Thus, for theses inverted solubility cellulose ethers, the clear start and clear stop occur by decreasing the temperature, because the cellulose ethers are soluble at room temperature and insoluble at elevated temperature, as illustrated in Fig. 31A.

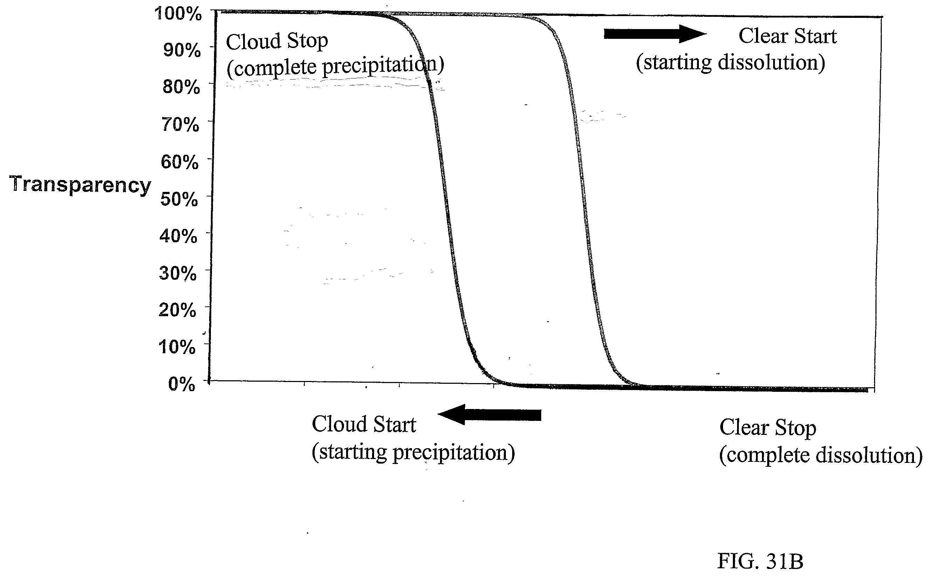

Herein, the cloud range is defined as the range in temperature between the beginning of precipitation and the end of precipitation during heating (i.e. inverse solubility) or during cooling (i.e. additive insoluble in cold water) for a well mixed aqueous solution containing 0.5 wt% of solute. The cloud range may be used to determine the precipitation behavior of aqueous solutions comprising a modified cellulose ether additive during processes that include heating, such as mixing, drying and some setting processes. Also, the modified cellulose ethers show a dissolution hysteresis, meaning that precipitation occurs at a different temperature than dissolution, as shown in Figs. 31A and 31B. Thus, Table VI shows a separate clear range.

As shown in Figs. 31A and 31B, the clear range is defined as the range in temperature between the beginning of dissolution and complete dissolution during cooling (i.e. inverse solubility) or during heating (i.e. additive insoluble in cold water). As is shown in Table VI, the cloud range and clear range of three examples having inverse solubility show significant variation. Furthermore, mixing different cellulose ethers together, it is possible to alter the clear range and cloud range temperatures (e.g. clear start, clear stop, cloud start and cloud stop). The clear range may be used to determine the dissolution behavior of a cellulose ether additive having an inverse solubility in a mixture including water during processes that include cooling, such as forming, dewetting and other setting processes. Alternatively, for additives insoluble in cold water, the clear range may be used to determine the dissolution behavior during processes that include heating, such as setting and drying.

Fig. 31A illustrates the inverse solubility that is typical of commercial cellulose ethers. As a warm aqueous dispersion containing a powdered cellulose ether cools, the onset of dissolution initiates at the clear start temperature and ends at the clear stop temperature, which may cause gelation of a slurry. During the dissolution process, the viscosity increases rapidly. Thus, mixing and forming operations may be impaired if the temperature of the slurry drops below the clear start temperature.

The degree of substitution or molar substitution of one or more of the substituent elements of a cellulose ether is selected such that the cellulose ether is insoluble in water at an initial processing temperature, such as in room temperature water (about 20 degrees) or at less than 30 degrees. In this case, as illustrated by Fig. 31B, the clear start and clear stop temperatures occur during heating of the mixture of cellulose ether and water. Preferably, the degree of substitution is selected such that the clear start is greater than the processing temperature during mixing of the slurry. For example, a clear start temperature of at least 30 degrees centigrade may be preferred to limit the solubility of the cellulose ether during mixing and forming steps such that the onset of substantial dissolution occurs only during setting or drying steps. This allows the slurry to be rapidly mixed and formed without the onset of a substantial increase in viscosity by dissolution of the cellulose ether additive.

In one embodiment, cellulose ether derivatives are synthesized to provide strength enhancement of the structural material at a lower viscosity grade than conventionally available additives. For example, low degree of substitution (DS) methyl cellulose muy be synthesized that provides substantial strengthening at reduced viscosity grade as shown in Fig. 33, which may reduce the slurry viscosity compared to using the higher viscosity grade additive to achieve the same level of strengthening. As previously mentioned, a reduction in slurry viscosity may be beneficial not only for reasons of material processing but also for the composite structures density, microstructure and strength.

The clear range and cloud range of synthesized cellulose ether derivatives are selected to avoid complete dissolution of the cellulose ether (clear stop) until the drying step. For example, an even lower DS may be selected for methyl cellulose, e.g. less than 1.2, more preferably 0.8-1.0, which limits the solubility of the methyl cellulose in cold water, but ensures solubility at a temperature less than the boiling point of water. For example, by designing the process of forming the composite structure to avoid dissolution, a low viscosity slurry may be mixed and formed into a shape, and the cellulose ether enters dissolution only during a step that includes heating of the slurry above a clear start temperature, such as during setting or drying. In another example, an hydroxyethyl cellulose is synthesized with a molar substitution (MS) in a range that prevents dissolution of the hydroxyethyl cellulose in cold water (i.e. a clear start of at least 30 degrees centigrade), more preferably the minimum MS is at least 0.4 or at least an MS that ensures that the HEC is soluble in water at less than the boiling point of water.

In one embodiment, a wallboard core comprises gypsum, a cellulose ether and cellulose fibers. Other fiber reinforcements, such as glass, polymer and carbon fibers, are optionally substituted or added to increase the flexural strength of the wallboard core. In one specific embodiment, short polyester fibers or nylon fibers or both are mixed into the dry ingredients prior to adding the dry ingredients to water. Longer fibers can be introduced during extrusion to provide the core with oriented strengthening along the longitudinal direction of the wallboard. An additive may be added to the slurry that coats the fibers and/or a size may be added to the fibers in a separate sizing process before the fibers are incorporated into the structural material. Preferably, the size or additive or both bond the fibers to the gypsum crystals. For example, the gypsum crystals maybe coated with a film-forming additive that binds the gypsum crystals together. A sized reinforcement according to one embodiment of the present invention forms a bond between the coated gypsum crystals and the surface modified fibers. It is thought, without being limiting in any way, that a percolation network of polymer interconnections synergistically reinforces the structural material, contributing to an increase in the pull-out strength of the fibers from the matrix.

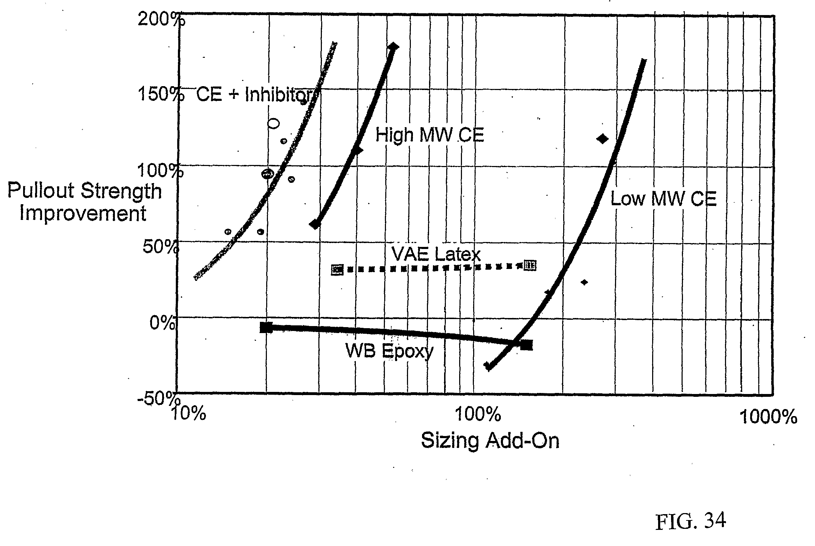

For example, Fig. 34 shows a graph of the pullout strength improvement of several polymer additives versus the sizing add-on. High molecular weight cellulose ether and cellulose ether with an inhibitor display exceptional pullout strength improvement at very low add-on compared to other polymer systems.

A sizing solution is prepared comprising an alcohol, water and a polymer additive, such as a cellulose ether. Alternatively, the sizing solution may be prepared using acetone as a replacement for the alcohol or in addition to the alcohol. For example, the alcohol maybe any alcohol that is capable of dispersing two different cellulose ether components, has a vapor pressure greater than water and has limited or no cellulose ether solubility at room temperature. Preferably, the alcohol is isopropanol. Preferably, the solvent mixture is first mixed with a small amount of water prior to the addition of a cellulose ether, preventing separation or coagulation of the sizing solution, which might occur otherwise. By a small amount of water, it is meant an amount of water in the range that swells cellulose ether particles at the processing temperature of the size but avoids dissolution. The solids content and viscosity of the sizing dispersion may be controlled by adjusting the concentration of water and the cellulose ether. Some specific examples are listed in the examples section. It should be understood that other components may be added to the sizing dispersion to modify the properties of the dispersion or the size.

In one embodiment, the treatment is applied to a surface of a fabric or paper, such as a fiber-reinforced paper or a re-pulped, recycled paper, such that the treatment does not penetrate the surface or only partially penetrates the surface. Thus, the properties imparted to the fabric or paper have a functional gradient from the exterior surface toward the interior.

In one embodiment, co-polymers are polymerized from a mixture of fluoro-aliphatic (meth)acrylate monomers, hydroxyalkyl (meth)acrylate monomers, stearyl (meth)acrylate monomers and chlorinated monomers. Herein, the co-polymers of this embodiment are referred to as fluoro-polymers; however, these co-polymers may actually contain little or no fluorinated groups, depending on the desired application. In one example, the fluoro-polymers are applied to fibrous surfaces using an anhydride functional polymer and a catalyst. In this example the anhydride group chemically binds to the functional groups of a fiber and crosslinks the hydroxyl groups, for example, binding to hydroxyl groups of water and oil repellant polymers imparts an impermeable surface to the fibers by integrating the functionally designed polymer on the surface. In another embodiment, a cross-linking agent, such as an organic titanate, diisocyanate, metal salt or another reactive, functionalized polymer or pre-polymer, is used in place of an anhydride functional polymer.

In another embodiment, additional monomers with functional groups that are selected to react with a cross-linking agents are included in the fluoro-polymer synthesis. In one example, water and oil repellant and/or bio-active co-polymers contain monomers that react with metals, and a metal salt is used to crosslink the polymer. For example, additional monomers may contain other functional groups, such as, but not limited to, carboxyl, carboxylate, sulfate, sulfonate, phosphate and phosphonate groups.

In an alternative embodiment, a functional co-polymer includes a reactive group that chemically bonds to a particulate or fibrous surface without crosslinking the polymer. For example, graft, block and random co-polymers of stearyl (meth)acrylate and maleic anhydride may be used with or without a catalyst to increase the rate of chemical bonding between the functional co-polymers and the fibrous surfaces.

In one method of treating fibrous surfaces, the fibers are incorporated into a fabric, such as a fiber mat or textile. Then, the fabric is treated with the fluorpolymer either before or after incorporation into the fabric. Next, the fabric is exposed to a solution or emulsion that binds one or more functional groups to the fiber surfaces, for example, by immersing the fabric in an emulsion or solution including a monomer, polymer or co-polymer and a metal salt. The treated fabric is then dried, cured and washed to remove undesired, residual components. Drying and curing is performed either under the same conditions or under differing conditions. For example, the temperature for curing may be either greater or less than the temperature used for drying.

In an alternative method, a polymer is synthesized in situ on a fibrous surface by applying a solution or an emulsion including the desired monomers directly on the fibrous surface. A free radical initiator is applied either with the desired monomers or in a separate step, and the fibrous surfaces are exposed to heat or UV light, for example, after drying the fibrous surfaces. Then, the fibers, mat or textile is washed to remove any

In one embodiment, bio-active functional monomers are included in the fluoro-polymer synthesis and impart mold resistance, such as anti-microbial and/or biocidal properties. Alternatively, crosslinking of a bio-active functional polymer, co-polymer or oligomer is achieved by including the bio-active component during application of a metal salt and/or free radical initiators. In another embodiment, both bio-active functionality and water and oil repellency are imparted in the same process.

In another embodiment, bio-active functional monomers, oligomers, copolymers or polymers are polymerized (or further polymerized or crosslinked) in situ around fibrous or particulate surfaces. In one example, another reactive polymer and/or a crosslinking agent is mixed together with the bio-active functional component, binding the bio-active functional component to the fibrous surface. In an alternative example, the bio-active functional components are functional groups on monomers, oligomers, co-polymers and polymers, which are capable of binding to particulate and fibrous surfaces. For example, the monomers, oligomers, co-polymers and polymers bind to functional groups that are bound to the fibrous or particulate surface. Some examples of bio-active functional monomers, oligomers, co-polymers and polymers include, but are not limited to, quarternized amine functional groups, for example, having from 4 to 10 carbons in the alkyl chain. In one specific example, the fungicidal and bactericidal properties have been shown to kill mold after the mold contacts a bio-active coating on the surface of a textile.

In one embodiment, fibers are first treated to provide a desired functional group on the surface of the fiber. Then, the fibers are incorporated into a mat or textile. For example, the fibers may be woven into a fabric or otherwise incorporated into the form of a mat or paper. The fibers may be combined with fibers having no coating or having a coating incorporating a different functional group, providing the paper, mat or fabric with mold resistance and/or other desirable properties, based on the properties of treated fibrous surfaces.

In one embodiment, a facing paper is treated on one surface to impart mold resistance and water repellency. The opposite surface is untreated or is treated in such a way as to provide the opposite surface excellent adhesion with a slurry that forms a wallboard core. Alternatively, the facing paper may be made of multiple plies. For example, an outer ply may be treated to provide bio-active and water repellency to a wallboard, while the innermost ply may be treated to adhere to the core of the wallboard. In another example, the outer ply may be treated for water repellency and one or more inner plies may be treated to impart bio-active properties. In yet another embodiment, the outermost ply on an exposed surface is treated to prepare the surface for plastering, stucco, painting, tarring or decorative papering. For example, the outermost ply may be treated to provide a self-stick surface for a later-applied, decorative wallpaper.

In one embodiment, a film forming polymer or mixture of polymers, at least one of which is an at least partially water-soluble or water-swellable strength enhancer is used as a sizing for fibers or is applied to a mat or a fabric. The composition may optionally include a bio-active component and/or a fire retardant to increase fire-resistance. The polymer is preferably cross-linked or treated to prevent complete dissolution of the polymer and subsequent migration away from the fiber during addition to water and subsequent drying. For example, a water-soluble, film-forming polymer utilized in a sizing composition preferably has a strong interaction with the cementitious matrix. Preferred strength enhancing, film forming polymers of the invention include, but are not limited in any way, to carboxymethyl cellulose (CMC) for Portland cement compositions and high molecular weight cellulose ethers other than CMC or high molecular weight polyvinyl pyrrolidone (PVP) together with an appropriate cross-linker such as high molecular weight polystyrene sulfonate (PSS) for gypsum compositions. Fibers may be of any denier and length, ranging from continuous, bundled strands, such as those often used in woven meshes, to relatively short, monofilament fibers, such as those used for discrete fiber reinforcement and in some non-woven mats. Herein denier is used as a measure of the fiber mass per unit length in milligrams per inch (mg/inch), which is an indirect measure of the fiber cross section. Alternatively, a polymer composition may be used as a binder in non-woven fibrous mats, the mats being used for reinforcing composite cementitious materials.

Reinforced composite cementitious materials may be used as, for example, fiber-reinforced cement for cast products, fiber-reinforced gypsum, such as glass-fiber-reinforced gypsum (GFG), cement boards, and patching and joint compounds. In one embodiment glass-fiber-reinforced concrete (GFRC) is prepared having glass fibers treated by a CMC. Also, fabrics and paper are used with cement as a reinforcement, such as in joint tapes, patching kits, and molded articles. The fibers and fabrics, themselves, can be made by any conventional process or may be specifically designed with functional groups on the fibrous surfaces that react with the polymer additives or sizing. In one embodiment, conventional sizing equipment is configured to apply the polymer additive and to dry and crosslink the polymers. In one embodiment, the treated fibers are incorporated into the composites according to conventional methods by merely replacing existing fiber or fabric inclusions.

It is thought, without being limiting in any way, that in one embodiment a polymer coating forms an interfacial layer of polymer-enriched slurry adjacent to the fiber. As the set cement dries, the polymer re-forms a film encapsulating the fiber and local cement matrix surrounding it. The polymer binds the fiber to the matrix and reinforces the region surrounding the fiber. This results in an effective transfer of stress between the cement matrix, reinforcing polymer film, and reinforcing fiber when the composite is stressed. In this embodiment, sizing compositions usually have between 2% and 20% solids content and add-on 3% to 25% size to the original fiber or fabric weight. Strength enhancement in sized-fiber-reinforced composites increases with higher amounts of polymer add-on.

A fiber sizing may be selected from one of a starch, an acrylic polymers (commonly polymerized from an acrylic acid, an acrylic salt, an acrylic ester, an acrylamide, a methacrylic acid, or an acrylonitrile monomer), a polyvinyl acetate, an alginate, and a natural gum. Also, emulsions or dispersions of polyesters, polyurethanes, and styrene copolymers may be used. Wallboard reinforced by fibers coated solely with these formulations may show some improvement in mechanical strength if the treated fibers are mixed into the slurry gently, as a final step. Also, excess water content must be minimized and drying carried out quickly, as low molecular weight and non-crosslinked additives dissolve in the water and tend to migrate away from the fibers and toward the surface of the wallboard over time during drying. Also, without further treatment these additives often segregate to the surface and serve as nutrients for undesirable microbial, mold and fungus growth. Iodine staining techniques were used to observe this propensity for migration, for example, among latex additives. Preferably, the sizing polymer has a strong interaction and bond with the hardening cement without retarding the set and is selected to be compatible with a cellulose ether additive dispersed throughout the matrix phase.

The preferred polymer for enhancing the strength of a cementitious composite depends on the type of cement to be reinforced and the type of fiber or particles to be used as reinforcements. Carboxymethyl cellulose (CMC) improves the dried strength of Portland cement. However, CMC degrades the mechanical strength of gypsum products. It is thought, without being limiting in any way, that the chelating effect of the carboxyl groups on the growing gypsum crystal surface retards the set, which is at least partially responsible for decreasing the strength of the gypsum matrix.

Other cellulose ethers improve the strength of gypsum. Also, the degree of improvement tends to increase with increasing molecular weight and decreasing degree of substitution of the cellulose ether, at least for additions of less than 6 wt% of cellulose ether to calcium sulfate hemihydrate. For example, high molecular weight hydroxyethyl methyl cellulose (HEMC), hydroxypropyl methyl cellulose (HPMC), and methyl cellulose (MC) enhance the strength of gypsum composites while their low molecular weight counterparts have little strengthening effect or may actually decrease composite strength.

It is thought, without being limiting in any way, that the hydrogen bonding of cellulose ethers and the ionic crosslinking, such as that of PVP and PSS, result in strong adhesion to the cement matrix. Cohesive forces retain the surface treatment on the surface of the fibers during mixing, setting and drying of the composite slurry. Preferably, the surface treatment is somewhat soluble or swellable in water, resulting in an interfacial layer of polymer that adheres to the fiber and partially penetrates the crystallized particles or cement or gypsum.

Preferably, high molecular weight sizing has lower solids content than conventional sizes; however, the add-on is comparable, because the molecules of the high molecular weight sizing are larger. Furthermore, cross-linking the surface coating creates a durable coating for fibers or fabrics that is not easily removed during the mixing, setting, or drying steps of fiber-cement production. Hydrophilic polymer systems are converted to swellable hydrogels upon cross-linking. It is believed, without being limiting in any way, that these swollen coatings allow cement crystal growth into fiber size while resisting erosion, dissolution, and migration. Fibers with cross-linked surface coatings are used in conventional high-speed mixing procedures such as those found in wallboard production. In one embodiment, the fibers are pre-mixed with dry components of the cement. Alternatively, the fibers are dispersed in water prior to cement mixing or are combined together with both the water and cement and/or calcium sulfate hemihydrate.

Several cross-linking methods are utilized to decrease the solubility of surface coatings. In one embodiment, a sizing is at least partially insolubilized by exposing the sizing to higher temperatures than normal during drying, causing crosslinking of the sizing. Sizing components such as starch and starch derivatives, PVA, CMC, and acrylate polymers, as previously listed above, crosslink at elevated temperatures. Conventional sizing avoids such temperatures to prevent the sizing from becoming insoluble, for example. In another embodiment, radiation, such as ultra-violet (UV) light or gamma rays, can also be used to cross-link some sizing components, such as PVP. In another embodiment, water-insoluble polymers are incorporated into a film forming polymer to physically cross-link the surface treatment. For example, a reactive polymer system, a system of reactive pre-polymers, or a latex, preferably with an internal cross-linker, may be mixed with hydrophilic polymers and reacted to lower the solubility of the resulting film on the additive.

In an alternative embodiment, a film forming polymer is chemically cross-linked to form a hydrogel. For example, cross-linking agents for cellulose ethers include organic titanates, organic zirconates, and dialdehydes, such as glyoxal and gluturaldehyde. Borax and sodium trimetaphosphate for preferred for starches, and calcium chloride with peroxide, PSS and UV light are preferred for PVP. In one preferred embodiment, the cross-linking system is relatively stable and is preferably enhanced during or after drying by the elevated temperature, which allows swelling during setting but avoids migration of the polymer during drying and weakening of the bond if a cementitious building material becomes wet, for example, by flooding or exposure to high humidity.

In one embodiment, HPMC is crosslinked by a chelated organic titanate which is activated at temperatures above 100 degrees centigrade. In another embodiment, a cross-linking agent is applied to only the outermost region of the surface coating, forming a surface cross-linked polymer coating with delayed solubility. In another preferred embodiment, a surface coating polymerizes in situ on a fiber in combination with a crosslinking agent. For example, the free radical polymerization of 1-vinyl 2-pyrrolidone with 1,6-hexanediol diacrylate is used to form a surface coating on a fiber for use in cementitious composite materials.

In another embodiment, a coupling agent, such as a silane coupling agent, is included with the surface coating formulation to improve the bond between the size and the fiber, promoting adhesion. Alternatively, the coupling agent is applied to the fibers or fabric as a primer before application of the surface treatment. In a preferred embodiment, a cross-linking agent, such as an organic titanate, act as both the crosslinking agent and the coupling agent, chemically bonding the surface treatment to the fiber, for example, via hydroxyl functional groups of the fibrous surface of a fabric. In one embodiment, the layer of the surface treatment adjacent to the fibrous surface is cross-linked by the coupling/crosslinking agent, but the exterior of the surface treatment is either not cross-linked or is less highly cross-linked than the surface treatment adjacent to the fibrous surface.

Preferred fibers to be sized with the inventive composition include monofilament, bundled, and spun strands of various materials, including inorganic fibers, such as glass, mineral wool, and steel, synthetic fibers, such as polypropylene, polyester, and nylon, and natural fibers, such as cotton, hemp, and wood fibers. In one embodiment, bundled and chopped spun strands are designed to separate when mixed with the slurry, allowing the treated fibers to be embedded the matrix material. In an alternative preferred embodiment, the sizing composition and slurry mixing conditions are controlled to maintain an intact surface coating around a fiber bundle or strand, while allowing for some separation of the individual fibers. This provides a larger effective surface area of the fibers for adhesion to the size and cement matrix. The surface coating acts as a binder, allowing discrete bundles or spun strands of fibers that would normally separate into individual filaments when mixed in a slurry.

In one embodiment, the fiber is immersed in the surface coating material, dried, woven if desired, and cut to the desired dimensions in an automated process. For example, bundled fiberglass strands sized with a cross-linking CMC composition may be woven or arranged into a mesh and embedded as reinforcement in cement boards. In an alternative embodiment, chopped or other types of discrete fibers are sized by spraying them with a sizing solution while they are suspended in air. In yet another embodiment, individual fibers are coated by a surface coating in a solvent or emulsion and are agglomerated into a mat of fibers. Each of the coating processes may be repeated any number of times to achieve a desired thickness of add-on.

In one preferred embodiment, a fiber or fibers is coated by a cellulose ether at an elevated temperature, at which the cellulose either particles have low solubility. Powdered CE s are dispersed in hot water without hydrating or dissolving them, maintaining a low viscosity even at high concentrations of CE s. As the solution cools, as when exposed to a cool fiber or fabric or to air, the CE hydrates, forming a semi-solid gel. In an alternative embodiment, a surface-treated, delayed-solubility CE is used. Preferably, the surface-treated, delayed-solubility cellulose ether is coated with an aldehyde, more preferably a gluturaldehyde. For example, fiber immersion sizing (single or double) with a high molecular weight, low DS cellulose ether may achieve an add-on weight of greater than 25%. More preferably, the add-on weight is limited to a range of 5-15% by adjusting the solids content of the solution, which provides substantial improvement in the pull-out strength of the fibers without using excess cellulose ether, reducing cost.

In one embodiment, fabrics or papers are sized by immersing the fabric or paper sheet in the surface treatment. In another embodiment, a surface treatment is sprayed onto one or both sides a fabric or paper layer.

In one embodiment, a fiber mat is formed by evenly dispersing chopped fibers in solution for surface treating the fibers. Then, the fibers are evenly spread, and the dispersion is drained over a wire mesh. Next, the fiber mat is dried, or, alternatively, the mat is first compressed to force liquid out of the mesh. For example, the fibers may be glass fibers, the surface coating may be PVP, and/or the PVP may be crosslinked by PSS or UV light before or after the mat is dried. In an alternative embodiment, pressure or vacuum is applied before the wet fiber mat is dried, degassing the fibers and improving penetration of the surface coating.

In one preferred embodiment, intermingling of the polymer and the cement or gypsum crystals in the matrix is increased by incorporating inorganic particles in the sizing formulation. For example, the inorganic particles, such as accelerant, act as seeds for the precipitation of cement crystals, causing cement crystals to grow directly from are one of ground cement and limestone in cement compositions, and ground gypsum ball mill accelerator for gypsum compositions.

In an additional embodiment, the surface coatings are used to coat other types and forms of materials in addition to fibers. For example, reinforcing polymer coatings can be used to coat reinforcing aggregate, lightweight filler and wire mesh. Also, the surface coating may be added primarily for its bio-active properties, rather than primarily as a strengthening agent, or as a multi-functional coating.

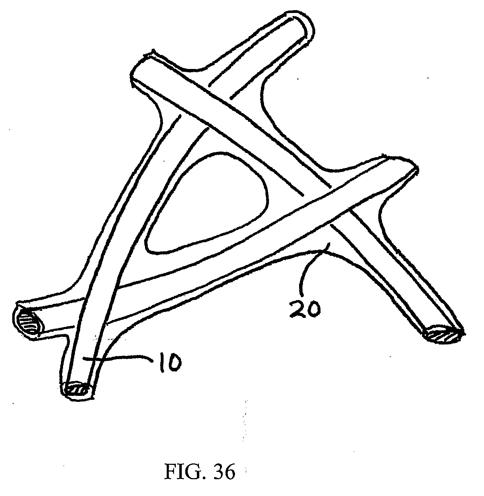

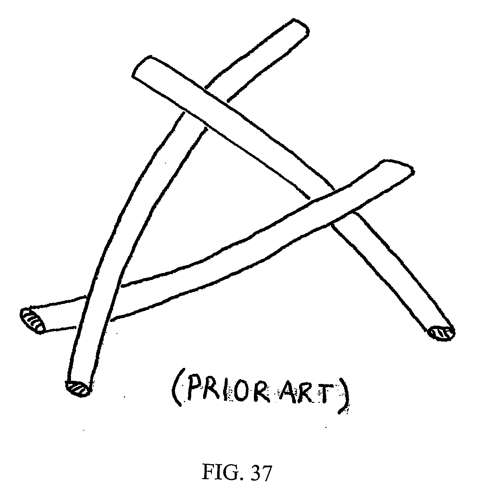

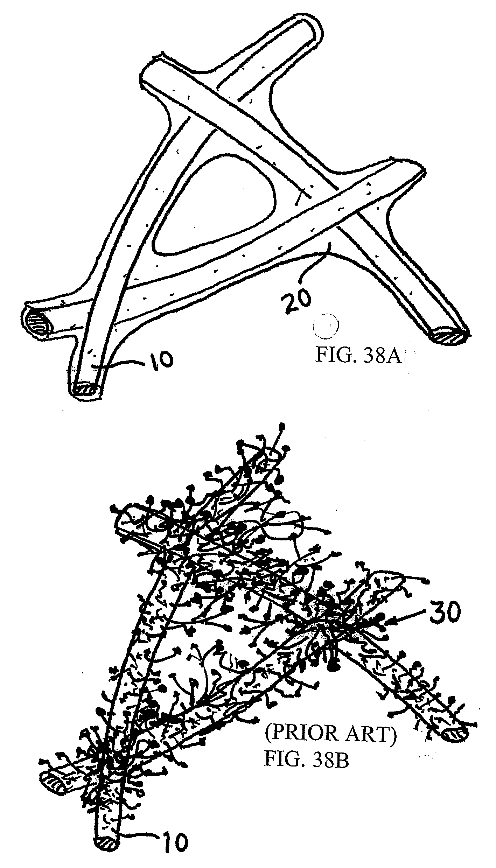

Fig. 36 shows a sketch of one embodiment of the invention showing a textile coated with a bio-active polymer. In contrast to the conventional textile, as shown in Fig. 37, the textile in Fig. 1 has a thin layer of the bio-active polymer on the fibrous surfaces of the textile. Figs. 38A and 38B show a sketch of the results of an experiment that exposed both of the surfaces to the same mold-containing emulsion, which was then encouraged to grow by placing both of the samples in a warm, humid environment. After a short period of time, the untreated textile, for example as sketched in Fig. 38B, showed abundant evidence of mold growth. In contrast, the sample having fibers coated with the bio-active polymer showed little or no mold growth.

SPECIFIC EXAMPLES

Control Sample. One hundred grams of β-calcium sulfate hemihydrate was dry mixed with 0.13g ground gypsum accelerator. The β-calcium sulfate hemihydrate was then added to 150 g of room-temperature tap water in a 500 mL Waring blender. The slurry was blended at low speed for 15 seconds. The slurry was then immediately poured into an approximately 7" x 2" x ½" mold. After about 20 minutes, the sample was removed from the mold and placed in a convection oven at 45 °C in which it was dried for at least 36 hrs. After removal from the oven, the sample was cut to 5" x 2" and massed and dimensioned. This data was used to calculate sample density. The flexural strength was attained using a three-point-bend test similar to the ASTM C473 flexural strength test (method B) for gypsum wallboard. An Instron mechanical testing system with data acquisition software was used to determine mechanical behavior. The flexural failure stress was calculated from the failure load, testing configuration, and sample geometry. The two half samples remaining from the bending test were tested for resistance to nail pull. A nail pull test based on ASTM C473 nail pull test (method B) was used. The resulting sample had a density of 0.63 g/cc, a flexural strength of 242 psi, and a nail pull resistance of 46 lbs.

High Viscosity HPMC Enhancing Agent; Paperless Sample. One hundred grams of β-calcium sulfate hemihydrate was dry mixed with 0.13 g ground gypsum accelerator and 1 g HPMC (100 kcps purchased from Aldrich Chemical Co.). The dry mixture was then added to 150 g of tap water in a 500 mL Waring blender. The slurry was blended at low speed for 15 seconds. The slurry was then immediately poured into a 7" x 2" x ½" mold where it set for about 20 minutes before being removed. The sample was placed in a convection oven at 45 °C for at least 36 hrs. After removal from the oven, the sample was cut to 5" long, massed, and dimensioned. The density was calculated and the sample was tested for flexural strength and nail pull resistance on an Instron mechanical testing system. The sample had a density of 0.46 g/cc, a flexural strength of 299 psi, and a nail pull resistance of 43 lbs.

High Viscosity, RETARDED HEMC Enhancing Agent; Paperless Sample. One hundred grams of β-calcium sulfate hemihydrate was dry mixed with 0.13g ground gypsum and 1g of retarded HEMC (15-20, 5 kcps, purchased from Aldrich Chemical Co.). The dry mixture was then added to 150 g of tap water in a 500 mL Waring blender. The slurry was blended at low speed for 15 seconds. The slurry was then immediately poured into a 7" x 2" x ½" mold and, after 20 minutes, removed. The sample was placed in a convection oven at 45 °C for at least 36 hrs. After removal from the oven, the sample was cut to 5" long, massed, and dimensioned. The density was calculated and the sample was tested for flexural strength and nail pull resistance on an Instron mechanical testing system. The resulting sample had a density of 0.63 g/cc, a flexural strength of 545 psi, and a nail pull resistance of 78 lbs.

High Viscosity HPMC Enhancing Agent; Lightweight Wallboard. A papered sample was prepared by mixing 1 kg of β-calcium sulfate hemihydrate with 1.3 g ground gypsum and 10 g of HPMC (22 kcps, purchased from Aldrich Chemical Co.). To a 5 liter Waring blending container was added 1.5 kg of room-temperature tap water, 20 drops of Daxad 19LKN (dispersant) from Dow, and 10 drops of a 40% solution of diethylenetriaminepentaacetic acid sodium salt (retarder). The powder was added to the water and blended on high for 15 seconds. The slurry was then poured into an approximately 12" x 12" x ½" mold lined with an envelope made of standard decorative wallboard facing paper. The sample was removed from the mold after 15 minutes and placed in a 45 °C convection oven for 48 hrs. The sample was then removed and cut into 5" x 2" and 9" x 2" specimens, with the long dimension in the direction of the fibers of the paper. These specimens were then massed and measured. The density was calculated and the specimens were tested for flexural strength in the fiber direction and nail pull resistance on an Instron mechanical testing system. The sample had a density of 0.47 g/cc, a flexural strength of 822 psi, and a nail pull resistance of 75 lbs.

MC with 1:1 ratio of water:β-calcium sulfate hemihydrate ratio by weight. First, 100 parts of β-calcium sulfate hemihydrate was mixed with 9 parts of methyl cellulose (Aldrich, MW 17,000, viscosity grade 25 cps). The mixture was then added to 100 parts of water at room temperature and blended at a high shear setting for approximately 15 seconds. The resulting slurry was highly viscous, failing to pour into the form. A spatula was used to transfer, in small portions, enough slurry to be pressed into a form measuring 2 inches by 5 inches by 0.5 inches. After setting, the mixture was removed from the mold and cured at 45 degrees centigrade for 2 days. The resulting sample has a density of 0.72 g/cc, a nail pull index of 1.87 (121 lbs.) and flexural strength of 881 lb/in$^2$.

MC with 1:1 ratio of water: β-calcium sulfate hemihydrate ratio by weight. First, 100 parts of β-calcium sulfate hemihydrate was mixed with 9 parts of methyl cellulose (Aldrich, MW 14,000, viscosity grade 15 cps). The mixture was then added to 100 parts of water and blended at high shear setting for approximately 15 seconds. The resulting slurry was highly viscous, failing to pour into the form. A spatula was used to transfer, in small portions, enough slurry to be pressed into a form measuring 2 inches by 5 inches by 0.5 inches. After setting, the mixture was removed from the mold and cured at 45 degrees centigrade for 2 days. The resulting sample had a density of 0.74 g/cc, a nail pull index of 1.75

24

(119 lbs.) and flexural strength of 864 lb/in$^2$.

<u>MC with 1:1 ratio of water: β-calcium sulfate hemihydrate ratio by weight.</u> First, 100 parts of β-calcium sulfate hemihydrate was mixed with 9 parts of methyl cellulose (Aldrich, MW 40,000, viscosity grade 400 cps). The mixture was then added to 100 parts of water and blended at a high shear setting. The viscosity was exceedingly high and mixing was not possible for the desired 15 second duration. The powdered mixture was not fully incorporated into the slurry. The mixture prematurely set and could not be transferred to a form.

<u>MC with 1:1 ratio of water:β-calcium sulfate hemihydrate ratio by weight.</u> A subsequent specimen was prepared by reducing the amount of methyl cellulose by mixing 100 parts of β-calcium sulfate hemihydrate with 5 parts methyl cellulose instead of 9 parts methyl cellulose. The mixture was then added to 100 parts of water and blended at high shear setting for approximately 15 seconds. The resulting slurry was extremely viscous, beginning to set prematurely during mixing and failing to pour into the form. A spatula was used to transfer, in small portions, enough slurry to be pressed into a form measuring 2 inches by 5 inches by 0.5 inches. After setting, the mixture was removed from the mold and cured at 45 degrees centigrade for 2 days. The resulting sample had a density of 0.73 g/cc, a nail pull index of 1.54 (103 lbs.) and a flexural strength of 766 lbs./in$^2$.

<u>Low Viscosity Grade HPMC.</u> A ratio of 1:1 of water:β-calcium sulfate hemihydrate ratio by weight was prepared. First, 100 parts of β-calcium sulfate hemihydrate was mixed with 9 parts of HPMC (Aldrich, MW 10,000, viscosity grade 5 cps). The mixture was then added to 100 parts of water and blended at high shear setting for approximately 15 seconds. The resulting slurry poured directly into a form measuring 2 inches by 5 inches by 0.5 inches. After setting, the mixture was removed from the mold and cured at 45 degrees centigrade for 2 days. The resulting sample had a density of 0.63 g/cc, a nail pull index of 1.26 (58 lbs.) and a flexural strength of 675 lb/in$^2$.

<u>Low Viscosity Grade HPMC.</u> A ratio of 1:1 of water:β-calcium sulfate hemihydrate ratio by weight was prepared. First, 100 parts of β-calcium sulfate hemihydrate was mixed with 9 parts of HPMC (Aldrich, MW 10,000, viscosity grade 6 cps). The mixture was then added to 100 parts of water and blended at high shear setting for approximately 15 seconds. The resulting slurry poured directly into a form measuring 2 inches by 5 inches by 0.5 inches. After setting, the mixture was removed from the mold and cured at 45 degrees centigrade for 2 days. The resulting sample had a density of 0.59 g/cc, a nail pull index of 1.18 (47 lbs.) and a flexural strength of 535 lb/in$^2$.

<u>Moderate Range Viscosity Grade HPMC.</u> A water:β-calcium sulfate hemihydrate was mixed with 9 parts of HPMC (Aldrich, MW 12,000, viscosity grade 80-120 cps). The mixture was then added to 100 parts of water and blended at high shear setting for approximately 15 seconds. The resulting slurry was exceedingly viscous, prematurely setting during mixing and failing to pour into the form. A spatula was used to transfer, in small portions, enough slurry to fill a form measuring 2 inches by 5 inches by 0.5 inches. After setting, the mixture was removed from the mold and cured at 45 degrees centigrade for 2 days. The resulting sample had a density of 0.75 g/cc, a nail pull index of 1.54 (121 lbs.) and a flexural strength of 652 lb/in$^2$.

<u>High viscosity, surface-treated HEMC.</u> A paperless sample was prepared by mixing 1.3 kg of β-calcium sulfate hemihydrate with 1.69 g ball mill ground gypsum (accelerator) and 26 g of retarded HEMC (viscosity grade of 15-20.5 kcps at 2 wt%, purchased from Aldrich Chemical Co.). The liquid components, 1.68 kg room temperature tap water, 26 drops Daxad 19LKN (dispersant) from Dow, and 13 drops 40% solution of diethylenetriaminepentacetic acid sodium salt (retarder), were added to a 5 liter Waring blender. The dry ingredients were added to the water and blended on high for 15 seconds, forming a slurry. The slurry was then poured into an approximately 12" x 12" x ½" glass mold with a thin teflon sheet on one face to facilitate removal. The sample was removed from the mold after 15 minutes and placed in a 45 degrees centigrade convection oven for 48 hrs. The sample was then removed and cut into 5" x 2" specimens. These specimens were then weighed and measured. The densities of nine specimens were calculated and the specimens were tested for flexural strength and nail pull resistance on an Instron Mechanical testing system using the methods previously described. The board had an average density of 0.64 g/cc, a flexural strength of 809 psi, and a nail pull resistance of 102 lbs., passing ASTM flexural strength and nail pull requirements.

<u>Ultra-Lightweight Wallboard/Insulation Board.</u> An ultra-lightweight wallboard cone was prepared by adding, to a 500 mL blending container, 200 mL of room temperature tap water. 40 g calcium sulfate hemi-hydrate (stucco) was dry mixed together with 20 g of a high viscosity, surface-treated (delayed solubility) HPMC, 0.8 g of trisodium trimetaphosphate, and 0.4 g of ground gypsum ball mill accelerator. The dry mixture was added to the water and the slurry was blended at low speed for 30 seconds. The slurry was deposited in an envelope of standard, decorative drywall paper in a 7" x 2" x 0.5" mold. The sample was dried at 45 °C for 48 hours. The sample was then cut, dimensioned, massed and mechanically tested. The resulting board had a density of only 0.33 g/cc (850 lbs/MSF) and an average nail pull resistance of 118 lbs.

<u>Ultra-Lightweight Wallboard/ Insulation Board.</u> An ultra-lightweight wallboard cone was prepared by adding, to a 500 mL blending container, 200 mL of room temperature tap water. 65g of beta-calcium sulfate-hemi-hydrate (stucco) was dry mixed together with 6.5 g of a high viscosity, surface-treated (delayed solubility) HPMC, 0.006G of trisodium trimetaphosphate, 3.3 g of 1" chopped strand glass fibers and 0.06 g of f\ground gypsum ball mill accelerator. The dry mixture was added to the water and the slurry was blended at a low speed for 30 seconds. The slurry was then deposited in an envelope of standard, decorative drywall paper in a 7" x 2" x 0.5" mold. The sample was dried at 45 ° C for 48 hours. The sample was then cut, dimensioned, massed and mechanically tested. The resulting board had a density of 0.34 g/cc (8801bs/MSF) and an average nail pull resistance of only 84 lbs.

High viscosity, surface-treated HEMC. A paperless sample was prepared by mixing 100 g of β-calcium sulfate hemihydrate with 0.13 g ball mill ground gypsum (accelerator) and 1 g of retarded HEMC (viscosity grade of 15-20.5 kcps at 2 wt%, purchased from Aldrich Chemical Co.). The mixture was then added to 150 g of water and blended on high for 15 seconds, forming a slurry. The slurry was then poured into an approximately 7" x 2" x ½" mold. The sample was removed from the mold after 15 minutes and placed in a 45 degrees centigrade convection oven for 48 hrs. The sample was then removed and cut to 5" x 2". The density of sample was calculated and it was tested for flexural strength and nail pull resistance on an Instron mechanical testing system using the methods previously described. The wallboard specimen had an average density of 0.63 g/cc, a flexural strength of 545 psi, and a nail pull resistance of 78 lbs., passing the ASTM nail pull requirement.

High-viscosity, surface-treated HEMC. A paperless wallboard is prepared using the following procedure. First, 150 g of ß-calcium sulfate hemihydrate is dry mixed with 0.2 g ground gypsum and 3 g of surface-treated (retarded dissolution) HEMC (15-20.5 kcps, purchased from Aldrich Chemical Co.). The dry ingredients are added to 162 g of tap water in a 500mL Waring blender, forming a slurry. The slurry is blended at low speed for 15 seconds. The slurry is then immediately poured into a 7" x 2" x ½" mold and, after 20 minutes, removed. The wallboard specimen is placed in a convection oven at 45 degrees centigrade for at least 36 hrs for drying. After removal from the oven, the sample is trimmed to 5" long, weighed and dimensioned. A specimen prepared according to this procedure had a density of 0.80 g/cc, a flexural strength of 975 psi, and a nail pull resistance of 180 lbs., exceeding ASTM standards for flexural strength and nail pull resistance for ½-inch wallboard.

High viscosity, surface-treated HEMC. A paperless wallboard is prepared using the following procedure. First, 150 grams of ß-calcium sulfate hemihydrate is dry mixed with 0.2 g ground gypsum and 3 g of surface-treated HEMC (15-20.5 kcps, purchased from Aldrich Chemical Co.). The dry ingredients are then added to 150 g of tap water in a 500mL Waring blender, forming a slurry. The slurry is blended at low speed for 15 seconds. The slurry is then immediately poured into a 7" x 2" x ½" mold and, after 20 minutes, removed. The wallboard specimen is placed in a convection oven at 45 degrees centigrade for at least 36 hrs for drying. After removal from the oven, the specimen is cut to 5" long, weighed and dimensioned. A specimen prepared according to the foregoing procedure had a density of 0. 85 g/cc, a flexural strength of 989 psi, and a nail pull resistance of 203 lbs., exceeding the ASTM standards for flexural strength and nail pull resistance for ½-inch wallboard.

Quarternization of Poly(vinylpyridine). An amount of 6 g of poly(4-vinylpyridine) MW 160,000 was dissolved in 80 g of nitromethane. The temperature of the solution was brought to 96° C. An amount of 10 g of hexyl bromide was added dropwise to the solution which was then left to stir for 4 hr. During the mixing, the color of the yellow solution became darker. After 4 hr, the solution was precipitated in 400 mL of toluene. The fibrous solid was filtered and washed with 100 mL of acetone. The quaternized polymer was dried in an oven at 180° C for 30 minutes.

Use of Quarternized Poly(vinylpyridine). An amount of 100 parts of β-calcium sulfate hemihydrate was mixed with 0.5 parts of quaternized poly(vinylpyridine), 0.13 parts accelerator and 0.2 parts of dispersant. The mixture was then added to 150 parts of water containing a small percentage of retarder and blended at a high shear setting for approximately 20 seconds. The resulting slurry was poured directly from the laboratory blender to a mold measuring 12 in x 14 in x 0.5 in. After setting, the sample was removed from the mold and cured at 45 °C for 2 days.

Poly(vinylpyridine) Bio-Active Coating. A fibrous polyester material was coated with an anti-fungal polymer layer. A solution was made of the following: 6 g of 4-vinylpyridine, 0.12 g of divinylbenzene, 0.12 g of benzoyl peroxide, and 6 g of methanol. One each of a 2" x 2" polyester pad and a glass mat were dipped in the solution and then were exposed to ultraviolet light for about 3 hours (plus or minus 10 minutes). Then, the pad and mat were immersed in a solution of 10 milli-liters of nitromethane/hexyl bromide (10:1, vol/vol) and placed in an oven at 80o C for 4 h. After heating, the pad and mat were cooled to room temperature.

A mold solution was prepared. Two Petri dishes of potato dextrose agar were stored in a humid environment. After 3 days, a dense layer of mold was evident. In a 1000 mL flask, 10 g of potato dextrose starch was added to 500 mL of water. The mixture was heated with stirring until the starch dissolved and was then cooled to room temperature. Two drops of Triton-X was added. The moldy agar from the two Petri dishes was then added and the mixture was stirred for 30 min. The mixture was filtered and the dark green filtrate was collected in a spray bottle. For comparison, samples of an untreated polyester material and glass mat and the treated polyester pad and glass mat were each sprayed twice with the mold solution. The samples were then stored in a humidity chamber at 37 degrees C and 90 % humidity. After 5 days, both the untreated glass mat and the untreated polyester material exhibited mold growth while the bio-active, anti-fungal coated samples were free from mold growth. The samples were observed for a period of five weeks during which no mold growth was observed on the treated samples.

Gluturaldehyde Bio-Active Coating. In another example, both glyoxal treated hydroxyethyl methyl cellulose, a cellulose ether, and gluturaldehyde treated hydroxyethyl methyl cellulose were prepared by mixing an aqueous solution of the dialdehyde (e.g. 50 wt% gluturaldehyde or 40 wt% glyoxal) dropwise to a mixture of 1 gram of the cellulose ether in 20 milli-liters of acetone, until 1 gram of the dialdheyde aqueous solution was added. The mixture was stirred at ambient temperature for one-half hour and the treated cellulose ether was dried in an oven at 60 degrees centigrade until the acetone evaporated. Then, the treated cellulose ether was mixed at a ratio of 1:100 to water heated to 90 degrees centigrade. After the cellulose ether dispersed in the water, the temperature was reduced to ambient temperature to complete the dissolution of the cellulose ether. Solubility of the cellulose ether increases with decreasing temperature within this temperature range. Samples of each of the cellulose ethers were poured into petri dishes, which were exposed to mold in a warm, most environment (32 degrees centigrade; 89% humidity). The glyoxal treated cellulose ethers grew mold, but the gluturaldehyde treated cellulose ethers did not grow mold. For example, after the first week the glyoxal treated cellulose ethers showed 15-60% coverage of mold on the surface of the samples, whereas the gluturaldehyde remained free of mold. At five weeks, the glyoxal samples had between 50-70% mold coverage, whereas the gluturaldehyde remained mold free. In comparison, untreated hydroxyethyl methyl cellulose had 30-50% mold coverage after 5 weeks.

Glass Fiber Gypsum, No Surface Modifier. As a comparative example, strands of fiber were removed from a sheet of woven type E fiberglass boat cloth. The strands were cut into 4" sections and individually massed to determine fiber denier. The specimens were then embedded in the center of a 9" x 1" x ½" gypsum block. The fibers were oriented parallel to the ½" direction with approximately one inch spacing between each fiber. The mold was constructed with the fibers suspended between two sets of clamped ½" zinc bars with two ½" plastic spacers. Three inches of fiber were left exposed from the gypsum block on one side for clamping to the testing apparatus.

One hundred grams of beta calcium sulfate hemi-hydrate stucco was mixed with 0.13 g of ground gypsum ball mill accelerator. This powder was added to 150 g tap water and mixed in a Waring blender at low speed for 15 seconds. The slurry was then poured into the mold around the suspended fibers. The block was removed from the mold after 20 minutes of setting and dried in a convection oven at 45 C for 24 hours.

After drying, the block was massed to determine matrix density. The pull-out characteristics of each fiber were tested using an Instron mechanical testing machine at a displacement rate of one inch per minute.

The gypsum density was 0.62 g/cc, the average fiber denier was 3.5 mg per inch, and the average pull-out strength was 2.62 lbs with a standard deviation of less

Glass Fiber Gypsum, Polyurethane Latex Surface Modifier. As another comparative example, a commercially available polyurethane latex emulsion with an internal cross-linker was used as a sizing composition. The surface-modifier was applied at room temperature to strands removed from a sheet of woven type E fiberglass boat cloth. The surface-modifier was applied by winding the strands onto a small roller, submerging the roller in the sizing composition, and unwinding the strands through the composition. The fiber strands were then weighted with a small clip on one end to prevent warping and hung to dry in a 45 C convection oven for 30 minutes. The dried fibers were cut to 4" sections, massed, and embedded in a gypsum block, and the pull-out strength was tested following the procedure from the Glass Fiber Gypsum, No Size example. The results were recorded and compared to determine the amount of surface-modifier add-on and pull-out strength improvement from control fibers in the same matrix. Pullout strength improvement indicates the increase in pullout strength over that for a glass fiber with no surface modifier (negative indicates a decrease in strength).

| Fiber Denier (mg / in) | Pull-Out Strength (lbf) | Energy at Yield (lbf-in) | Add-On (%wt) | Pull-Out Strength Improvement |
|---|---|---|---|---|
| 8.0 | 2.3 | 0.023 | 128% | -14% |
| 8.4 | 3.0 | 0.101 | 138% | 13% |
| 8.6 | 2.3 | 0.027 | 144% | -12% |
| 8.6 | 2.5 | 0.102 | 144% | -6% |
| 9.2 | 2.5 | 0.009 | 162% | -6% |
| 9.3 | 3.0 | 0.041 | 166% | 13% |
| 9.4 | 2.1 | 167% | 167% | -20% |

Glass Fiber Gypsum, Waterborne Epoxy Surface-Modifier. Also included for comparison is a waterborne epoxy size. A sizing composition was prepared by mixing 100 g of Epirez 3519 50% solids waterborne epoxy emulsion with EpiCure curing agent, both from Shell. The surface-modifier was applied at room temperature to strands removed from a sheet of woven type E fiberglass boat cloth as in the previous example. The fiber strands were then weighted and hung to dry in a 100 C convection oven for 2 hours. The dried, cured fibers were then cut to 4" sections, massed, and embedded in a gypsum block and tested following the procedure from the previous examples. The results were recorded and compared to determine the amount of surface-modifier add-on and pull-out strength improvement from control fibers in the same matrix.

| Fiber Denier (mg/in) | Pull-Out Strength (lbf) | Energy at Yield (lbf-in) | Add-On (%wt) | Pull-Out Strength Improvement |
|---|---|---|---|---|
| 7.7 | 1.8 | 0.057 | 118% | -30% |
| 8.5 | 2.0 | 0.056 | 142% | -24% |
| 8.7 | 2.1 | 0.042 | 147% | -18% |
| 8.7 | 1.4 | 0.013 | 148% | -47% |
| 8.7 | 1.5 | 0.022 | 148% | -43% |
| 9.2 | 1.7 | 0.038 | 162% | -36% |
| 9.5 | 2.0 | 0.048 | 170% | -22% |

The polyurethane latex surface-modifier and waterborne epoxy surface-modifier are included for comparison with some preferred embodiments of the invention. Interfacial bond strength was not improved by adding these surface-modifiers between the gypsum and the fiber. Instead, polyurethane latex and waterborne epoxy reduced the pullout strength, despite the increased surface contour and denier of the fiber. This may explain why sizing is removed as part of conventional processes, because one of ordinary skill in the art would not expect sizing to improve pullout strength.

Glass Fiber Gypsum, HPMC Surface-Modifier. A sizing composition was prepared by mixing 5 g of Methocel 240 from Dow Chemical (40,000 cps @ 2 wt%, 25 C) into 100 g of 85 C tap water. The dispersion was mixed for 5 minutes and then cooled to 45 C. The surface-modifier was applied to strands removed from a sheet of woven type E fiberglass boat cloth by winding the strands onto a small roller, submerging the roller in the sizing composition, and unwinding the strands through the composition. The fiber strands were then tensioned and hung to dry in a 45 C convection oven for 30 minutes. The dried fibers were cut to 4" sections, massed, and embedded in a gypsum block and tested following the previous procedures. The results were recorded and compared to determine the amount of surface-modifier add-on. The pull-out strength was measured and a percent improvement was calculated compared to the control specimens.

| Fiber Denier (mg/in) | Pull-Out Strength (lbf) | Energy at Yield (lbf-in) | Add-On (%wt) | Pull-Out Strength Improvement |
|---|---|---|---|---|
| 3.6 | 1.3 | 0.005 | 3% | -51% |
| 3.7 | 1.7 | 0.011 | 6% | -36% |
| 3.8 | 0.6 | 0.002 | 7% | -77% |
| 3.9 | 1.3 | 0.004 | 11% | -49% |
| 4.1 | 2.7 | 0.024 | 17% | 5% |
| 4.4 | 3.9 | 0.028 | 24% | 48% |
| 5.4 | 7.5 | 0.217 | 54% | 185% |
| 10.8 | 10.1 | 0.877 | 208% | 285% |

These results show that with less add-on, such as used in conventional sizing applications, the HPMC 1 surface-modifier reduces the pull-out strength. It is believed, without limiting in any way, that the weakening is due to migration of the polymer away from the fiber, leaving a porous and a weak interface between the fiber and cement matrix. However, increased add-on results in significantly improved pull-out strength and energy compared to the control specimen.

Glass Fiber Gypsum, Low Molecular Weight HPMC Surface Modifier. A sizing composition was prepared by mixing 30 g of a lower viscosity grade HPMC than the previous example (from Aldrich with viscosity grade of 5 cps @ 2 wt%, 25 C) into 100 g of 85 C tap water. The dispersion was mixed for 5 minutes and then cooled to 25 C. The surface-modifier was applied to type E boat cloth glass fiber as described in the previous example. The fiber strands were then tensioned and hung to dry in a 45 C convection oven for 30 minutes. The dried fibers were cut to 4" sections, massed, and embedded in a gypsum block and tested following the previous procedures. The results were recorded and compared to determine the amount of surface modifier add-on and pullout strength improvement.

| Fiber Denier (mg/in) | Pull-Out Strength (lbf) | Energy at Yield (lbf-in) | Add-On (%wt) | Pull-Out Strength Improvement |
|---|---|---|---|---|
| 7.4 | 1.6 | 0.004 | 111% | -39% |

(continued)

| Fiber Denier (mg/in) | Pull-Out Strength (lbf) | Energy at Yield (lbf-in) | Add-On (%wt) | Pull-Out Strength Improvement |
|---|---|---|---|---|
| 8.6 | 0.3 | 0.001 | 145% | -90% |
| 9.8 | 2.7 | 0.023 | 179% | 5% |
| 11.0 | 0.6 | 0.003 | 214% | -77% |
| 11.8 | 2.9 | 0.011 | 236% | 11% |
| 13.8 | 4.7 | 0.061 | 293% | 80% |
| 20.5 | 16.4 | 0.231 | 483% | 527% |
| 20.8 | 11.5 | 0.712 | 492% | 340% |

This low viscosity grade cellulose ether did not improve fiber-cement adhesion as much as the previous example using a high viscosity grade HPMC. A greater amount of add-on was required to achieve a similar level of improvement in pull-out strength. For example, the pull-out energy of a fiber sized with 200% add-on of 40,000 cps HPMC is greater than that of a fiber with 500% add-on of 5 cps HPMC. The pullout strength appears to follow a trend similar to as the nail pull index and flexural strength of gypsum-based HPMC-reinforced composite panels, which are dramatically affected by viscosity grade, amount of additive and degree of substitution of substituent groups, such as methyl and hydroxy-propyl groups.

Glass Fiber Gypsum, High Molecular Weight HPMC / Polyurethane Surface Modification. A surface treatment composition was prepared by adding 4 g of Airflex 423, a 50% solids polyurethane latex emulsion with an internal cross-linker from Air Products Inc., to 100 g of 85 C tap water. Three grams of HPMC (Methocel 240 with a viscosity grade of 40,000 cps from Dow Chemical) was then added to the mixture. The dispersion was mixed for 5 minutes and then cooled to 45 C. The surface treatment was applied to type E boat cloth glass fiber as described in the previous examples. The fiber strands were then tensioned and hung to dry in a 45 C convection oven for 30 minutes. The dried fibers were cut to 4" sections, massed, and embedded in a gypsum block and tested following the previous procedure. The results were recorded and compared to determine the amount of size add-on and pull-out strength improvement from control fibers in the same matrix.

| Fiber Denier (mg/in) | Pull-Out Strength (lbf) | Energy at Yield (lbf-in) | Add-On (%wt) | Pull-Out Strength Improvement |
|---|---|---|---|---|
| 3.8 | 3.0 | 0.012 | 9% | 13% |
| 4.0 | 3.7 | 0.019 | 15% | 39% |
| 4.3 | 5.0 | 0.037 | 23% | 93% |
| 4.4 | 5.6 | 0.039 | 26% | 115% |
| 4.8 | 7.3 | 0.064 | 35% | 179% |

It is believed that the latex component of this sizing composition functions mainly to physically cross-link the HPMC and create a more uniform coating. It is observed that fibers coated with a reinforcing sizing that is physically or chemically cross-linked demonstrate improved fiber pull-out strength even with conventional amounts of sizing add-on. It is believed that the sizing does not dissolve and migrate away from the fiber. Thus, it remains an effective reinforcement, even at low levels. It is observed that fiber pull-out strength increases linearly with sizing add-on within the limits tested here.

Glass Fiber Gypsum, High Molecular Weight HPMC/Organic Titanate. A surface treatment composition was prepared by mixing 3 g of Methocel 240 from Dow Chemical (40,000 cps @ 2 wt%, 25 C) into 100 g of 85 C tap water. The dispersion was mixed for 5 minutes and then cooled to 60 C. Five drops of Tyzor 131, organic titanium chelate, from DuPont Chemical were added to the dispersion. This mixture was mixed for an additional 10 minutes and then cooled to 45 C. The surface treatment was applied to type E boat cloth glass fiber as described in the previous examples. The fiber strands were then tensioned and hung to dry in a 100 degrees centigrade convection oven for 30 minutes. The dried fibers were cut to 4" sections, massed, and embedded in a gypsum block and tested following the previous procedure. The results were recorded and compared to determine the amount of size add-on and pull-out strength improvement from control fibers in the same matrix.

| Fiber Denier (mg/in) | Pull-Out Strength (lbf) | Energy at Yield (lbf-in) | Add-On (%wt) | Pull-Out Strength Improvement |
|---|---|---|---|---|
| 3.8 | 4.9 | 0.011 | 9% | 86% |
| 4.4 | 5.2 | 0.231 | 24% | 97% |
| 4.4 | 7.7 | 0.712 | 25% | 195% |
| 4.7 | 8.1 | - | 33% | 209% |

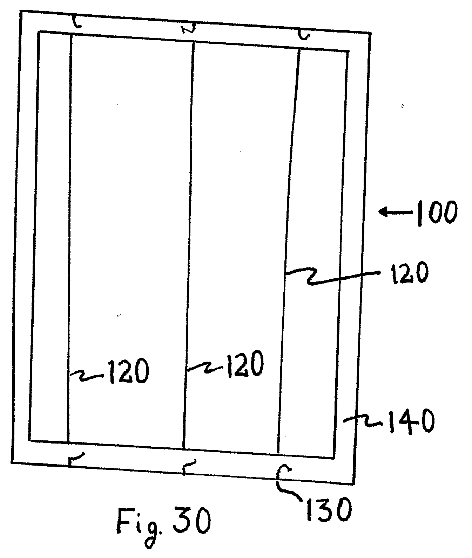

Glass Fiber Gypsum, High Molecular Weight, Surface Treated HEMC/Melamine Sulfonate A sizing composition was prepared by mixing 1 g of sulfonated melamine polycondensate (Melement F17g from Degussa) and 3 g of surface treated, high viscosity HEMC (Culminal 15000PFR from Hercules) into 100g of tap water at room temperature. The mixture was stirred for two minutes. Ten drops of a 1 % solution of calcium hydroxide was then added to the mixture which was stirred for another five minutes. The resulting sizing solution was applied to type E boat cloths glass fiber. Glass fiber strands measuring approximately two feet long were tensioned across a cardboard frame 100 as shown in Fig. 30. The frame 140 and fibers 120 were placed over wax paper and the solution of surface modifier was spread across the fibers. The frame was then lifted away from the paper, pulling the fibers through the surface modifier. The fibers were then dried in the framework in a 120 degrees centigrade convection over for 30 minutes The surface modifier had good mechanical properties and strong swelling characteristics.

Mold Resistance. This test method is adapted from the mold test described in ASTM D3273-94 (Resistance to Growth of Mold on the Surface of Interior Coatings in an Environmental Chamber), which is incorporated as background for the test herein in its entirety. The adapted test provides a procedure for photographic recordings and comparative descriptions of specimens, which are representations of its susceptibility to mold growth. The extent of mold coverage, thickness, and color is recorded weekly, along with digital photographs of the specimens. In the modified procedure, a 6in. x 6in. square specimen was prepared in a form using no release agent or oil, which eliminates any extraneous food source for mold. The specimen was cut on all edges using a table saw. Each specimen was supported vertically in a rack that allowed adequate circulation of air through the gaps at the bottom of the rack. The rack was placed into a Forma 3033 Steri-cult incubator and mold spores were circulated from the bottom to top of the chamber. The incubating environment was maintained at 90 °F (32.2 °C) and 90% relative humidity. The specimens were analyzed for mold growth and rotated weekly. The mold coverage, thickness, and color were observed, recorded, and documented with digital photographs, using a fluorescent lamp from above to enhance the contrast of the growth on the sample faces.

For example, paperless wallboard core with a cellulose ether added and wallboard having a single ply of newsprint showed no mold growth at 24 days. With 1 wt% starch added, paperless wallboard showed 30% mold coverage and 40% mold density at day 7, and mold coverage of 90% and mold density of 50% at day 14. A commercial, multi-ply paper wallboard having 80-100% coverage of mold growth at the end of 7 days (National Gypsum). Thus, under high humidity conditions paperless wallboard and wallboard having a single ply of newsprint exhibited much greater resistance to mold growth than commercial, multi-ply paper covered wallboard.

HPMC Sizing Solution, High Solids, Viscosity. A sizing solution of hydroxypropyl methyl cellulose (HPMC) was created by mixing 5 weight percent (wt%) water and 85 wt% isopropanol. Ten parts of a HPMC (Methocel 240 with a viscosity grade of 40,000 cps) was then slowly added to 90 parts of the mixture by weight, while stirring. The resulting sizing solution had moderate viscosity at room temperature and a solids content of 10 wt%. An evenly dispersed and coherent HPMC film was produced on a glass surface.

HPMC Sizing Solution, High Solids, Medium Viscosity. A sizing solution of HPMC was created by mixing 10 wt% water to 80 wt% isopropanol. Ten parts of a HPMC (Methocel 240 viscosity grade of 40,000 cps) was then slowly added to 90 parts of the mixture by weight, while stirring. The resulting sizing solution had medium viscosity at room temperature and a solids content of 10 wt%. An evenly dispersed and coherent HPMC film was produced on a glass surface. In contrast, an aqueous solution of HPMC at this concentration and temperature would have a very high viscosity of a film gel, and could not be used as a sizing solution.

Physically Crosslinked Sizing Solution. A sizing solution was created by first mixing 7 wt% of vinyl acetate emulsion with an internal crosslinker (e.g. Airflex 423 from Air Products) with additional 3 wt% water. Then, 80 wt% of isopropanol was added to 10 wt% of the sizing solution while stirring. Finally, 10 wt% of an HPMC (Methocel 240, viscosity grade 40,000 cps) was slowly added while stirring. The resulting sizing solution produced an evenly dispersed film on a glass surface. Furthermore, the size on the glass had good add-on and had limited solubility in water, resisting redissolution.

Chemically Crosslinked Sizing Solution. A sizing solution was created by mixing 5 wt% of a 50 wt% aqueous solution of a melamine-formaldehyde resin, such as Cymel 385 from Cytec, with an additional 5 wt% of water. Then, 80 wt% of isopropanol was added while stirring. Finally, 10 wt% of an HPMC (Methocel 240, viscosity grade 40,000 cps) was slowly added to the mixture while stirring. The resulting sizing solution

Synthesis of Methyl Carboxymethyl Cellulose (MCMC). Methyl cellulose (100 g, Dow, viscosity grade of 400 cps) was added to 1350 g of a solution comprising approximately equal parts by weight of ethanol (95% containing 5% water) and isopropanol. Alkalization was then performed by adding dropwise to the mixture 8 g sodium hydroxide dissolved in 67.5 g of water. The slurry was stirred for one hour at room temperature. Monochloroacetic acid (9.45 g) was added dropwise to the mixture which was then heated to 70 degrees C over a period of one hour and held at that temperature for an additional hour. The mixture was then cooled and neutralized with concentrated hydrochloric acid. The product was collected by filtration, washed several times with ethanol, and then dried in an oven at 100 degrees C. The viscosity of the MCMC was measured to be 80 cps for an aqueous solution consisting of 2 wt% MCMC and water at 25°C.

Synthesis of Sulfopropyl Methyl Cellulose (SPMC). Methyl cellulose (30 g, Dow, viscosity grade of 400 cps) was added to 405 g of solution comprising approximately equal parts by weight of ethanol (95% containing 5% water) and isopropanol. Alkalization was then performed by adding dropwise to the mixture 2.28 g sodium hydroxide dissolved in 10 g of water. The slurry was stirred for one hour at room temperature. 1,3-Propanesultone (6.96 g) of was added dropwise to the mixture which was then heated to 70 degrees C over a period of one hour and held at that temperature for an additional hour. The mixture was then cooled and added in small increments to acetone. The resulting precipitate was collected by filtration and dried at 100 degrees C. The viscosity of the SPMC was measured to be 180 cps for an aqueous solution consisting of 2 wt% SPMC and water at 25 degrees C.

Synthesis of Sulfoethyl Cellulose (SEC). Cellulose (30 g, Aldrich, long fibers) was suspended in 579 g of isopropanol and flushed with Argon. To the mixture, 134 g of a 25 weight % solution of sodium vinylsulfonate was added slowly followed by thorough mixing for 15 minutes. A solution of 17 g sodium hydroxide dissolved in 19 g water was then added and the mixture was stirred for 80 minutes at room temperature. The reaction mixture was then heated to 75 degrees C over 30 minutes and then stirred at that temperature for 3 hours. After cooling to room temperature, the solid was filtered and resuspended in isopropanol. Concentrated hydrochloric acid was added dropwise until the suspension was neutralized. The product was filtered, washed several times with ethanol, and dried in an oven at 100 degrees C.

Base Hydrolysis of Methyl Cellulose (Hydrolyzed MC). Methyl cellulose (40 g, Dow, viscosity grade of 400 cps) was suspended in 772 g of isopropanol and flushed with nitrogen. A solution of 10 g of sodium hydroxide dissolved in 10 g water was then added dropwise. The mixture was stirred for 80 minutes at room temperature. The reaction temperature was then raised to 75 degrees C over a period of 30 minutes and kept at that temperature for 3 hours. After cooling to room temperature, the solid was collected by filtration and then resuspended in isopropanol. Concentrated sulfuric acid was added dropwise until the suspension was neutralized. The product was filtered, washed several times with ethanol, and dried in an oven at 100 degrees C. The viscosity of a 2 wt. % solution in water 25 degrees C of the hydrolyzed MC was measured to be 10 cps.

MCMC Enhanced Wallboard. A papered sample was prepared by mixing 1000 g of ß-calcium sulfate hemihydrate with 2 g ground gypsum, 5 g Melment F17G, and 2 g STMP. To a 5 liter Waring blending container was added 10 g of methyl carboxymethyl cellulose dissolved in 1300 g of water followed by 2 drops of a 40% solution of diethylenetriaminepentaacetic acid sodium salt (retarder). The powder mixture was added to the solution and blended on low for 10 seconds. The slurry was then poured into an approximately 12" x 12" x " mold lined with an envelope made of standard decorative wallboard facing paper. The sample was removed from the mold after 10 minutes, flash dried in a 175 degrees C convection oven until 25 % of the sample weight was lost, and then transferred to a 45 degrees C convection oven to dry for 24 hrs. The sample was then removed and cut into two 5" x 10" specimens, with the long dimension in the direction of the fibers of the paper. These specimens were then massed and measured. The density was calculated and the specimens were tested for nail pull resistance on an Instron mechanical testing system. The sample had a density of 0.51 g/cc and a nail pull resistance of 76 lbs.

SPMC Enhanced Wallboard. A papered sample was prepared by mixing 1000 g of ß-calcium sulfate hemihydrate with 2 g ground gypsum, 5 g Melment F17G, and 2 g STMP. To a 5 liter Waring blending container was added 10 g of sulfoethyl cellulose dissolved in 1300 g of water followed by 2 drops of a 40% solution of diethylenetriaminepentaacetic acid sodium salt (retarder). The powder mixture was added to the solution and blended on low for 10 seconds. The slurry was then poured into an approximately 12" x 12" x " mold lined with an envelope made of standard decorative wallboard facing paper. The sample was removed from the mold after 10 minutes, flash dried in a 175 degrees C convection oven until 25 % of the sample weight was lost, and then transferred to a 45 degrees C convection oven to dry for 24 hrs. The sample was then removed and cut into two 5" x 10" specimens, with the long dimension in the direction of the fibers of the paper. These specimens were then massed and measured. The density was calculated and the specimens were tested for nail pull resistance on an Instron mechanical testing system. The sample had a density of 0.53 g/cc and a nail pull resistance of 82 lbs.

SEC Wallboard. A papered sample was prepared by mixing 800 g of ß-calcium sulfate hemihydrate with 1.6 g ground gypsum, 1.6 g Melment F17G, 4 g Hi-bond Starch, and 1.6 g STMP. To a 5 liter Waring blending container was added 8 g of sulfoethyl cellulose dissolved in 1100 g of water followed by 2 drops of a 40% solution of diethylenetriaminepentaacetic acid sodium salt (retarder). The powder mixture was added to the solution and blended on low for 10 seconds. The slurry was then poured into an approximately 12" x 12" x 1/2" mold lined with an envelope made of standard decorative wallboard facing paper. The sample was removed from the mold after 10 minutes, flash dried in a 175 degrees C convection oven until 25 % of the sample weight was lost, and then transferred to a 45 degrees C convection oven to dry for 24 hrs. The sample was then removed and cut into two 5" x 10" specimens, with the long dimension in the direction of the fibers of the paper. These specimens were then massed and measured. The density was calculated and the specimens were tested for nail pull resistance on an Instron mechanical testing system. The sample had a density of 0.72 g/cc and a nail pull resistance of 123 lbs.

Hydrolyzed MC Enhanced Wallboard. A papered sample was prepared by mixing 800 g of ß-calcium sulfate hemihydrate with 1.6 g ground gypsum, 1.6 g Melment F17G, 4 g Hi-bond Starch, and 1.6 g STMP. To a 5 liter Waring blending container was added 8 g of hydrolyzed methyl cellulose dissolved in 1050 g water followed by 2 drops of a 40% solution of diethylenetriaminepentaacetic acid sodium salt (retarder). The powder mixture was added to the solution and blended on low for 10 seconds. The slurry was then poured into an approximately 12" x 12" x 0.5" mold lined with an envelope made of standard decorative wallboard facing paper. The sample was removed from the mold after 10 minutes, flash dried in a 175 degrees C convection oven until 25 % of the sample weight was lost, and then transferred to a 45 degrees C convection oven to dry for 24 hrs. The sample was then removed and cut into two 5" x 10" specimens, with the long dimension in the direction of the fibers of the paper. These specimens were then massed and measured. The density was calculated and the specimens were tested for nail pull resistance on an Instron mechanical testing system. The sample had a density of 0.49 g/cc and a nail pull resistance of 72 lbs.

First Control Board. Ultra-light-weight. One thousand grams of beta calcium sulfate hemi-hydrate (stucco) were dry-mixed with 10 g of sugar-coated ground-gypsum accelerator (BMA), 5 g of HiBond starch, and 0.5 g of sodium trimetaphosphate (STMP). This powder mixture was then added to 1600 g of 21 C tap water with 5 drops of Witcolate foaming agent, ammonium alkyl ether sulfate, 25 drops of 50% aqueous sodium salt of polymerized alkyl naphthalene sulfonic acid (dispersant), and 2 drops of 40% aqueous diethylene-tetramine pentacetic acid, sodium salt (retarder). The slurry was mixed in a 4L Waring blender at low speed for 10 seconds. The slurry was then poured onto a paper envelope made of standard wallboard face paper in a 12" x 14" x 0.5" horizontal glass mold which was then closed. After 10 minutes, the wet board was removed from the mold, the edges were taped with masking tape, and the board was placed in a forced convection oven at 200 C. When the sample had lost 30% of its original mass, it was removed and placed in another forced convection oven at 50 C for 24 hours. The sample was removed and cut into a 10" x 5.25" sample for nail pull testing. The samples were massed and accurately dimensioned to calculate density and board-weight. An Instron Model 4466 with a one-ton load cell and data acquisition software was used for mechanical testing. Twelve nail pull tests were performed on the sample in a similar fashion to ASTM C36, method B. The results were then averaged and are listed below along with the formulation.

| Ingredient | Parts-by-weight Stucco |
|---|---|
| stucco | 100 |
| BMA | 1 |
| HiBond starch | 0.5 |
| dispersant | 0.1 |
| STMP | 0.05 |
| Witcolate | 0.02 |
| retarder | 0.008 |
| water | 160 |
| | |
| Board-weight (lbs/MSF) | 1315 |
| Nail Pull (lbs) | 65 |

Second Control Board, Light-weight. One thousand grams of beta calcium sulfate hemi-hydrate (stucco) were dry-mixed with 10 g of sugar-coated ground-gypsum accelerator (BMA), 5 g of HiBond starch, and 0.5 g of sodium trimetaphosphate (STMP). This powder mixture was then added to 1300 g of 21 C tap water with 5 drops of Witcolate foaming agent, ammonium alkyl ether sulfate, 25 drops of 50% aqueous sodium salt of polymerized alkyl naphthalene sulfonic acid (dispersant), and 2 drops of 40% aqueous diethylene-tetramine pentacetic acid, sodium salt (retarder). The slurry was mixed in a 4L Waring blender at low speed for 10 seconds. The slurry was then poured onto a paper envelope made of standard wallboard face paper in a 12" x 14" x 0.5" horizontal glass mold which was then closed. After 10 minutes, the wet board was removed from the mold, the edges were taped with masking tape, and the board was placed in a forced convection oven at 200 C. When the sample had lost 30% of its original mass, it was removed and placed in another forced convection oven at 50 C for 24 hours. The sample was removed and cut into a 10" x 5.25" sample for nail pull testing and 5.25" x 2" samples for three-point-bend testing. The samples were massed and accurately dimensioned to calculate density and board-weight. An Instron Model 4466 with a one-ton load cell and data acquisition software was used for mechanical testing. Twelve nail pull tests were performed on the sample in a similar fashion to ASTM C36, method B. Three flexural strength tests were performed using a three-point-bend apparatus and testing in the machine direction of the paper. The results were then averaged and are listed below along with the formulation.

| Ingredient | Parts-by-weight Stucco |
| --- | --- |
| stucco | 100 |
| BMA | 1 |
| HiBond starch | 0.5 |
| dispersant | 0.1 |
| STMP | 0.05 |
| Witcolate | 0.02 |
| retarder | 0.008 |
| water | 130 |
| | |
| Board-weight (lbs/MSF) | 1570 |
| Nail Pull (lbs) | 94 |
| MOR (psi) | 823 |

Third Control Board, Heavy-weight. One thousand grams of beta calcium sulfate hemi-hydrate (stucco) were dry-mixed with 10 g of sugar-coated ground gypsum accelerator (BMA), 5 g of HiBond starch, and 0.5 g of sodium trimetaphosphate (STMP). This powder mixture was then added to 1300 g of 21 C tap water with 25 drops of 50% aqueous sodium salt of polymerized alkyl naphthalene sulfonic acid (dispersant) and 2 drops of 40% aqueous diethylene-tetramine pentacetic acid, sodium salt (retarder). The slurry was mixed in a 4L Waring blender at low speed for 10 seconds. The slurry was then poured onto a paper envelope made of standard wallboard face paper in a 12" x 14" x 0.5" horizontal glass mold which was then closed. After 10 minutes, the wet board was removed from the mold, the edges were taped with masking tape, and the board was placed in a forced convection oven at 200 C. When the sample had lost 30% of its original mass, it was removed and placed in another forced convection oven at 50 C for 24 hours. The sample was removed and cut into a 10 x 5.25 sample for nail pull testing and 5.25" x 2" samples for three-point-bend testing. The samples were massed and accurately dimensioned to calculate density and board-weight. An Instron Model 4466 with a one-ton load cell and data acquisition software was used for mechanical testing. Twelve nail pull tests were performed on the sample in a similar fashion to ASTM C36, method B. Two flexural strength tests were performed using a three-point-bend apparatus and testing in the machine direction of the paper. The results were then averaged and are listed below along with the formulation.

| Ingredient | Parts-by-weight Stucco |
| --- | --- |
| stucco | 100 |
| BMA | 1 |
| HiBond starch | 0.5 |
| dispersant | 0.1 |
| STMP | 0.05 |
| retarder | 0.008 |
| water | 130 |
| | |
| Board-weight (lbs/MSF) | 1870 |
| Nail Pull (lbs) | 128 |
| MOR (psi) | 1115 |

Fourth Control Board, Ultra-light-weight, 3% Glass Fiber. One thousand grams of beta calcium sulfate hemi-hydrate (stucco) were dry-mixed with 30 g of 0.5 chopped strand glass fiber, 10 g of sugar-coated ground gypsum accelerator (BMA), 6 g of HiBond starch, and 0.5 g of sodium trimetaphosphate (STMP). This powder mixture was then added to 1600 g of 21 C tap water with 5 drops of Witcolate foaming agent, ammonium alkyl ether sulfate, 25 drops of 50% aqueous sodium salt of polymerized alkyl naphthalene sulfonic acid (dispersant), and 2 drops of 40% aqueous diethylene-tetramine pentacetic acid, sodium salt (retarder). The slurry was mixed in a 4L Waring blender at low speed for 10 seconds. The slurry was then poured onto a paper envelope made of standard wallboard face paper in a 12" x 14" x 0.5" horizontal glass mold which was then closed. After 10 minutes, the wet board was removed from the mold, the edges were taped with masking tape, and the board was placed in a forced convection oven at 200 C. When the sample had lost 30% of its original mass, it was removed and placed in another forced convection oven at 50 C for 24 hours. The sample was removed and cut into a 10" x 5.25" sample for nail pull testing and 5.25" x 2" samples for three-point-bend testing. The samples were massed and accurately dimensioned to calculate density and board-weight. An Instron Model 4466 with a one-ton load cell and data acquisition software was used for mechanical testing. Twelve nail pull tests were performed on the sample in a similar fashion to ASTM C36, method B. Three flexural strength tests were performed using a three-point-bend apparatus and testing in the machine direction of the paper. The results were then averaged and are listed below along with the formulation.

| Ingredient | Parts-by-weight Stucco |
| --- | --- |
| stucco | 100 |
| glass fiber | 3 |
| BMA | 1 |
| HiBond starch | 0.6 |
| dispersant | 0.1 |
| STMP | 0.05 |
| Witcolate | 0.02 |
| retarder | 0.008 |
| water | 160 |
| | |
| Board-weight (lbs/MSF) | 1250 |
| Nail Pull (lbs) | 72 |
| MOR (psi) | 861 |

Enhanced Board, Light-weight, 3% Glass Fiber, 2% HPMC. One thousand grams of beta calcium sulfate hemi-hydrate (stucco) were dry-mixed with 30 g of 0.5 chopped strand glass fiber, 20 g of Culminal 1034, hydroxylpropyl methyl cellulose (HPMC), 10 g of sugar-coated ground gypsum accelerator (BMA), 5 g of HiBond starch, and 0.5 g of sodium trimetaphosphate (STMP). This powder mixture was then added to 1300 g of 21 C tap water with 5 drops of Witcolate foaming agent, ammonium alkyl ether sulfate, 25 drops of 50% aqueous sodium salt of polymerized alkyl naphthalene sulfonic acid (dispersant), and 2 drops of 40% aqueous diethylene-tetramine pentacetic acid, sodium salt (retarder). The slurry was mixed in a 4L Waring blender at low speed for 10 seconds. The slurry was then poured onto a paper envelope made of standard wallboard face paper in a 12" x 14" x 0.5" horizontal glass mold which was then closed. After 10 minutes, the wet board was removed from the mold, the edges were taped with masking tape, and the board was placed in a forced convection oven at 200 C. When the sample had lost 30% of its original mass, it was removed and placed in another forced convection oven at 50 C for 24 hours. The sample was removed and cut into a 10" x 5.25" sample for nail pull testing and 5.25" x 2" samples for three-point-bend testing. The samples were massed and accurately dimensioned to calculate density and board-weight. An Instron Model 4466 with a one-ton load cell and data acquisition software was used for mechanical testing. Twelve nail pull tests were performed on the sample in a similar fashion to ASTM C36, method B. Three flexural strength tests were performed using a three-point-bend apparatus and testing in the machine direction of the paper. The results were then averaged and are listed below along with the formulation.

| Ingredient | Parts-by-weight Stucco |
| --- | --- |
| stucco | 100 |
| glass fiber | 3 |
| HPMC Culminal 1034 | 2 |
| BMA | 1 |
| HiBond starch | 0.5 |

(continued)

| Ingredient | Parts-by-weight Stucco |
|---|---|
| dispersant | 0.1 |
| STMP | 0.05 |
| Witcolate | 0.02 |
| retarder | 0.008 |
| water | 130 |
| | |
| Board-weight (lbs/MSF) | 1550 |
| Nail Pull (lbs) | 141 |
| MOR (psi) | 1283 |

Enhanced Board, Ultra-light-weight, 3% Glass Fiber, 2% HPMC. One thousand grams of beta calcium sulfate hemi-hydrate (stucco) were dry-mixed with 30 g of 0.5 chopped strand glass fiber, 20 g of Culminal 1034, hydroxylpropyl methyl cellulose (HPMC), 10 g of sugar-coated ground gypsum accelerator (BMA), 5 g of HiBond starch, and 0.5 g of sodium trimetaphosphate (STMP). This powder mixture was then added to 1600 g of 21 C tap water with 25 drops of 50% aqueous sodium salt of polymerized alkyl naphthalene sulfonic acid (dispersant) and 2 drops of 40% aqueous diethylene-tetramine pentacetic acid, sodium salt (retarder). The slurry was mixed in a 4L Waring blender at low speed for 10 seconds. The slurry was then poured onto a paper envelope made of standard wallboard face paper in a 12" x 14" x 0.5" horizontal glass mold which was then closed. After 10 minutes, the wet board was removed from the mold, the edges were taped with masking tape, and the board was placed in a forced convection oven at 200 C. When the sample had lost 30% of its original mass, it was removed and placed in another forced convection oven at 50 C for 24 hours. The sample was removed and cut into a 10" x 5.25" sample for nail pull testing and 5.25" x 2" samples for three-point-bend testing. The samples were massed and accurately dimensioned to calculate density and board-weight. An Instron Model 4466 with a one-ton load cell and data acquisition software was used for mechanical testing. Twelve nail pull tests were performed on the sample in a similar fashion to ASTM C36, method B. Four flexural strength tests were performed using a three-point-bend apparatus and testing in the machine direction of the paper. The results were then averaged and are listed below along with the formulation.

| Ingredient | Parts-by-weight Stucco |
|---|---|
| stucco | 100 |
| glass fiber | 3 |
| HPMC Culminal 1034 | 2 |
| BMA | 1 |
| HiBond starch | 0.5 |
| dispersant | 0.1 |
| STMP | 0.05 |
| retarder | 0.008 |
| water | 160 |
| | |
| Board-weight (lbs/MSF) | 1295 |
| Nail Pull (lbs) | 100 |
| MOR (psi) | 1260 |

Enhanced Board, Ultra-light-weight, 3% Glass Fiber, 2% HPMC. One thousand grams of beta calcium sulfate hemi-hydrate (stucco) were dry-mixed with 30 g of 0.5 chopped strand glass fiber, 20 g of Culminal 1034, hydroxylpropyl methyl cellulose (HPMC), 10 g of sugar-coated ground gypsum accelerator (BMA), 5 g of HiBond starch, and 0.5 g of sodium trimetaphosphate (STMP). This powder mixture was then added to 1800 g of 21 C tap water with 25 drops of 50% aqueous sodium salt of polymerized alkyl naphthalene sulfonic acid (dispersant) and 2 drops of 40% aqueous diethylene-tetramine pentacetic acid, sodium salt (retarder). The slurry was mixed in a 4L Waring blender at low speed for 10 seconds. The slurry was then poured onto a paper envelope made of standard wallboard face paper in a 12" x 14" x 0.5" horizontal glass mold which was then closed. After 10 minutes, the wet board was removed from the mold, the edges were taped with masking tape, and the board was placed in a forced convection oven at 200 C. When the sample had lost 30% of its original mass, it was removed and placed in another forced sample for nail pull testing and 5.25" x 2" samples for three-point-bend testing. The samples were massed and accurately dimensioned to calculate density and board-weight. An Instron Model 4466 with a one-ton load cell and data acquisition software was used for mechanical testing. Twelve nail pull tests were performed on the sample in a similar fashion to ASTM C36, method B. Four flexural strength tests were performed using a three-point-bend apparatus and testing in the machine direction of the paper. The results were then averaged and are listed below along with the formulation.

| Ingredient | Parts-by-weight Stucco |
| --- | --- |
| stucco | 100 |
| glass fiber | 3 |
| HPMC Culminal 1034 | 2 |
| BMA | 1 |
| HiBond starch | 0.5 |
| dispersant | 0.1 |
| STMP | 0.05 |
| retarder | 0.008 |
| water | 180 |
| | |
| Board-weight (lbs/MSF) | 1140 |
| Nail Pull (lbs) | 81 |
| MOR (psi) | 1095 |

Enhanced Board, Ultra-light-weight, 3% Glass Fiber, 2% HEMC, surface-treated. One thousand grams of beta calcium sulfate hemi-hydrate (stucco) were dry-mixed with 30 g of 0.5 chopped strand glass fiber, 20 g of Culminal 15000PFR, hydroxylethyl methyl cellulose (HEMC) surface-treated for delayed solubility, 10 g of sugar-coated ground gypsum accelerator (BMA), 5 g of HiBond starch, and 0.5 g of sodium trimetaphosphate (STMP). This powder mixture was then added to 1600 g of 21 C tap water with 25 drops of 50% aqueous sodium salt of polymerized alkyl naphthalene sulfonic acid (dispersant) and 2 drops of 40% aqueous diethylene-tetramine pentacetic acid, sodium salt (retarder). The slurry was mixed in a 4L Waring blender at low speed for 10 seconds. The slurry was then poured onto a paper envelope made of standard wallboard face paper in a 12" x 14" x 0.5" horizontal glass mold which was then closed. After 10 tape, and the board was placed in a forced convection oven at 200 C. When the sample had lost 30% of its original mass, it was removed and placed in another forced convection oven at 50 C for 24 hours. The sample was removed and cut into a 10" x 5.25" sample for nail pull testing. The samples were massed and accurately dimensioned to calculate density and board-weight. An Instron Model 4466 with a one-ton load cell and data acquisition software was used for mechanical testing. Twelve nail pull tests were performed on the sample in a similar fashion to ASTM C36, method B. The results were then averaged and are listed below along with the formulation.

| Ingredient | Parts-by-weight Stucco |
| --- | --- |
| stucco | 100 |
| glass fiber | 3 |
| HEMC Culminal 15000PFR | 2 |
| BMA | 1 |
| HiBond starch | 0.5 |
| dispersant | 0.1 |
| STMP | 0.05 |
| retarder | 0.008 |
| water | 160 |
| | |
| Board-weight (lbs/MSF) | 1345 |
| Nail Pull (lbs) | 101 |

Glass Mat Control Board. Sample boards were made with non-woven glass mat facing. The glass mat was 0.75 oz randomly distributed standard glass mat. Sheets of mat 9" x 7" were cut from the roll and used to face a non-enhanced control gypsum core by placing one sheet on the bottom of a horizontal molding system, pouring the slurry into the mold, and placing another sheet on top of the unset stucco slurry before closing the mold. For the core formulation, 500 g beta calcium sulfate hemi-hydrate (stucco) was dry-mixed with 5 g of sugar-coated ground gypsum accelerator (BMA), 1 g of Melment F17G, sulfonated melamine-formaldehyde condensate dispersant, and 0.25 g of sodium trimetaphosphate (STMP). The powder was added to 750 g of 21 C tap water with 1 drop of 40% aqueous diethylene-tetramine pentacetic acid, sodium salt (retarder). The slurry was mixed for 10 seconds in a 2L Waring blender and, after a 30-second pause, 10 minutes and dried for 48 hours in a forced convection oven at 50 C. The dried board was cut into 9" x 3" samples, massed, and accurately dimensioned to calculate density and board-weight. A sample was tested for flexural strength using a three-point-bend apparatus on an Instron Model 4466 with a one-ton load cell. The results are listed below.

| Board-weight (lbs/MSF) | 1720 |
|---|---|
| MOR (psi) | 413 |

HPMC-Coated Glass Mat Board. Sample boards were made with HPMC-coated glass mat facing. The glass mat was 0.75 oz randomly distributed non-woven standard glass mat. Sheets of mat 9" x 7" were cut from the roll and coated with Culminal HPMC 1034. The sheets were coated using a dispersion of 50 g of HPMC added to 1800 g of 80 C tap water. The dispersion was filtered over the glass mat sheet on a plastic mesh. Vacuum was applied to facilitate filtering and cool the dispersion. As the dispersion cooled, the HPMC particles hydrated and gelled on the mat surface. The coated mat was then dried at 150 C for 30 minutes. The add-on to the mat was approximately 6% by weight. A coated mat was used to face a non-enhanced control gypsum core by placing a coated sheet on the bottom of a horizontal molding system, pouring the slurry into the mold, and placing a control, uncoated sheet on top of the unset stucco slurry before closing the mold. For the core formulation, 500 g beta calcium sulfate hemi-hydrate (stucco) was dry-mixed with 5 g of sugar-coated ground gypsum accelerator (BMA), 1 g of Melment F17G, sulfonated melamine-formaldehyde condensate dispersant, and 0.25 g of sodium trimetaphosphate (STMP). The powder was added to 750 g of 21 C tap water with 1 drop of 40% aqueous diethylene-tetramine pentacetic acid, sodium salt (retarder). The slurry was mixed for 10 seconds in a 2L Waring blender and, after a 30-second pause, poured into a mold with glass mat facing. The set board was removed from the mold after 10 minutes and dried for 48 hours in a forced convection oven at 50 C. The dried board was cut into 9" x 3" samples, massed, and accurately dimensioned to calculate density and board-weight. A sample was tested for flexural strength with the coated mat in tension using a three-point-bend apparatus on an Instron Model 4466 with a one-ton load cell. The results are listed below.

| HPMC Culminal 1034 Add-on | 6% |
|---|---|
| Board-weight (lbs/MSF) | 1749 |
| MOR (psi) | 762 |

Although the present invention has been described in relation to particular embodiments thereof, many other variations and modifications and other uses will become apparent to those skilled in the art. It is preferred, therefore, that the present invention be limited not by the specific disclosure herein, but only by the appended claims.

Table I: Examples of Commercially Available Cellulose Ethers

| Source | Viscosity Grade (cps) | Measured Viscosity Grade (cps) | Surface Treated | Average MW | D.S. | M.S. | Reported (%) | | | Measured | |
|---|---|---|---|---|---|---|---|---|---|---|---|
| | | | | | | | Me | HE | HP | Me | HP |
| HEC | 4,500-6,500 (Brookfield) | 80-125 | X | 720,000 | 1.5 | 2.5 | - | - | - | - | - |
| HEC | (Brookfield) | | ? | 250,000 | 1 | 2 | - | - | - | - | - |
| HEMC | 15,000-20,500 (Brookfield) | | X | - | 1.6-1.9 | 0.25-0.5 | 26 | 8 | - | - | - |
| HEMC | 25,000 (Brookfield) | | | - | 1.6-1.9 | 0.25-0.5 | 22-30 | 2-14 | - | - | - |
| HEMC | 65,000 (Brookfield) | | | - | 1.6-1.9 | 0.25-0.5 | 22-30 | 2-14 | - | - | - |
| HPMC | 100,000 (Ubbelohde) | 83,803 | | 120,000 | 1.1-1.6 | 0.1-0.3 | 21 | - | 5 | 25 | 9 |
| HPMC | 15,000 (Ubbelohde) | | | 90,000 | 1.1-1.6 | 0.1-0.3 | 21 | - | 5 | 25 | 8 |
| HPMC | 3,800 (Ubbelohde) | 2,747 | | 86,000 | 1.7-1.9 | 0.1-0.2 | 29 | - | 7 | 30 | 4 |
| HPMC | 4,000 (Ubbelohde) | | | 86,000 | 1.8-2.0 | 0.2-0.3 | 29 | - | 7 | 32 | 8 |
| HPMC | 80-120 (Ubbelohde) | | | 12,000 | 1.1-1.6 | 0.1-0.3 | 21 | - | 5 | 25 | 7 |
| HPMC | 50 (Ubbelohde) | | | 11,500 | 1.8-2.0 | 0.2-0.3 | 29 | - | 7 | 32 | 7 |
| HPMC | 6 (Ubbelohde) | | | 10,000 | 1.8-2.0 | 0.2-0.3 | 29 | - | 7 | 29 | 6 |
| HPMC | 5 (Ubbelohde) | | | 10,000 | 1.8-2.0 | 0.2-0.3 | 29 | - | 9 | 32 | 7 |
| HPMC | 11,000 (Brookfield)/15,000 (Ubbelohde) | 8,309 | | - | 1.4 | 0.21 | 22 | - | 8 | 23 | 3 |
| HPMC | 3,800 (Brookfield)/4,000 (Ubbelohde) | 4,104 | | - | 1.8 | 0.13 | 28 | - | 5 | 31 | 4 |
| HPMC | 22,000 (Brookfield)/40,000 (Ubbelohde) | 40,020 | | - | - | - | - | - | - | 31 | 4 |
| HPMC | 3,800 (Brookfield)/4,000 (Ubbelohde) | | X | - | - | - | 18 | - | 27 | 21 | 15 |
| HPMC | 22,000 (Brookfield)/40,000 (Ubbelohde) | | X | - | - | - | 18 | - | 27 | 20 | 13 |
| IHPMC | 65,000 (Brookfield) ? | 311,267 | | - | 1.6-1.9 | 0.2-0.4 | 20-30 | - | 2-25 | 32 | 2 |
| HPMC | 65,000-86,000 (Brookfield) ? | | X | - | - | - | 20-30 | - | 2-25 | 27 | 2 |

(continued)

| Source | Viscosity Grade (cps) | Measured Viscosity Grade (cps) | Surface Treated | Average MW | D.S. | M.S. | Reported (%) Me | HE | HP | Measured Me | HP |
|---|---|---|---|---|---|---|---|---|---|---|---|
| HPMC | 22,000 (Brookfield) ? | 68,385 | | - | 1.6-1.9 | 0.4-0.8 | 20-30 | - | 2-25 | 23 | 4 |
| MC | 4,000 | | X | 86,000 | 1.6-1.9 | - | 27.5-31.5 | - | - | 33 | 0 |
| MC | 400 | | X | 40,000 | 1.6-1.9 | - | 27.5-31.5 | - | - | 28 | 0 |
| MC | 1,500 | | X | 63,000 | - | - | - | - | - | 34 | 0.1 |
| MC | 25 | | X | 17,000 | - | - | - | - | - | 32 | 0 |
| MC | 15 | | X | 14,000 | 1.6-1.9 | - | 27.5-31.5 | - | - | 31 | 0 |

Table II: Correlation Coefficients & Exponents

| MC NP Index | | | | | | | | | | | |
|---|---|---|---|---|---|---|---|---|---|---|---|
| B1 | | | | B2 | B3 | B4 | Y1 | Y2 | Y3 | Y4 | Y5 | Y6 |
| -10.54871 | | | | 0.00037 | 13.41978 | 1.16830 | 0.99736 | 11.81617 | -1.36696 | 0.98050 | -0.07942 | 0.06035 |
| MC TPB Index | | | | | | | | | | | |
| C1 | C2 | C3 | C4 | C5 | Z1 | Z2 | Z3 | Z4 | Z5 | Z6 | Z7 | Z8 |
| -70.10242 | 6.88755 | 33.0670 7 | 48.2350 4 | 2.11972 | 0.02781 | -0.19560 | -0.22841 | -0.11900 | -0.36825 | 0.09072 | 0.02629 | 0.03841 |
| HP NP Index | | | | | | | | | | | |
| A1 | A2 | A3 | A4 | A5 | X1 | X2 | X3 | X4 | X5 | X6 | X7 | X8 |
| 2.956625 | -0.568141 | -0.013089 | 4.07E-06 | 0.713089 | 0.490977 | 0.152411 | 0.129997 | 0.608552 | -0.765522 | 1.205066 | 3.080522 | -0.590659 |

Table III: Correlation Compared to Data

| viscosity gr. (cps) | 5 | 6 | 50 | 100 | 4104 | 2747 | 3800 | 11000 | 8309 | 40020 | 68385 | 311267 | 83803 |
|---|---|---|---|---|---|---|---|---|---|---|---|---|---|
| Me% | 32.3 | 29.1 | 31.8 | 24.6 | 30.96 | 30 | 31.8 | 25.3 | 22.82 | 31.28 | 23.34 | 31.57 | 24.7 |
| HP% | 7 | 6 | 7 | 7 | 4.05 | 4 | 8 | 8 | 3.38 | 3.94 | 4.27 | 1.56 | 9 |
| Experimentally Measured Nail Pull Index (HPMC - wt%) | | | | | | | | | | | | | |
| 0.25 | 1.19 | 0.85 | 1.30 | 1.21 | 1.20 | 1.14 | 1.33 | 1.29 | 1.22 | 1.19 | 1.35 | 1.33 | 1.39 |
| 0.5 | 0.92 | 1.09 | 1.24 | 1.25 | 1.38 | 1.45 | 1.44 | 1.57 | 1.54 | 1.51 | 1.43 | 1.49 | 1.64 |
| 1 | 0.89 | 0.91 | 1.08 | 1.35 | 1.65 | 1.65 | 1.53 | 1.70 | 1.62 | 1.63 | 1.98 | 1.85 | 1.95 |
| 2 | | | | | 2.04 | 2.01 | 1.93 | 2.28 | 2.21 | 2.12 | 2.22 | 2.30 | 2.17 |
| Nail Pull Index as Calculated by Correlation (HPMC - wt%) | | | | | | | | | | | | | |
| 0.25 | 1.11 | 0.98 | 1.16 | 1.17 | 1.18 | 1.18 | 1.35 | 1.35 | 1.25 | 1.25 | 1.31 | 1.30 | 1.45 |
| 0.5 | 0.96 | 0.92 | 1.16 | 1.24 | 1.35 | 1.34 | 1.42 | 1.49 | 1.46 | 1.45 | 1.53 | 1.53 | 1.59 |
| 1 | 0.88 | 0.91 | 1.24 | 1.38 | 1.60 | 1.59 | 1.61 | 1.73 | 1.75 | 1.73 | 1.86 | 1.86 | 1.85 |
| 2 | | | | | 1.96 | 1.93 | 1.91 | 2.10 | 2.17 | 2.14 | 2.31 | 2.33 | 2.26 |

Table IV: ASTM Standard

| Tests: | Flexural Strength | | Nail Pull Resistance |
|---|---|---|---|
| Thickness (inches) | Method A (lbs.) | Method B (lbf) | Method B (lbf) |
| 1/4 | 50 | 46 | 36 |
| 5/16 | 65 | 62 | 46 |
| 3/8 | 80 | 77 | 56 |
| 1/2 | 110 | 107 | 77 |
| 5/8 | 150 | 147 | 87 |
| 3/4 | 170 | 167 | 97 |

Table V: Strength Enhancement

| Additive | Nail Pull Improvement[a,b] (%) |
|---|---|
| MCMC | 15[d] |
| SPMC | 15[d] |
| SEC | -1 |
| Hydrolyzed MC | 17[d] |

a) 1 part additive to 100 parts stucco by weight.
b) Improvement in nail pull resistance compared to control sample at same density.
c) Projected boardweight to just meet the ASTM nail pull specification.
d) Substantially strengthens papered wallboard (e.g. at least 10% improvement)

Table VI: Solubility of Modified Cellulose Ethers

| Polymer | Cloud Range (°C) | Clear Range (°C) |
|---|---|---|
| MC A4C | 44-58 | 37-30 |
| SPMC | 62-75 | 48-37 |
| Hydrolyzed MC | 49-63 | 49-33 |

Table VII: Cellulose Ether Derivatives

| | Viscosity (cps) | Clear Start (C) | Clear Stop (C) |
|---|---|---|---|
| MC A4C | 450 | 37 | 30 |
| Hydrolized MC | 10 | 49 | 33 |
| SPMC | 42 | 63 | 45 |

**Claims**

1. A composite structure comprising:

   an inorganic, discrete phase; and
   an additive,
   wherein the inorganic, discrete phase comprises gypsum, and is formed by hydration in the presence of the additive and water, and

the additive includes a cellulose ether, wherein the cellulose ether is selected such that the cellulose ether is insoluble in water at 20 degrees centigrade, and both a viscosity grade of the cellulose ether and one of a degree of substitution and molar substitution of at least one substituent group of the cellulose ether are selected such that one of the group consisting of the nail pull resistance, the flexural strength and the modulus of rupture of the composite is substantially increased compared to a composite structure prepared without the additive.

2. The composite structure of claim 1, wherein the cellulose ether is one of an hydroxypropyl cellulose, an hydroxyethyl cellulose, a methyl cellulose, an hydroxypropyl methyl cellulose, an ethyl hydroxyethyl cellulose, an ethyl hydroxy-propyl cellulose, and an hydroxyethyl methyl cellulose.

3. The composite structure of claim 1, wherein the cellulose ether is an hydroxyethyl cellulose.

4. The composite structure of claim 1, wherein the cellulose ether is an hydroxypropyl methyl cellulose.

5. The composite structure of claim 1, wherein the cellulose ether is an hydroxyethyl methyl cellulose.

6. The composite structure of claim 1, wherein the cellulose ether is a methyl cellulose.

7. The composite structure of claim 1, wherein the cellulose ether is selected to have a methyl degree of substitution greater than 0.02 and less than 1.0.

8. The composite structure of claim 4, wherein the hydroxypropyl substitution is less than 4 wt% or greater than 6 wt%.

9. The composite structure of claim 8, wherein the hydroxypropyl substitution is greater than 8 wt%.

10. The composite structure of claim 8, wherein the amount of the additive is no greater than 0.5 wt%, and the cellulose ether is selected to have a methyl degree of substitution of at least 1.5.

11. The composite structure of claim 4, wherein the degree of substitution of the methyl substituent group and the molar substitution of the hydroxypropyl substituent are selected such that the hydroxypropyl methyl cellulose is insoluble in water at a temperature less than 30 degrees centigrade.

12. The composite structure of claim 3, wherein the molar substitution of the hydroxyethyl cellulose is selected such that the hydroxyethyl cellulose is insoluble in water at a temperature less than 30 degrees centigrade.

13. The composite structure of any one of claims 1 to 12, wherein the composite structure comprises substantially no clay.

14. The composite structure of any one of the preceding claims, further comprising a gluturaldehyde, whereby the composite structure resists mold growth.

15. The composite structure of claim 14, wherein the gluturaldehyde is added as a surface treatment on the additive, whereby dissolution of the additive is delayed, affecting the microstructure of the composite structure.

16. The composite structure of any one of the preceding claims, further comprising a sodium trimetaphosphate.

17. The composite structure of claim 16, wherein the sodium trimetaphosphate is added in a range from 0.02 wt% to 1 wt%.

18. The composite structure of any one of the preceding claims, wherein the composite structure has a density in a range from 0.3 g/cc to 0.8g/cc.

19. The composite structure of any one of the preceding claims, wherein the composite structure is a wallboard.

20. The composite structure of any one of the preceding claims, further comprising at least one facing sheet applied to at least one surface of the composite structure.

21. The composite structure of claim 20, further comprising a surface modifier, wherein the surface modifier is applied to at least one facing sheet.

**22.** The composite structure of claim 21, wherein the surface modifier comprises a bio-active polymer.

**23.** The composite structure of any one of the preceding claims, further comprising an accelerant, wherein the accelerant nucleates crystallization of gypsum crystals.

**24.** The composite structure of any one of the preceding claims, further comprising a bio-active polymer.

**25.** The composite structure of claim 24, wherein the bio-active polymer is formed by a bioactive functional group within the additive.

**26.** The composite structure of any one of the preceding claims, further comprising: a reinforcement, wherein the inorganic discrete phase is formed by hydration in the presence of the reinforcement and the reinforcement is surface modified by a surface modifier.

**27.** The composite structure of claim 26, wherein the reinforcement is fibrous.

**28.** The composite structure of claim 27, wherein the reinforcement is one of a monofilament, bundled fibers, spun strands.

**29.** The composite structure of claim 28, wherein the fibrous surfaces are one of bundled fibers and spun strands, and the surface modifier comprises an intact layer around the one of bundled fibers and spun strands while allowing the fibrous surfaces of one of the bundled fibers and spun strands to separate a finite distance during processing, such that the surface modifier acts as a binder.

**30.** The composite structure of claim 28 or 29, wherein the reinforcement is one of cotton, hemp and wood.

**31.** The composite structure of claim 27, wherein the reinforcement is one of glass, mineral wool, metal, polypropylene, polyester, nylon.

**32.** The composite structure of claim 27, wherein the surface modifier is one of a carboxymethyl cellulose, and the reinforcements are arranged in a consolidated layer.

**33.** The composite structure of claim 28, wherein the surface modifier comprises a bio-active polymer.

**34.** The composite structure of claim 33, wherein the bio-active polymer is a quartemized poly(vinylpyridine).

**35.** The composite structure of claim 28, wherein the surface modifier is a multifunctional molecule comprising at least one polymeric group that binds the surface modifier to one of the reinforcement and the gypsum, and another polymeri~ group having a different function.

**36.** The composite structure of claim 27, wherein the surface modifier is a cellulose ether.

**37.** The composite structure of claim 36, wherein the cellulose ether is crosslinked by a crosslinking agent.

**38.** The composite structure of claim 36, wherein the cellulose ether is hydroxypropyl methyl cellulose.

**39.** The composite structure of claim 37, wherein the crosslinking agent is a polyurethane latex, and the cellulose ether is hydroxypropyl methyl cellulose.

**40.** The composite structure of claim 37, wherein the crosslinking agent is an organic titanate and the cellulose ether is hydroxypropyl methyl cellulose.

**41.** The composite structure of claim 37, wherein the cellulose ether is hydroxyethyl methyl cellulose and the crosslinking agent is a sulfonate melamine.

**42.** The composite structure of claim 26, wherein the surface modifier is one of a starch, a starch derivative, a cellulose derivative, an acrylic polymer, a polyvinylacetate, a polyvinyl alcohol, an alginate and a natural gum, and a process of fabricating the composite is selected such that a substantial portion of the surface modifier remains on the surface of the reinforcement after the composite structure is fabricated, whereby the pullout strength of the fiber is increased compared to a reinforcement without the surface modifier.

43. The composite structure of claim 42, wherein the process of fabricating includes a step that exposes the surface modified reinforcement to a high temperature, whereby the surface modifier is crosslinked.

44. The composite structure of claim 26, wherein the surface modifier is a polyvinyl pyrrolidone.

45. The composite structure of claim 44, wherein the surface modifier is crosslinked by ultraviolet light.

46. The composite structure of claim 44, wherein the polyvinyl pyrrolidone is crosslinked by one of calcium chloride with peroxides and poly(styrene sulfonate).

47. The composite structure of claim 26, further comprising a coupling agent, whereby a bond between the reinforcement and the surface modifier is formed or strengthened.

48. The composite structure of claim 47, wherein the coupling agent is a silane.

49. The composite structure of claim 47, wherein the coupling agent is an organic titanate.

50. The composite structure of claim 47, wherein the coupling agent is applied as a primer to a surface of the reinforcement prior to the surface modifier, whereby the surface modifier is crosslinked adjacent to the surface of the reinforcement but is not crosslinked at a radial position further from the surface of the reinforcement.

51. The composite structure of claim 26, further comprising a plasticizer that is added to the surface modifier.

52. The composite structure of any one of the preceding claims, further comprising: a glass mat comprised of glass strands in contact with the inorganic, discrete phase; and a surface modifier coating at least a portion of the glass strands; wherein the cellulose ether being selected such that the cellulose ether has functional groups that bind at least a portion of the inorganic, discrete phase to the surface modifier such that the glass strands are at least partially bound to the inorganic, discrete phase.

53. The composite structure of claim 52, wherein the degree of substitution of at least one of the substitutional groups of the cellulose ether is selected such that the cellulose ether is insoluble in water at a temperature less than 30 degrees centigrade.

54. The composite structure of claim 52, wherein the surface modifier is bio-active.

55. A process for making a composite structure comprising:

selecting an inorganic material comprised of discrete particles of a calcium sulfate hemihydrate and/or calcium sulphate anhydrite and an additive comprised of discrete particles of a cellulose ether;
mixing together the inorganic material and the additive, until the additive is dispersed throughout the inorganic material, forming a mixture;
combining the mixture and an amount of water, forming a slurry;
shaping the slurry, forming the composite structure; and
drying the composite structure, wherein the cellulose ether has at least one substituent group selected from the substituent groups of methyl, hydroxypropyl and hydroxyethyl and one of a degree of substitution and a molar substitution of the at least one substituent group is selected to substantially strengthen the composite structure, and wherein the cellulose ether is selected such that the cellulose ether is insoluble in water at 20 degrees centigrade.

56. The process of claim 55, wherein the step of selecting includes selecting a cellulose ether that is at least partially soluble in water during at least a portion of the step of drying.

57. Use of less than 3wt% of an additive for forming a composite structure by hydration of an inorganic material being calcium hydrate hemihydrate and/or calcium hydrate anhydrite, the additive comprising a cellulose ether, wherein the cellulose ether is selected such that the cellulose ether is insoluble in water at 20 degrees centigrade, and both a viscosity grade of the cellulose ether and one of a degree of substitution and molar substitution of at least one substituent group of the cellulose ether are selected such that one of the group consisting of the nail pull resistance, the flexural strength and the modulus of rupture of the composite is substantially increased compared to a composite structure prepared without the additive.

58. Use according to claim 57 wherein the additive is insoluble in water at less than 30 degrees centigrade.

59. The use of claim 57 or 58, wherein the substituent groups are ethyl or methyl groups.

**Patentansprüche**

1. Verbundstruktur, die Folgendes umfasst:

   eine anorganische, diskrete Phase; und
   ein Additiv,
   wobei die anorganische, diskrete Phase Gips umfasst und durch Hydratisierung in Gegenwart des Additivs und von Wasser gebildet wird und
   das Additiv einen Celluloseether umfasst, wobei der Celluloseether so ausgewählt ist, dass der Celluloseether in Wasser bei 20 °C unlöslich ist, und sowohl eine Viskositätsstufe des Celluloseethers als auch ein Grad der Substitution und molaren Substitution zumindest einer Substituentengruppe des Celluloseethers sind so ausgewählt, dass eines aus der Gruppe, die aus Nagelauszugsfestigkeit, Biegefestigkeit und Bruchmodul des Verbundstoffs besteht, im Vergleich zu einer Verbundstruktur, die ohne das Additiv hergestellt ist, im Wesentlichen erhöht ist.

2. Verbundstruktur nach Anspruch 1, wobei der Celluloseether einer aus einer Hydroxypropylcellulose, einer Hydroxyethylcellulose, einer Methylcellulose, einer Hydroxypropylmethylcellulose, einer Ethylhydroxyethylcellulose, einer Ethylhydroxypropylcellulose und einer Hydroxymethylcellulose ist.

3. Verbundstruktur nach Anspruch 1, wobei der Celluloseether eine Hydroxyethylcellulose ist.

4. Verbundstruktur nach Anspruch 1, wobei der Celluloseether eine Hydroxypropylmethylcellulose ist.

5. Verbundstruktur nach Anspruch 1, wobei der Celluloseether eine Hydroxymethylcellulose ist.

6. Verbundstruktur nach Anspruch 1, wobei der Celluloseether eine Methylcellulose ist.

7. Verbundstruktur nach Anspruch 1, wobei der Celluloseether so ausgewählt ist, dass er einen Methylsubstitutionsgrad über 0,02 und unter 1,0 aufweist.

8. Verbundstruktur nach Anspruch 4, wobei die Hydroxypropylsubstitution weniger als 4 Gew.-% oder mehr als 6 Gew.-% beträgt.

9. Verbundstruktur nach Anspruch 8, wobei die Hydroxypropylsubstitution mehr als 8 Gew.-% beträgt.

10. Verbundstruktur nach Anspruch 8, wobei die Menge des Additivs nicht mehr als 0,5 Gew.-% beträgt und der Celluloseether ausgewählt ist, um einen Methylsubstitutionsgrad von zumindest 1,5 aufzuweisen.

11. Verbundstruktur nach Anspruch 4, wobei der Substitutionsgrad der Methylsubstituentengruppe und die molare Substitution des Hydroxypropylsubstituenten so ausgewählt sind, dass die Hydroxypropylmethylcellulose bei einer Temperatur unter 30 °C in Wasser unlöslich ist.

12. Verbundstruktur nach Anspruch 3, wobei die molare Substitution der Hydroxyethylcellulose so ausgewählt ist, dass die Hydroxyethylcellulose in Wasser bei einer Temperatur unter 30 °C unlöslich ist.

13. Verbundstruktur nach einem der Ansprüche 1 bis 12, wobei die Verbundstruktur im Wesentlichen keinen Ton umfasst.

14. Verbundstruktur nach einem der vorangegangenen Ansprüche, die außerdem einen Glutaraldehyd umfasst, wodurch die Verbundstruktur gegen Schimmelwachstum resistent ist.

15. Verbundstruktur nach Anspruch 14, wobei der Glutaraldehyd als Oberflächenbehandlung auf dem Additiv zugesetzt ist, wodurch die Auflösung des Additivs verzögert wird, was sich auf die Mikrostruktur der Verbundstruktur auswirkt.

16. Verbundstruktur nach einem der vorangegangenen Ansprüche, die außerdem ein Natriumtrimetaphosphat umfasst.

17. Verbundstruktur nach Anspruch 16, wobei das Natriumtrimetaphosphat im Bereich von 0,02 Gew.-% bis 1 Gew.-% zugesetzt wird.

18. Verbundstruktur nach einem der vorangegangenen Ansprüche, wobei die Verbundstruktur eine Dichte im Bereich von 0,3 g/cm$^3$ bis 0,8 g/cm$^3$ aufweist.

19. Verbundstruktur nach einem der vorangegangenen Ansprüche, wobei die Verbundstruktur eine Bauplatte ist.

20. Verbundstruktur nach einem der vorangegangenen Ansprüche, die außerdem zumindest eine Verkleidungslage umfasst, die auf zumindest eine Oberfläche der Verbundstruktur aufgebracht ist.

21. Verbundstruktur nach Anspruch 20, die ferner einen Oberflächenmodifikator umfasst, wobei der Oberflächenmodifikator auf zumindest eine Verkleidungslage aufgebracht ist.

22. Verbundstruktur nach Anspruch 21, wobei der Oberflächenmodifikator ein bioaktives Polymer umfasst.

23. Verbundstruktur nach einem der vorangegangenen Ansprüche, die außerdem einen Beschleuniger umfasst, wobei der Beschleuniger den Keim für die Kristallisierung von Gipskristallen bildet.

24. Verbundstruktur nach einem der vorangegangenen Ansprüche, die außerdem ein bioaktives Polymer umfasst.

25. Verbundstruktur nach Anspruch 24, wobei das bioaktive Polymer durch eine bioaktive funktionelle Gruppe innerhalb des Additivs gebildet wird.

26. Verbundstruktur nach einem der vorangegangenen Ansprüche, die außerdem Folgendes umfasst: eine Verstärkung, wobei die anorganische, diskrete Phase durch Hydratisierung in Gegenwart der Verstärkung gebildet ist und die Verstärkung durch einen Oberflächenmodifikator modifiziert ist.

27. Verbundstruktur nach Anspruch 26, wobei die Verstärkung faserhältig ist.

28. Verbundstruktur nach Anspruch 27, wobei die Verstärkung eines aus Monofilament, gebündelten Fasern oder gesponnenen Strängen besteht.

29. Verbundstruktur nach Anspruch 28, wobei die faserhältigen Oberflächen eines aus gebündelten Fasern und gesponnen Strängen sind und der Oberflächenmodifikator eine intakte Schicht um das eine aus den gebündelten Fasern und gesponnen Strängen umfasst, während es faserhältigen Oberflächen von einem aus den gebündelten Fasern und gesponnen Strängen ermöglicht wird, einen begrenzten Abstand während der Verarbeitung zu halten, sodass der Oberflächenmodifikator als Bindemittel dient.

30. Verbundstruktur nach Anspruch 28 oder 29, wobei die Verstärkung eines aus Baumwolle, Hanf und Holz ist.

31. Verbundstruktur nach Anspruch 27, wobei die Verstärkung eines aus Glas, Mineralwolle, Metall, Polypropylen, Polyester, Nylon ist.

32. Verbundstruktur nach Anspruch 27, wobei der Oberflächenmodifikator einer aus Carboxymethylcellulose ist und die Verstärkungen in einer kompakten Schicht angeordnet sind.

33. Verbundstruktur nach Anspruch 28, wobei der Oberflächenmodifikator ein bioaktives Polymer umfasst.

34. Verbundstruktur nach Anspruch 33, wobei das bioaktive Polymer ein quaternisiertes Poly(vinylpyridin) ist.

**35.** Verbundstruktur nach Anspruch 28, wobei der Oberflächenmodifikator ein multifunktionelles Molekül ist, das zumindest eine Polymergruppe, die den Oberflächenmodifikator an eines aus der Verstärkung und dem Gips bindet, und eine weitere Polymergruppe mit einer anderen Funktion umfasst.

**36.** Verbundstruktur nach Anspruch 27, wobei der Oberflächenmodifikator ein Celluloseether ist.

**37.** Verbundstruktur nach Anspruch 36, wobei der Celluloseether durch ein Vernetzungsmittel vernetzt ist.

**38.** Verbundstruktur nach Anspruch 36, wobei der Celluloseether Hydroxypropylmethylcellulose ist.

**39.** Verbundstruktur nach Anspruch 37, wobei das Vernetzungsmittel ein Polyurethanlatex ist und der Celluloseether Hydroxypropylmethylcellulose ist.

**40.** Verbundstruktur nach Anspruch 37, wobei das Vernetzungsmittel ein organisches Titanat ist und der Celluloseether Hydroxypropylmethylcellulose ist.

**41.** Verbundstruktur nach Anspruch 37, wobei der Celluloseether Hydroxyethylmethylcellulose ist und das Vernetzungsmittel ein Sulfonatmelamin ist.

**42.** Verbundstruktur nach Anspruch 26, wobei der Oberflächenmodifikator eines aus Stärke, einem Stärkederivat, einem Cellulosederivat, einem Acrylpolymer, einem Polyvinylacetat, einem Polyvinylalkohol, einem Alginat und einem Naturgummi ist und ein Verfahren zur Herstellung des Verbundstoffs so ausgewählt ist, dass ein wesentlicher Anteil des Oberflächenmodifikators auf der Oberfläche der Verstärkung verbleibt, nachdem die Verbundstruktur hergestellt wurde, wodurch die Auszugsfestigkeit der Fasern im Vergleich zu einer Verstärkung ohne den Oberflächenmodifikator erhöht ist.

**43.** Verbundstruktur nach Anspruch 42, wobei das Herstellungsverfahren einen Schritt umfasst, bei dem die oberflächenmodifizierte Verstärkung einer hohen Temperatur ausgesetzt wird, wodurch der Oberflächenmodifikator vernetzt wird.

**44.** Verbundstruktur nach Anspruch 26, wobei der Oberflächenmodifikator ein Polyvinylpyrrolidon ist.

**45.** Verbundstruktur nach Anspruch 44, wobei der Oberflächenmodifikator durch UI-traviolettlicht vernetzt ist.

**46.** Verbundstruktur nach Anspruch 44, wobei das Polyvinylpyrrolidon durch eines aus Calciumchlorid mit Peroxiden und Poly(styrolsulfonat) vernetzt ist.

**47.** Verbundstruktur nach Anspruch 26, die außerdem einen Haftvermittler umfasst, wodurch eine Bindung zwischen der Verstärkung und dem Oberflächenmodifikator gebildet oder verstärkt wird.

**48.** Verbundstruktur nach Anspruch 47, wobei der Haftvermittler ein Silan ist.

**49.** Verbundstruktur nach Anspruch 47, wobei der Haftvermittler ein organisches Titanat ist.

**50.** Verbundstruktur nach Anspruch 47, wobei der Haftvermittler vor dem Oberflächenmodifikator als Grundierung auf eine Oberfläche der Verstärkung aufgebracht ist, wodurch der Oberflächenmodifikator angrenzend an die Oberfläche des Verstärkers vernetzt wird, aber an einer Randposition weiter von der Oberfläche der Verstärkung entfernt nicht vernetzt wird.

**51.** Verbundstruktur nach Anspruch 26, die außerdem einen Weichmacher umfasst, der zum Oberflächenmodifikator zugesetzt ist.

**52.** Verbundstruktur nach einem der vorangegangenen Ansprüche, die außerdem Folgendes umfasst: eine Glasmatte, die aus Glassträngen in Kontakt mit der anorganischen, diskreten Phase besteht; und einen Oberflächenmodifikator, der zumindest einen Teil der Glasstränge bedeckt; wobei der Celluloseether so ausgewählt ist, dass der Celluloseether funktionelle Gruppen aufweist, die zumindest einen Teil der anorganischen, diskreten Phase an den Oberflächenmodifikator binden, sodass die Glasstränge zumindest teilweise an die anorganische, diskrete Phase gebunden sind.

**53.** Verbundstruktur nach Anspruch 52, wobei der Substitutionsgrad zumindest einer der Substitutionsgruppen des Celluloseethers so ausgewählt ist, dass der Celluloseether in Wasser bei einer Temperatur unter 30 °C unlöslich ist.

**54.** Verbundstruktur nach Anspruch 52, wobei der Oberflächenmodifikator bioaktiv ist.

**55.** Verfahren zur Herstellung einer Verbundstruktur, das Folgendes umfasst:

Auswählen eines anorganischen Materials, das aus diskreten Teilchen eines Calciumsulfathemihydrats und/oder Calciumsulfatanhydrits besteht, und eines Additivs, das aus diskreten Teilchen eines Celluloseethers besteht;
Vermischen des anorganischen Materials und des Additivs, bis das Additiv im gesamten anorganischen Material dispergiert ist, wodurch ein Gemisch hergestellt wird;
Vereinigen des Gemischs und einer Wassermenge, um eine Aufschlämmung herzustellen;
Formen der Aufschlämmung, wodurch die Verbundstruktur hergestellt wird; und
Trocknen der Verbundstruktur, wobei der Celluloseether zumindest eine Substituentengruppe aufweist, die aus den Substituentengruppen Methyl, Hydroxypropyl und Hydroxyethyl ausgewählt ist, und eines aus einem Substitutionsgrad und einer molaren Substitution der zumindest einen Substituentengruppe so ausgewählt ist, dass die Verbundstruktur wesentlich gestärkt wird, und wobei der Celluloseether so ausgewählt ist, dass der Celluloseether in Wasser bei 20 °C unlöslich ist.

**56.** Verfahren nach Anspruch 55, wobei der Schritt des Auswählens Auswählen eines Celluloseethers umfasst, der während zumindest eines Teils des Trocknungsschritts zumindest teilweise in Wasser löslich ist.

**57.** Verwendung von weniger als 3 Gew.-% eines Additivs zur Herstellung einer Verbundstruktur durch Hydratisierung eines anorganischen Materials, das Calciumhydrathemihydrat und/oder Calciumhydratanhydrit ist, wobei das Additiv einen Celluloseether umfasst, wobei der Celluloseether so ausgewählt ist, dass der Celluloseether in Wasser bei 20 °C unlöslich ist, und sowohl eine Viskositätsstufe des Celluloseethers als auch ein Grad der Substitution und molaren Substitution zumindest einer Substituentengruppe des Celluloseethers so ausgewählt sind, dass eines aus der Gruppe, die aus Nagelauszugsfestigkeit, Biegefestigkeit und Bruchmodul des Verbundstoffs besteht, im Vergleich zu einer Verbundstruktur, die ohne das Additiv hergestellt ist, im Wesentlichen erhöht ist.

**58.** Verwendung nach Anspruch 57, wobei das Additiv in Wasser bei weniger als 30 °C unlöslich ist.

**59.** Verwendung nach Anspruch 57 oder 58, wobei die Substituentengruppen Ethyl- oder Methylgruppen sind.

**Revendications**

**1.** Structure composite comprenant :

une phase discrète inorganique ; et
un additif,
dans laquelle la phase discrète inorganique comprend du gypse, et est formée par hydratation en présence de l'additif et d'eau, et
l'additif comprend un éther de cellulose, dans lequel l'éther de cellulose est choisi de façon que l'éther de cellulose soit insoluble dans l'eau à 20°C, et tant l'indice de viscosité de l'éther de cellulose que l'un parmi le degré de substitution et la substitution molaire d'au moins un groupe substituant de l'éther de cellulose sont choisis de façon que l'un de l'ensemble constitué par la résistance à l'arrachage de clou, la résistance à la flexion et le module de rupture du composite soit sensiblement augmenté en comparaison avec une structure composite préparée sans l'additif.

**2.** Structure composite selon la revendication 1, dans laquelle l'éther de cellulose est l'un parmi une hydroxypropylcellulose, une hydroxyéthylcellulose, une méthylcellulose, une hydroxypropylméthylcellulose, une éthylhydroxyéthylcellulose, une éthylhydroxypropylcellulose, et une hydroxyéthylméthylcellulose.

**3.** Structure composite selon la revendication 1, dans laquelle l'éther de cellulose est une hydroxyéthylcellulose.

**4.** Structure composite selon la revendication 1, dans laquelle l'éther de cellulose est une hydroxypropylméthylcellulose.

**5.** Structure composite selon la revendication 1, dans laquelle l'éther de cellulose est une hydroxyéthylméthylcellulose.

**6.** Structure composite selon la revendication 1, dans laquelle l'éther de cellulose est une méthylcellulose.

**7.** Structure composite selon la revendication 1, dans laquelle l'éther de cellulose est choisi de façon à avoir un degré de substitution méthyle supérieur à 0,02 et inférieur à 1,0.

**8.** Structure composite selon la revendication 4, dans laquelle la substitution hydroxypropyle représente moins de 4 % en poids ou plus de 6 % en poids.

**9.** Structure composite selon la revendication 8, dans laquelle la substitution hydroxypropyle représente plus de 8 % en poids.

**10.** Structure composite selon la revendication 8, dans laquelle la quantité de l'additif ne dépasse pas 0,5 % en poids, et l'éther de cellulose est choisi de façon à avoir un degré de substitution méthyle d'au moins 1,5.

**11.** Structure composite selon la revendication 4, dans laquelle le degré de substitution du groupe substitution méthyle et la substitution molaire du substituant hydroxypropyle sont choisis de façon que l'hydroxypropylméthylcellulose soit insoluble dans l'eau à une température inférieure à 30°C.

**12.** Structure composite selon la revendication 3, dans laquelle la substitution molaire de l'hydroxyéthylcellulose est choisie de façon que l'hydroxyéthylcellulose soit insoluble dans l'eau à une température inférieure à 30°C.

**13.** Structure composite selon l'une quelconque des revendications 1 à 12, laquelle structure composite ne comprend pratiquement pas d'argile.

**14.** Structure composite selon l'une quelconque des revendications précédentes, comprenant en outre un glutaraldéhyde, en conséquence de quoi la structure composite résiste à la prolifération des moisissures.

**15.** Structure composite selon la revendication 14, dans laquelle le glutaraldéhyde est ajouté sous la forme d'un traitement de surface sur l'additif, en conséquence de quoi la dissolution de l'additif est retardée, ce qui affecte la microstructure de la structure composite.

**16.** Structure composite selon l'une quelconque des revendications précédentes, comprenant en outre un trimétaphosphate de sodium.

**17.** Structure composite selon la revendication 16, dans laquelle le trimétaphosphate de sodium est ajouté à raison de 0,02 % en poids à 1 % en poids.

**18.** Structure composite selon l'une quelconque des revendications précédentes, laquelle structure composite a une masse volumique située dans la plage allant de 0,3 g/cm$^3$ à 0,8 g/cm$^3$.

**19.** Structure composite selon l'une quelconque des revendications précédentes, laquelle structure composite est un panneau mural.

**20.** Structure composite selon l'une quelconque des revendications précédentes, comprenant en outre au moins une feuille de revêtement appliquée sur au moins une surface de la structure composite.

**21.** Structure composite selon la revendication 20, comprenant en outre un modificateur de surface, dans laquelle le modificateur de surface est appliqué sur au moins une feuille de revêtement.

**22.** Structure composite selon la revendication 21, dans laquelle le modificateur de surface comprend un polymère bioactif.

**23.** Structure composite selon l'une quelconque des revendications précédentes, comprenant en outre un accélérateur, dans laquelle l'accélérateur a un effet de nucléation sur la cristallisation des cristaux de gypse.

**24.** Structure composite selon l'une quelconque des revendications précédentes, comprenant en outre un polymère bioactif.

**25.** Structure composite selon la revendication 24, dans laquelle le polymère bioactif est formé par un groupe fonctionnel bioactif à l'intérieur de l'additif.

**26.** Structure composite selon l'une quelconque des revendications précédentes, comprenant en outre un renforcement, dans laquelle la phase discrète inorganique est formée par hydratation en présence du renforcement et le renforcement est modifié en surface par un modificateur de surface.

**27.** Structure composite selon la revendication 26, dans laquelle le renforcement est fibreux.

**28.** Structure composite selon la revendication 27, dans laquelle le renforcement est l'un parmi un monofilament, des fibres en faisceau, des brins filés.

**29.** Structure composite selon la revendication 28, dans laquelle les surfaces fibreuses sont l'une parmi les fibres en faisceau et les brins filés, et le modificateur de surface comprend une couche intact autour de l'un parmi les fibres en faisceau et les brins filés tout en permettant aux surfaces fibreuses de l'un parmi les fibres en faisceau et les brins filés de se séparer sur une distance finie durant le traitement, de façon que le modificateur de surface agisse comme un liant.

**30.** Structure composite selon la revendication 28 ou 29, dans laquelle le renforcement est l'un parmi le coton, le chanvre et le bois.

**31.** Structure composite selon la revendication 27, dans laquelle le renforcement est l'un parmi le verre, la laine minérale, le métal, le polypropylène, le polyester, le nylon.

**32.** Structure composite selon la revendication 27, dans laquelle le modificateur de surface est l'un parmi une carboxyméthylcellulose, et les renforcements sont agencés dans une couche consolidée.

**33.** Structure composite selon la revendication 28, dans laquelle le modificateur de surface comprend un polymère bioactif.

**34.** Structure composite selon la revendication 33, dans laquelle le polymère bioactif est une polyvinylpyridine quaternisée.

**35.** Structure composite selon la revendication 28, dans laquelle le modificateur de surface est une molécule multifonctionnelle comprenant au moins un groupe polymère qui lie le modificateur de surface à l'un parmi le renforcement et le gypse, et un autre groupe polymère ayant une fonction différente.

**36.** Structure composite selon la revendication 27, dans laquelle le modificateur de surface est un éther de cellulose.

**37.** Structure composite selon la revendication 36, dans laquelle l'éther de cellulose est réticulé par un agent de réticulation.

**38.** Structure composite selon la revendication 36, dans laquelle l'éther de cellulose est l'hydroxypropylméthylcellulose.

**39.** Structure composite selon la revendication 37, dans laquelle l'agent de réticulation est un latex de polyuréthane, et l'éther de cellulose est l'hydroxypropylméthylcellulose.

**40.** Structure composite selon la revendication 37, dans laquelle l'agent de réticulation est un titanate organique et l'éther de cellulose est l'hydroxypropylméthylcellulose.

**41.** Structure composite selon la revendication 37, dans laquelle l'éther de cellulose est l'hydroxyéthylméthylcellulose et l'agent de réticulation est une sulfonate-mélamine.

**42.** Structure composite selon la revendication 26, dans laquelle le modificateur de surface est l'un parmi un amidon, un dérivé d'amidon, un dérivé de cellulose, un polymère acrylique, un poly(acétate de vinyle), un poly(alcool vinylique), un alginate et une gomme naturelle, et un procédé de fabrication du composite est choisi de façon qu'une partie substantielle du modificateur de surface reste sur la surface du renforcement après la fabrication de la structure composite, en conséquence de quoi la résistance à l'arrachage de la fibre est augmentée en comparaison avec un renforcement sans le modificateur de surface.

43. Structure composite selon la revendication 42, dans laquelle le procédé de fabrication comprend une étape qui expose le renforcement modifié en surface à une température élevée, en conséquence de quoi le modificateur de surface est réticulé.

44. Structure composite selon la revendication 26, dans laquelle le modificateur de surface est une polyvinylpyrrolidone.

45. Structure composite selon la revendication 44, dans laquelle le modificateur de surface est réticulé par une lumière ultraviolette.

46. Structure composite selon la revendication 44, dans laquelle la polyvinylpyrrolidone est réticulée par l'un parmi le chlorure de calcium avec des peroxydes et le poly(sulfonate de styrène).

47. Structure composite selon la revendication 26, comprenant en outre un agent de couplage, par lequel une liaison entre le renforcement et le modificateur de surface est formée ou renforcée.

48. Structure composite selon la revendication 47, dans laquelle l'agent de couplage est un silane.

49. Structure composite selon la revendication 47, dans laquelle l'agent de couplage est un titanate organique.

50. Structure composite selon la revendication 47, dans laquelle l'agent de couplage est appliquée sous la forme d'un apprêt sur une surface du renforcement avant le modificateur de surface, en conséquence de quoi le modificateur de surface est réticulé au voisinage de la surface du renforcement mais n'est pas réticulé en une position radiale plus loin de la surface du renforcement.

51. Structure composite selon la revendication 26, comprenant en outre un plastifiant qui est ajouté au modificateur de surface.

52. Structure composite selon l'une quelconque des revendications précédentes, comprenant en outre : un mat de verre constitué de torons de verre en contact avec la phase discrète inorganique ; et un modificateur de surface revêtant au moins une partie des torons de verre ; dans laquelle l'éther de cellulose est choisi de façon que l'éther de cellulose ait des groupes fonctionnels qui lient au moins une partie de la phase discrète inorganique au modificateur de surface de sorte que les torons de verre soient au moins partiellement liés à la phase discrète inorganique.

53. Structure composite selon la revendication 52, dans laquelle le degré de substitution d'au moins l'un des groupes de substitution de l'éther de cellulose est choisi de façon que l'éther de cellulose soit insoluble dans l'eau à une température inférieure à 30°C.

54. Structure composite selon la revendication 52, dans laquelle le modificateur de surface est bioactif.

55. Procédé pour produire une structure composite comprenant :

la sélection d'un matériau inorganique constitué de particules discrètes d'un sulfate de calcium hémihydraté et/ou d'un sulfate de calcium anhydre et d'un additif constitué de particules discrètes d'un éther de cellulose ; le mélange ensemble du matériau inorganique et de l'additif, jusqu'à ce que l'additif soit dispersé dans le matériau inorganique, ce qui forme un mélange ; la combinaison du mélange et d'une certaine quantité d'eau, ce qui forme une bouillie ; le façonnage de la bouillie, ce qui forme la structure composite ; et le séchage de la structure composite, dans lequel l'éther de cellulose a au moins un groupe substituant choisi parmi les groupes substituants méthyle, hydroxypropyle et hydroxyéthyle et l'un parmi un degré de substitution et une distribution molaire de l'au moins un groupe substituant est choisi de façon à renforcer sensiblement la structure composite, et dans lequel l'éther de cellulose est choisi de façon que l'éther de cellulose soit insoluble dans l'eau à 20°C.

56. Procédé selon la revendication 55, dans lequel l'étape de sélection comprend la sélection d'un éther de cellulose qui est au moins partiellement soluble dans l'eau durant au moins une partie de l'étape de séchage.

57. Utilisation de moins de 3 % en poids d'un additif pour former une structure composite par hydratation d'un matériau inorganique qui est un hydrate de calcium hémihydraté et/ou un hydrate de calcium anhydre, l'additif comprenant un éther de cellulose, dans laquelle l'éther de cellulose est choisi de façon que l'éther de cellulose soit insoluble dans l'eau à 20°C, et tant l'indice de viscosité de l'éther de cellulose que l'un parmi un degré de substitution et une substitution molaire d'au moins un groupe substituant de l'éther de cellulose sont choisis de façon que l'un de l'ensemble constitué par la résistance à l'arrachage de clou, la résistance à la flexion et le module de rupture du composite soit sensiblement augmenté en comparaison avec une structure composite préparée sans l'additif.

58. Utilisation selon la revendication 57, dans laquelle l'additif est insoluble dans l'eau à moins de 30°C.

59. Utilisation selon la revendication 57 ou 58, dans laquelle les groupes substituants sont des groupes éthyle ou méthyle.

Fig. 1

| | EC, 46cps | HPC, 1M MW | HEC, MW=250k, Retarded | HEC, 1.3M MW, Retarded, | MC, 400cps, 41k MW | HEMC, 15-20.5kcps, Retarded | HEMC, 25kcps | HPMC, 100kcps |
|---|---|---|---|---|---|---|---|---|
| | 6% | 42% | 30% | 55% | 63% | 50% | 79% | 86% |

Nail Pull Improvement

EP 1 594 813 B1

## Fig. 2

| | EC, 46cps | HPC, 1M MW | HEC, MW=250k, Retarded | HEC, 1.3M MW, Retarded, | MC, 400cps, 41k MW | HEMC, 15-20.5kcps, Retarded | HEMC, 25kcps | HPMC, 100kcps |
|---|---|---|---|---|---|---|---|---|
| | 32% | 26% | 124% | 52% | 105% | 110% | 70% | 118% |

Flexural Strength Improvement

*Fig. 3*

EP 1 594 813 B1

Figure 4

*Fig. 5*

*Fig. 6*

EP 1 594 813 B1

*Fig. 7*

(1g HPMC/ 100g Stucco)

Viscosity Grade (cps)

Nail Pull Index

- Non-papered
- □ Papered
- —— Log. (Non-papered)
- —— Log. (Papered)

Fig. 8

(1g HPMC/ 100g Stucco)

*Fig. 9*

EP 1 594 813 B1

Fig. 10

EP 1 594 813 B1

Fig. 11

EP 1 594 813 B1

Fig. 12

Figure 13

EP 1 594 813 B1

Fig. 14

EP 1 594 813 B1

Fig. 15

PRIOR ART

FIG. 16

PRIOR ART

FIG. 17

PRIOR ART

FIG. 18

Fig. 19A

**Nail Pull Index vs Me%**

**0.25 g MC/ 100g stucco**

Fig. 19B

**0.5 g MC/ 100g stucco**

Fig. 19C **Flexural Strength Index vs Me%**

**0.25 g MC/ 100g stucco**

**0.5 g MC/ 100g stucco**

Fig. 19D

— — — 10 cps ████ 100 cps ▪ ▪ ▪ ▪ ▪ 1,000 cps ━━━━ 10,000 cps

EP 1 594 813 B1

## Nail Pull Index vs Me%

**Fig. 20A**

### 1 g MC/ 100g stucco

**Fig. 20B**

### 2 g MC/ 100g stucco

## Fig. 20C
### Flexural Strength Index vs Me%

### 1 g MC/ 100g stucco

**Fig. 20 D**

### 2 g MC/ 100g stucco

— — — 10 cps   ▬▬▬ 100 cps   - - - - - 1,000 cps   ▬▬▬ 10,000 cps

HPMC Addition = 1 wt% viscosity grade = 100 cps

Methyl Substitution (wt%) [DS]

- - - 25 [1.5]
— 30 [1.8]
— 35 [2.2]

Nail Pull Index

HP Substitution (wt%)

Fig. 21

74

HPMC Addition = 1 wt%     viscosity grade = 10 cps

Methyl
Substitution
(wt%)

- - - 25

— —30

——35

Nail Pull Index

HP Substitution (wt%)

Fig. 22

EP 1 594 813 B1

Fig. 23A

EP 1 594 813 B1

Fig. 23B

HPMC Addition = 1 wt% viscosity grade = 10,000 cps

Methyl Substitution (wt%)
- - - 25
— — 30
——— 35

Nail Pull Index

HP Substitution (wt%)

HPMC Addition = 1 wt%    viscosity grade = 100,000 cps

Methyl
Substitution
(wt%) [DS]

- - - 25 [1.5]

— — 30 [1.8]

—— 35 [2.2]

Nail Pull Index

HP Substitution (wt%)

Fig. 24A

EP 1 594 813 B1

HPMC Addition = 1 wt%    viscosity grade = 1,000,000 cps

Methyl
Substitution
(wt%) [DS]

- - - 25 [1.5]
─ ─30 [1.8]
──35 [2.2]

Nail Pull Index

HP Substitution (wt%)

Fig. 24B

EP 1 594 813 B1

HPMC Addition = 0.25 wt%    viscosity grade = 10 cps

Methyl
Substitution
(wt%)

- - - 25

- - 30

——— 35

Nail Pull Index

HP Substitution (wt%)

Fig. 25A

EP 1 594 813 B1

HPMC Addition = 0.25 wt%    viscosity grade = 100 cps

Methyl Substitution (wt%)

- - - 25
- - 30
—— 35

**Fig. 25B**

EP 1 594 813 B1

HPMC Addition =    0.25    wt%        viscosity grade =    1,000    cps

Methyl
Substitution
(wt%)

- - - - 25

— — 30

——— 35

**Fig. 25C**

EP 1 594 813 B1

82

Fig. 25D

EP 1 594 813 B1

HPMC Addition = 0.25 wt%    viscosity grade = 100,000 cps

Methyl
Substitution
(wt%)

- - - - 25

— —30

——35

**Fig. 25E**

EP 1 594 813 B1

HPMC Addition = 0.25 wt%    viscosity grade = 1,000,000 cps

Methyl
Substitution
(wt%)

- - - 25
— —30
——35

Fig. 25F

EP 1 594 813 B1

Fig. 26A

Methyl Substitution (wt%)
- - - 25
— 30
—— 35

HPMC Addition = 0.5 wt% viscosity grade = 10 cps

Nail Pull Index

HP Substitution (wt%)

HPMC Addition = 0.5 wt% viscosity grade = 100 cps

Methyl
Substitution
(wt%)

- - - - 25

— — 30

——— 35

Fig. 26B

Nail Pull Index (y-axis, 1.0 to 1.6)

HP Substitution (wt%) (x-axis, 2 to 10)

Fig. 26C

HPMC Addition = 0.5 wt% viscosity grade = 1,000 cps

Methyl
Substitution
(wt%)

- - - 25
- - 30
—— 35

Nail Pull Index

HP Substitution (wt%)

EP 1 594 813 B1

HPMC Addition =  0.5  wt%      viscosity grade =  10,000  cps

Methyl
Substitution
(wt%)

- - - - 25
- - 30
——— 35

Fig. 26D

EP 1 594 813 B1

HPMC Addition = 0.5 wt%     viscosity grade = 100,000 cps

Fig. 26E

Methyl Substitution (wt%)

- - - 25

— — 30

——— 35

EP 1 594 813 B1

Fig. 26F

Fig. 27A

HPMC Addition = 2 wt%    viscosity grade = 100 cps

Methyl
Substitution
(wt%)

- - - 25
- - 30
—— 35

Nail Pull Index (y-axis)

HP Substitution (wt%) (x-axis)

Fig. 27B

EP 1 594 813 B1

Fig. 27C

HPMC Addition =   2   wt%        viscosity grade =   10,000   cps

Methyl Substitution (wt%)

- - - 25
- - 30
——— 35

Nail Pull Index

HP Substitution (wt%)

Fig. 27D

EP 1 594 813 B1

HPMC Addition = 2 wt%    viscosity grade = 100,000 cps

Methyl
Substitution
(wt%)

- - - 25

— — 30

——— 35

**Fig. 27E**

EP 1 594 813 B1

**Fig. 27F**

HPMC Addition = 2 wt%  viscosity grade = 1,000,000 cps

Methyl Substitution (wt%)

- - - 25
— — 30
—— 35

Nail Pull Index

HP Substitution (wt%)

Fig. 28

EP 1 594 813 B1

Fig. 29

EP 1 594 813 B1

Fig. 30

FIG. 31A

FIG. 31B

FIG. 32

EP 1 594 813 B1

MC A4C:          DS = 1.8; viscosity grade = 450 cps
Hydrolyzed MC:    DS = 1.2; viscosity grade = 10 cps

FIG. 33

FIG. 34

Polymer Scaffold

Hydrophobic substituents promote polymer cohesion

Gypsophilic substituents promote adhesion to gypsum

FIG. 35

FIG. 36

(PRIOR ART)

FIG. 37

FIG. 38A

(PRIOR ART)
FIG. 38B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6406535 B
- US 5482551 A

- US 6342284 B

**Non-patent literature cited in the description**

- **TAGGE et al.** *Construction Materials Containing Surface Modified Fibers,* 27 May 2003